# EUROPEAN PATENT APPLICATION

(11) **EP 3 131 050 A1**
(43) Date of publication of application: **15.02.2017**
(21) Application number: 15776337.6
(22) Date of filing: 30.03.2015
(51) Int. Cl.: G06Q 50/04

(54) **3D PRINTER DESIGN, PRINTING AND PERMISSION METHOD, DEVICE AND SYSTEM**

(30) Priority: 08.04.2014 CN 201410138390
(71) Applicant: Huawei Technologies Co., Ltd., Shenzhen, Guangdong 518129 (CN)
(72) Inventor: CHEN, Shanxi, Shenzhen Guangdong 518129 (CN); XIANG, Guangrong, Shenzhen Guangdong 518129 (CN)
(74) Representative: Gill Jennings & Every LLP
(86) International application number: PCT/CN2015/075377
(87) International publication number: WO 2015/154631

(57) **Abstract**

A 3D printing design method is provided, which can implement determining by a 3D printing system on safety of a target print file. The method includes: determining a target print file (101); determining whether the target print file meets a first safety criterion (102); and if the target print file meets the first safety criterion, sending the target print file to a 3D printing and manufacturing system (103), so that the 3D printing and manufacturing system performs printing according to the target print file. Related 3D printing and manufacturing and licensing methods and related apparatuses and systems are further provided.

## Description

This application claims priority to Chinese Patent Application No. 201410138390.9, filed with the Chinese Patent Office on April 8, 2014 and entitled "3D PRINTING DESIGN, PRINTING, AND LICENSING METHODS, APPARATUS, AND SYSTEMS", which is incorporated herein by reference in its entirety.

### TECHNICAL FIELD

The present invention relates to the field of 3D printing technologies, and in particular, to 3D printing design, printing, and licensing methods, apparatuses, and systems.

### BACKGROUND

Different from two-dimensional text printing on a paper and a conventional manner in which a product is manufactured by means of milling or the like, 3D printing is a series of technologies and methods in which an article is manufactured by means of three-dimensional layer-by-layer printing. A specific implementation manner is: A computer three-dimensional design model is used as a blueprint, and special materials such as metal powder, ceramic powder, plastic, and cell tissue are accumulated and bonded layer by layer by software hierarchical discretization and numerical control molding systems by using a laser beam, a hot melt nozzle, or the like, and are finally superposed to form a shape and manufacture a physical product.

Compared with a conventional manufacturing method, the 3D printing has many advantages. For example, a technological process is simplified, an article whose spatial shape is relatively complex can be manufactured, and raw materials are reduced. Therefore, in recent years, a 3D printing technology develops quickly, and is applied in many fields, for example, commodities, food, chemical engineering, automobile, medical supplies.... Articles manufactured by means of the 3D printing already get deep into various fields of people's lives.

For some articles such as a gun and a knife, if they are put into mass production and freely circulated in society, social stability and personal safety of citizens are greatly threatened. Therefore, these high-danger articles need to be regulated. In a conventional method, these high-danger articles are all manufactured and produced in a mold or machine tool by means of casting, forging, milling, or carving. Therefore, these high-danger articles can be regulated by controlling a circulation way of the mold or machine tool for producing these high-danger articles. However, in the 3D printing technology, a product can be manufactured by means of only design by a computer and printing by a printer, and no other tools is required. Therefore, it is very difficult to regulate a high-danger article produced by means of the 3D printing, and social stability and personal safety of citizens are affected.

### SUMMARY

Embodiments of the present invention provide 3D printing design, printing, and licensing methods, apparatuses, and systems, which can implement regulation on a target product, resolve a problem of difficulty to regulate production of a high-danger article, and ensure social stability and personal safety of citizens.

A first aspect of the embodiments of the present invention provides a 3D printing design method, including:
determining, by a 3D printing design system, a target print file;
determining, by the 3D printing design system, whether the target print file meets a first safety criterion; and
if the target print file meets the first safety criterion, sending, by the 3D printing design system, the target print file to a 3D printing system, so that the 3D printing system performs printing according to the target print file.

With reference to the first aspect of the embodiments of the present invention, in a first implementation manner of the first aspect of the embodiments of the present invention, the determining, by the 3D printing design system, whether the target print file meets a first safety criterion includes:
acquiring, by the 3D printing design system, an attribute of a target product corresponding to the target print file;
acquiring, by the 3D printing design system according to the attribute of the target product, a class of the target product corresponding to the target print file, where the attribute of the target product includes: category information of a raw material of the target product, precision information of the raw material of the target product, manufacturing technological process information of the target product, spatial shape information of the target product, or purpose information of the target product, and the class of the target product is used to indicate a classification of the target print file, the class of the target product is used to indicate the classification of the target print file; and
determining, by the 3D printing design system according to a correspondence between the product class and the first safety criterion, whether the target print file meets the first safety criterion.

With reference to the first implementation manner of the first aspect of the embodiments of the present invention, in a second implementation manner of the first aspect of the embodiments of the present invention, the product class includes: safe product and non-safe product; and
the determining, by the 3D printing design system according to a correspondence between the product class and the first safety criterion, whether the target print file meets the first safety criterion includes: if the class of the target product is safe product, determining, by the 3D printing design system, that the target print file meets the first safety criterion, or if the class of the target product is non-safe product, determining, by the 3D printing design system, that the target print file does not meet the first safety criterion.

With reference to the first implementation manner of the first aspect of the embodiments of the present invention or the second implementation manner of the first aspect of the embodiments of the present invention, in a third implementation manner of the first aspect of the embodiments of the present invention, the method further includes:
if the 3D printing design system determines that the target print file does not meet the first safety criterion, sending, by the 3D printing design system, first license request information to a printing licensing center;
determining, by the 3D printing design system, whether a first printing license sent by the licensing center is received, where the first printing license is sent by the licensing center when the licensing center determines that the first license request information meets a second safety criterion, and the second safety criterion is a criterion for the licensing center to determine whether a print file corresponding to the received request information is safe; and
if the printing design system receives the first printing license sent by the licensing center, sending, by the 3D printing design system, the target print file to the 3D printing system, so that the 3D printing system performs printing according to the target print file.

With reference to the first implementation manner of the first aspect of the embodiments of the present invention or the second implementation manner of the first aspect of the embodiments of the present invention, in a fourth implementation manner of the first aspect of the embodiments of the present invention, the method further includes:
receiving, by the 3D printing design system, a pre-determined printing license sent by the licensing center; and
if the 3D printing design system determines that the target print file does not meet the first safety criterion, determining, by the 3D printing design system, whether a pre-determined printing license corresponding to the target print file is stored, and if yes, sending, by the 3D printing design system, the target print file to the 3D printing system, or if not, sending, by the 3D printing design system, first license request information to the printing licensing center.

With reference to the first implementation manner of the first aspect of the embodiments of the present invention or the second implementation manner of the first aspect of the embodiments of the present invention, in a fifth implementation manner of the first aspect of the embodiments of the present invention, the method further includes:
acquiring, by the 3D printing design system, a target server address from the printing licensing center, where the target server address is an address of a target server; and
accessing, by the 3D printing design system, the target server address, and downloading an update file from the target server; and
updating, by the 3D printing design system, the correspondence between the product class and the first safety criterion according to the update file.

A second aspect of the embodiments of the present invention provides a 3D printing method, including:
acquiring, by a 3D printing system, a target print file;
determining, by the 3D printing system, whether a second printing license sent by a printing licensing center is received; and
if the second printing license sent by the printing licensing center is received, printing, by the 3D printing system, the target print file.

A third aspect of the embodiments of the present invention provides a 3D printing method, including:
acquiring, by a 3D printing system, a target print file;
determining, by the 3D printing system, whether the target print file meets a third safety criterion; and
if the target print file meets the third safety criterion, printing, by the 3D printing system, the target print file.

With reference to the third aspect of the embodiments of the present invention, in a first implementation manner of the third aspect of the embodiments of the present invention, the determining, by the 3D printing design system, whether the target print file meets a third safety criterion includes:
acquiring, by the 3D printing system, an attribute of a target product corresponding to the target print file;
acquiring, by the 3D printing system according to the attribute of the target product, a class of the target product corresponding to the target print file, where the attribute of the target product includes: category information of a raw material of the target product, precision information of the raw material of the target product, manufacturing technological process information of the target product, spatial shape information of the target product, or purpose information of the target product, and the class of the target product is used to indicate a classification of the target print file; and
determining, by the 3D printing system according to a correspondence between the product class and the third safety criterion, whether the target print file meets the third safety criterion.

With reference to the first implementation manner of the third aspect of the embodiments of the present invention, in a second implementation manner of the third aspect of the embodiments of the present invention, the product class includes: safe product and non-safe product; and
the determining, by the 3D printing system according to a correspondence between the product class and the third safety criterion, whether the target print file meets the third safety criterion includes: if the class of the target product is safe product, determining, by the 3D printing system, that the target print file meets the third safety criterion, or if the class of the target product is non-safe product, determining, by the 3D printing system, that the target print file does not meet the third safety criterion.

With reference to the first implementation manner of the third aspect of the embodiments of the present invention or the second implementation manner of the third aspect of the embodiments of the present invention, in a third implementation manner of the third aspect of the embodiments of the present invention, the method further includes:
if the 3D printing system determines that the target print file does not meet the third safety criterion, sending, by the 3D printing system, second license request information to a printing licensing center;
determining, by the 3D printing system, whether a third printing license sent by the licensing center is received, where the third printing license is sent by the licensing center when the licensing center determines that the second license request information meets a second safety criterion; and
if the 3D printing system receives the third printing license sent by the licensing center, printing, by the 3D printing system, the target print file.

With reference to the third implementation manner of the third aspect of the embodiments of the present invention, in a fourth implementation manner of the third aspect of the embodiments of the present invention, the method further includes:
receiving, by the 3D printing system, a pre-determined printing license sent by the licensing center; and
before the sending, by the 3D printing system, second license request information to a printing licensing center, the method further includes: if the 3D printing system determines that the target print file does not meet the third safety criterion, determining, by the 3D printing system, whether a pre-determined printing license corresponding to the target print file is stored, and if yes, printing, by the 3D printing system, the target print file, or if not, triggering the operation of sending, by the 3D printing system, second license request information to a printing licensing center.

With reference to the first implementation manner of the third aspect of the embodiments of the present invention, in a fifth implementation manner of the third aspect of the embodiments of the present invention, the method further includes:
acquiring, by the 3D printing system, a target server address from the printing licensing center, where the target server address is an address of a target server;
accessing, by the 3D printing system, the target server address, and downloading an update file from the target server; and
updating, by the 3D printing system, the correspondence between the product class and the third safety criterion according to the update file.

A fourth aspect of the embodiments of the present invention provides a 3D printing licensing method, including:
receiving, by a printing licensing center, first license request information sent by a 3D printing design system;
determining, by the printing licensing center, whether the first license request information meets a second safety criterion, where the second safety criterion is a criterion for the licensing center to determine whether a print file corresponding to the received request information is safe; and
if the first license request information meets the second safety criterion, sending, by the printing licensing center, a first printing license to the 3D printing design system, where the first printing license is used to allow the 3D printing design system to send a target print file corresponding to the first license request information to a 3D printing system.

With reference to the fourth aspect of the embodiments of the present invention, in a first implementation manner of the fourth aspect of the embodiments of the present invention, the determining, by the printing licensing center, whether the first license request information meets a second safety criterion includes:
determining, by the printing licensing center according to an attribute of a target product corresponding to the first license request information, a class of the target product, or a safety level of the 3D printing design system that sends the first license request information, whether the first license request information meets the second safety criterion, where the safety level is used to indicate safety of the 3D printing design system.

With reference to the fourth aspect of the embodiments of the present invention or the first implementation manner of the fourth aspect of the embodiments of the present invention, in a second implementation manner of the fourth aspect of the embodiments of the present invention, before the determining, by the printing licensing center, whether the first license request information meets a second safety criterion, the method further includes:
acquiring, by the printing licensing center, a license request class according to the first license request information;
acquiring, by the printing licensing center, a quantity of times of processing by the printing licensing center on license request information corresponding to the license request class;
determining, by the printing licensing center, whether the quantity of times of processing on the license request information corresponding to the license request class reaches a preset quantity of times; and
if the printing licensing center determines that the quantity of times of processing on the license request information corresponding to the license request class reaches the preset quantity of times, skipping, by the printing licensing center, sending the first printing license to the 3D printing design system; or
if the printing licensing center determines that the quantity of times of processing on the license request information corresponding to the license request class does not reach the preset quantity of times, triggering, by the printing licensing center, the operation of determining, by the printing licensing center, whether the first license request information meets a second safety criterion.

A fifth aspect of the embodiments of the present invention provides a 3D printing licensing method, including:
receiving, by a printing licensing center, first license request information sent by a 3D printing design system;
determining, by the printing licensing center, whether the first license request information meets a second safety criterion, where the second safety criterion is a criterion for the licensing center to determine whether a print file corresponding to the received request information is safe; and
if the first license request information meets the second safety criterion, sending, by the printing licensing center, a second printing license to the 3D printing system, where the second printing license is used to allow the 3D printing system to print a target print file corresponding to the first license request information.

With reference to the fifth aspect of the embodiments of the present invention, in a first implementation manner of the fifth aspect of the embodiments of the present invention, the determining, by the printing licensing center, whether the first license request information meets a second safety criterion includes:
determining, by the printing licensing center according to an attribute of a target product corresponding to the first license request information, a class of the target product, or a safety level of the 3D printing design system that sends the first license request information, whether the first license request information meets the second safety criterion, where the safety level is used to indicate safety of the 3D printing design system.

A sixth aspect of the embodiments of the present invention provides a 3D printing licensing method, including:
receiving, by a printing licensing center, second license request information sent by a 3D printing system;
determining, by the printing licensing center, whether the second license request information meets a second safety criterion, where the second safety criterion is a criterion for the licensing center to determine whether a print file corresponding to the received request information is safe; and
if the second license request information meets the second safety criterion, sending, by the printing licensing center, a third printing license to the 3D printing system, where the second printing license is used to allow the 3D printing system to print a target print file corresponding to the second license request information.

With reference to the sixth aspect of the embodiments of the present invention, in a first implementation manner of the sixth aspect of the embodiments of the present invention, the determining, by the printing licensing center, whether the second license request information meets a second safety criterion includes:
determining, by the printing licensing center according to an attribute of a target product corresponding to the second license request information, a class of the target product, or a safety level of the 3D printing system that sends the second license request information, whether the first license request information meets the second safety criterion, where the safety level is used to indicate safety of the 3D printing system.

A seventh aspect of the embodiments of the present invention provides a 3D printing design apparatus, including:
a file determining module, configured to determine a target print file;
a first safety determining module, configured to determine whether the target print file meets a first safety criterion; and
a file sending module, configured to: when the first safety determining module determines that the target print file meets the first safety criterion, send the target print file to a 3D printing apparatus, so that the 3D printing apparatus performs printing according to the target print file.

With reference to the seventh aspect of the embodiments of the present invention, in a first implementation manner of the seventh aspect of the embodiments of the present invention, the first safety determining module includes:
a first attribute acquiring unit, configured to acquire an attribute of a target product corresponding to the target print file;
a first class acquiring unit, configured to acquire, according to the attribute of the target product, a class of the target product corresponding to the target print file, where the attribute of the target product includes: category information of a raw material of the target product, precision information of the raw material of the target product, manufacturing technological process information of the target product, spatial shape information of the target product, or purpose information of the target product, and the class of the target product is used to indicate a classification of the target print file; and
a first safety determining unit, configured to determine, according to a correspondence between the product class and the first safety criterion, whether the target print file meets the first safety criterion.

With reference to the first implementation manner of the seventh aspect of the embodiments of the present invention, in a second implementation manner of the seventh aspect of the embodiments of the present invention, the apparatus further includes:
a first request sending module, configured to: when the first safety determining unit determines that the target print file does not meet the first safety criterion, send first license request information to a 3D printing licensing apparatus; and
a first license determining module, configured to determine whether a first printing license sent by the 3D printing licensing apparatus is received, where the first printing license is sent by the 3D printing licensing apparatus when the 3D printing licensing apparatus determines that the first license request information meets a second safety criterion, and the second safety criterion is a criterion for the 3D printing licensing apparatus to determine whether a print file corresponding to the received request information is safe; and
the file sending module is further configured to: when the first license determining module determines that the first printing license sent by the 3D printing licensing apparatus is received, send the target print file to the 3D printing apparatus, so that the 3D printing apparatus performs printing according to the target print file.

With reference to the second implementation manner of the seventh aspect of the embodiments of the present invention, in a third implementation manner of the seventh aspect of the embodiments of the present invention, the apparatus further includes:
a first preset storage module, configured to receive a pre-determined printing license sent by the 3D printing licensing apparatus; and
a first preset determining module, configured to: when the first safety determining unit determines that the target print file does not meet the first safety criterion, determine whether the first preset storage module stores a pre-determined printing license corresponding to the target print file;
the file sending module is further configured to: when the first preset determining module determines that the first preset storage module stores the pre-determined printing license corresponding to the target print file, send the target print file to the 3D printing apparatus; and
the first request sending module is further configured to: when the first preset determining module determines that the first preset storage module does not store the pre-determined printing license corresponding to the target print file, send the first license request information to the 3D printing licensing apparatus.

With reference to the second implementation manner of the seventh aspect of the embodiments of the present invention or the third implementation manner of the seventh aspect of the embodiments of the present invention, in a fourth implementation manner of the seventh aspect of the embodiments of the present invention, the apparatus further includes:
a first address acquiring module, configured to acquire a target server address from the 3D printing licensing apparatus, where the target server address is an address of a target server;
a first address access module, configured to access the target server address, and download an update file from the target server; and
a first criterion update module, configured to update the correspondence between the product class and the first safety criterion according to the update file.

An eighth aspect of the embodiments of the present invention provides a 3D printing apparatus, including:
a first file acquiring module, configured to acquire a target print file;
a second license determining module, configured to determine whether a second printing license sent by a 3D printing licensing apparatus is received; and
a first file printing module, configured to: when the second license determining module determines that the second printing license sent by the 3D printing licensing apparatus is received, print the target print file.

A ninth aspect of the embodiments of the present invention provides a 3D printing apparatus, including:
a second file acquiring module, configured to acquire a target print file;
a second safety determining module, configured to determine whether the target print file meets a third safety criterion; and
a second file printing module, configured to: when the second safety determining module determines that the target print file meets the third safety criterion, print the target print file.

With reference to the ninth aspect of the embodiments of the present invention, in a first implementation manner of the ninth aspect of the embodiments of the present invention, the second safety determining module includes:
a second attribute acquiring unit, configured to acquire an attribute of a target product corresponding to the target print file;
a second class acquiring unit, configured to acquire, according to the attribute of the target product, a class of the target product corresponding to the target print file, where the attribute of the target product includes: category information of a raw material of the target product, precision information of the raw material of the target product, manufacturing technological process information of the target product, spatial shape information of the target product, or purpose information of the target product, and the class of the target product is used to indicate a classification of the target print file; and
a second safety determining unit, configured to determine, according to a correspondence between the product class and the third safety criterion, whether the target print file meets the third safety criterion.

With reference to the first implementation manner of the ninth aspect of the embodiments of the present invention, in a second implementation manner of the ninth aspect of the embodiments of the present invention, the apparatus further includes:
a second request sending module, configured to: when the second safety determining unit determines that the target print file does not meet the third safety criterion, send second license request information to a 3D printing licensing apparatus; and
a second license determining module, configured to determine whether a third printing license sent by the 3D printing licensing apparatus is received, where the third printing license is sent by the 3D printing licensing apparatus when the 3D printing licensing apparatus determines that the second license request information meets a second safety criterion, and the second safety criterion is a criterion for the 3D printing licensing apparatus to determine whether a print file corresponding to the received request information is safe; and
the second file printing module is further configured to: when the second license determining module determines that the third printing license sent by the 3D printing licensing apparatus is received, print the target print file.

With reference to the second implementation manner of the ninth aspect of the embodiments of the present invention, in a third implementation manner of the ninth aspect of the embodiments of the present invention, the apparatus further includes:
a second preset storage module, configured to receive a pre-determined printing license sent by the 3D printing licensing apparatus; and
a second preset determining module, configured to: when the second safety determining unit determines that the target print file does not meet the third safety criterion, determine whether the second preset storage module stores a pre-determined printing license corresponding to the target print file;
the second file printing module is further configured to: when the second preset determining module determines that the second preset storage module stores the pre-determined printing license corresponding to the target print file, print the target print file; and
the second request sending module is further configured to: when the second preset determining module determines that the second preset storage module does not store the pre-determined printing license corresponding to the target print file, send the second license request information to the 3D printing licensing apparatus.

With reference to the first implementation manner of the ninth aspect of the embodiments of the present invention, in a fourth implementation manner of the ninth aspect of the embodiments of the present invention, the apparatus further includes:
a second address acquiring module, configured to acquire a target server address from the 3D printing licensing apparatus, where the target server address is an address of a target server;
a second address access module, configured to access the target server address, and download an update file from the target server; and
a second criterion update module, configured to update the correspondence between the product class and the third safety criterion according to the update file.

A tenth aspect of the embodiments of the present invention provides a 3D printing licensing apparatus, including:
a first request receiving module, configured to receive first license request information sent by a 3D printing design apparatus;
a first criterion determining module, configured to determine whether the first license request information meets a second safety criterion, where the second safety criterion is a criterion for the 3D printing licensing apparatus to determine whether a print file corresponding to the received request information is safe; and
a first license sending module, configured to: when the first criterion determining module determines that the first license request information meets the second safety criterion, send a first printing license to the 3D printing design apparatus, where the first printing license is used to allow the 3D printing design apparatus to send a target print file corresponding to the first license request information to a 3D printing apparatus.

With reference to the tenth aspect of the embodiments of the present invention, in a first implementation manner of the tenth aspect of the embodiments of the present invention, the first criterion determining module is specifically configured to determine, according to an attribute of a target product corresponding to the first license request information, a class of the target product, or a safety level of the 3D printing design apparatus that sends the first license request information, whether the first license request information meets the second safety criterion, where the safety level is used to indicate safety of the 3D printing design apparatus.

With reference to the tenth aspect of the embodiments of the present invention or the first implementation manner of the tenth aspect of the embodiments of the present invention, in a second implementation manner of the tenth aspect of the embodiments of the present invention, the apparatus further includes:
a class acquiring module, configured to acquire a license request class according to the first license request information;
a module for acquiring a quantity of times, configured to acquire a quantity of times of processing by the 3D printing licensing apparatus on license request information corresponding to the license request class; and
a module for determining a quantity of times, configured to determine whether the quantity of times of processing on the license request information corresponding to the license request class reaches a preset quantity of times; and
the first criterion determining module is specifically configured to: when the module for determining a quantity of times determines that the quantity of times of processing on the license request information corresponding to the license request class does not reach the preset quantity of times, determine whether the first license request information meets the second safety criterion.

An eleventh aspect of the embodiments of the present invention provides a 3D printing licensing apparatus, including:
a second request receiving module, configured to receive first license request information sent by a 3D printing design apparatus;
a second criterion determining module, configured to determine whether the first license request information meets a second safety criterion, where the second safety criterion is a criterion for the 3D printing licensing apparatus to determine whether a print file corresponding to the received request information is safe; and
a second license sending module, configured to: when the second criterion determining module determines that the first license request information meets the second safety criterion, send a second printing license to the 3D printing apparatus, where the second printing license is used to allow the 3D printing apparatus to print a target print file corresponding to the first license request information.

With reference to the eleventh aspect of the embodiments of the present invention, in a first implementation manner of the eleventh aspect of the embodiments of the present invention, the second criterion determining module is specifically configured to determine, according to an attribute of a target product corresponding to the first license request information, a class of the target product, or a safety level of the 3D printing design apparatus that sends the first license request information, whether the first license request information meets the second safety criterion, where the safety level is used to indicate safety of the 3D printing design apparatus.

A twelfth aspect of the embodiments of the present invention provides a 3D printing licensing apparatus, including:
a third request receiving module, configured to receive second license request information sent by a 3D printing apparatus;
a third criterion determining module, configured to determine whether the second license request information meets a second safety criterion, where the second safety criterion is a criterion for the 3D printing licensing apparatus to determine whether a print file corresponding to the received request information is safe; and
a third license sending module, configured to: when the third criterion determining module determines that the second license request information meets the second safety criterion, send a third printing license to the 3D printing apparatus, where the second printing license is used to allow the 3D printing apparatus to print a target print file corresponding to the second license request information.

With reference to the twelfth aspect of the embodiments of the present invention, in a first implementation manner of the twelfth aspect of the embodiments of the present invention, the third criterion determining module is specifically configured to determine, according to an attribute of a target product corresponding to the second license request information, a class of the target product, or a safety level of the 3D printing apparatus that sends the second license request information, whether the second license request information meets the second safety criterion, where the safety level is used to indicate safety of the 3D printing apparatus.

A thirteenth aspect of the embodiments of the present invention provides a 3D printing system, including:
a 3D printing apparatus and the 3D printing design apparatus according to either of the seventh aspect of the embodiments of the present invention and the first implementation manner of the seventh aspect.

A fourteenth aspect of the embodiments of the present invention provides a 3D printing system, including:
a 3D printing apparatus, the 3D printing design apparatus according to any one of the second implementation manner to the fourth implementation manner of the seventh aspect of the embodiments of the present invention, and the 3D printing licensing apparatus according to any one of the tenth aspect of the embodiments of the present invention to the second implementation manner of the tenth aspect.

A fifteenth aspect of the embodiments of the present invention provides a 3D printing system, including:
the 3D printing design apparatus according to any one of the second implementation manner to the fourth implementation manner of the seventh aspect of the embodiments of the present invention, the 3D printing licensing apparatus according to the eleventh aspect of the embodiments of the present invention or the first implementation manner of the eleventh aspect, the 3D printing apparatus according to the eighth aspect of the embodiments of the present invention.

A sixteenth aspect of the embodiments of the present invention provides a 3D printing system, including:
a 3D printing design apparatus and the 3D printing apparatus according to either of the ninth aspect of the embodiments of the present invention and the first implementation manner of the ninth aspect.

A seventeenth aspect of the embodiments of the present invention provides a 3D printing system, including:
a 3D printing design apparatus, the 3D printing licensing apparatus according to the twelfth aspect of the embodiments of the present invention or the first implementation manner of the twelfth aspect, and the 3D printing apparatus according to any one of the second implementation manner to the fourth implementation manner of the ninth aspect of the embodiments of the present invention.

It can be seen from the foregoing technical solutions that, in the embodiments of the present invention, after completing designing a target print file, a 3D printing system does not directly print the target print file, but determines whether the target print file meets a first safety criterion, and if yes, prints the target print file. According to this method, determining by the 3D printing system on safety of the target print file is implemented, which further implements regulation on a target product, resolves a problem of difficulty to regulate production of a high-danger article, and ensures social stability and personal safety of citizens.

### BRIEF DESCRIPTION OF DRAWINGS

FIG. 1 is a flowchart of an embodiment of a 3D printing design method according to embodiments of the present invention;
FIG. 2 is a flowchart of another embodiment of a 3D printing design method according to the embodiments of the present invention;
FIG. 3 is a flowchart of another embodiment of a 3D printing design method according to the embodiments of the present invention;
FIG. 4 is a flowchart of another embodiment of a 3D printing design method according to the embodiments of the present invention;
FIG. 5 is a flowchart of another embodiment of a 3D printing design method according to the embodiments of the present invention;
FIG. 6 is a flowchart of an embodiment of a 3D printing method according to the embodiments of the present invention;
FIG. 7 is a flowchart of another embodiment of a 3D printing method according to the embodiments of the present invention;
FIG. 8 is a flowchart of another embodiment of a 3D printing method according to the embodiments of the present invention;
FIG. 9 is a flowchart of another embodiment of a 3D printing method according to the embodiments of the present invention;
FIG. 10 is a flowchart of another embodiment of a 3D printing method according to the embodiments of the present invention;
FIG. 11 is a flowchart of another embodiment of a 3D printing method according to the embodiments of the present invention;
FIG. 12 is a flowchart of an embodiment of a 3D printing licensing method according to the embodiments of the present invention;
FIG. 13 is a flowchart of another embodiment of a 3D printing licensing method according to the embodiments of the present invention;
FIG. 14 is a flowchart of another embodiment of a 3D printing licensing method according to the embodiments of the present invention;
FIG. 15 is a flowchart of another embodiment of a 3D printing licensing method according to the embodiments of the present invention;
FIG. 16 is a structural diagram of an embodiment of a 3D printing design apparatus according to the embodiments of the present invention;
FIG. 17 is a structural diagram of another embodiment of a 3D printing design apparatus according to the embodiments of the present invention;
FIG. 18 is a structural diagram of another embodiment of a 3D printing design apparatus according to the embodiments of the present invention;
FIG. 19 is a structural diagram of another embodiment of a 3D printing design apparatus according to the embodiments of the present invention;
FIG. 20 is a structural diagram of another embodiment of a 3D printing design apparatus according to the embodiments of the present invention;
FIG. 21 is a structural diagram of an embodiment of a 3D printing design apparatus, or a 3D printing apparatus, or a 3D printing licensing apparatus according to the embodiments of the present invention;
FIG. 22 is a structural diagram of another embodiment of a 3D printing design apparatus according to the embodiments of the present invention;
FIG. 23 is a structural diagram of an embodiment of a 3D printing apparatus according to the embodiments of the present invention;
FIG. 24 is a structural diagram of another embodiment of a 3D printing apparatus according to the embodiments of the present invention;
FIG. 25 is a structural diagram of another embodiment of a 3D printing apparatus according to the embodiments of the present invention;
FIG. 26 is a structural diagram of another embodiment of a 3D printing apparatus according to the embodiments of the present invention;
FIG. 27 is a structural diagram of another embodiment of a 3D printing apparatus according to the embodiments of the present invention;
FIG. 28 is a structural diagram of another embodiment of a 3D printing apparatus according to the embodiments of the present invention;
FIG. 29 is a structural diagram of another embodiment of a 3D printing apparatus according to the embodiments of the present invention;
FIG. 30 is a structural diagram of another embodiment of a 3D printing apparatus according to the embodiments of the present invention;
FIG. 31 is a structural diagram of an embodiment of a 3D printing licensing apparatus according to the embodiments of the present invention;
FIG. 32 is a structural diagram of another embodiment of a 3D printing licensing apparatus according to the embodiments of the present invention;
FIG. 33 is a structural diagram of another embodiment of a 3D printing licensing apparatus according to the embodiments of the present invention;
FIG. 34 is a structural diagram of another embodiment of a 3D printing licensing apparatus according to the embodiments of the present invention;
FIG. 35 is a structural diagram of another embodiment of a 3D printing licensing apparatus according to the embodiments of the present invention;
FIG. 36 is a structural diagram of another embodiment of a 3D printing licensing apparatus according to the embodiments of the present invention;
FIG. 37 is a structural diagram of another embodiment of a 3D printing licensing apparatus according to the embodiments of the present invention;
FIG. 38 is a structural diagram of an embodiment of a 3D printing system according to the embodiments of the present invention;
FIG. 39 is a structural diagram of another embodiment of a 3D printing system according to the embodiments of the present invention;
FIG. 40 is a structural diagram of another embodiment of a 3D printing system according to the embodiments of the present invention;
FIG. 41 is a structural diagram of another embodiment of a 3D printing system according to the embodiments of the present invention; and
FIG. 42 is a structural diagram of another embodiment of a 3D printing system according to the embodiments of the present invention.

### DESCRIPTION OF EMBODIMENTS

Embodiments of the present invention provide a 3D printing design method, so as to implement regulation on a target product. The embodiments of the present invention further provide a 3D printing method, a 3D printing licensing method, and related apparatuses and systems. Descriptions are provided below separately.

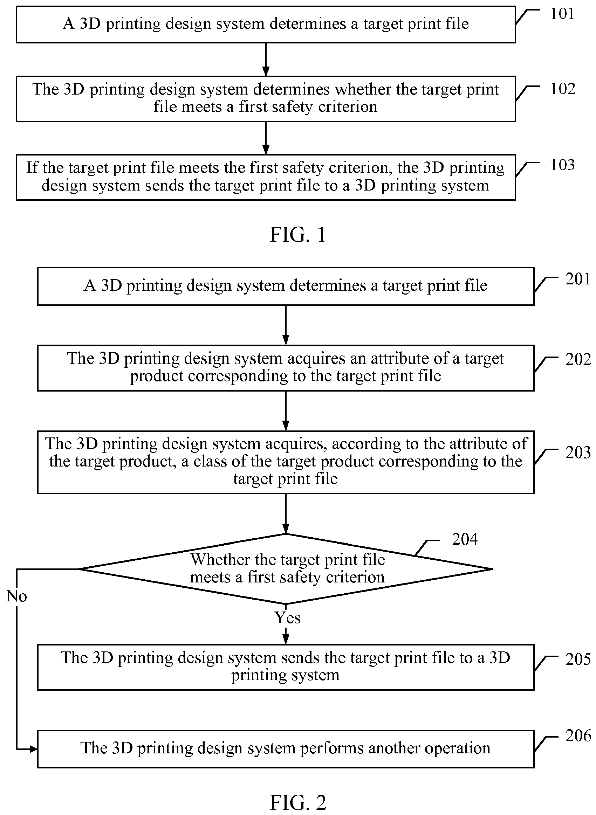

Referring to FIG. 1, a basic process of a 3D printing design method provided in an embodiment of the present invention mainly includes:
101: A 3D printing design system determines a target print file.

When production is performed by using a 3D printing technology, a user first needs to design a target print file by using a 3D printing design system. There are many methods for designing the target print file. For example, design is performed by means of computer modeling. No limitation is set thereto in this embodiment of the present invention. The 3D printing design system determines the target print file.

The target print file is a form of data that records a characteristic of a manufactured target, and a format of the target print file is not limited in this embodiment of the present invention.

102: The 3D printing design system determines whether the target print file meets a first safety criterion.

After determining the target print file, the 3D printing design system determines whether the target print file meets the first safety criterion. There are many methods for the 3D printing design system to determine whether the target print file meets the first safety criterion, which are described in detail in subsequent embodiments, and no limitation is set thereto in this embodiment.

103: If the target print file meets the first safety criterion, the 3D printing design system sends the target print file to a 3D printing system.

In a 3D printing technology at a current stage, after completing designing a target print file, a 3D printing design system needs to send the designed target print file to a 3D printing system for printing. Therefore, in this embodiment, if the 3D printing design system determines that the target print file meets the first safety criterion, the 3D printing design system sends the target print file to the 3D printing system, so that the 3D printing system performs printing according to the target print file.

The 3D printing design system may send the target print file to the 3D printing system through the Internet, or may send the target print file to the 3D printing system by using an independent data channel between the 3D printing design system and the 3D printing system, or may send the target print file to the 3D printing system by copying data by using a magnetic disk, or may send the target print file to the 3D printing system by using another method, which is not limited in this embodiment of the present invention.

If the 3D printing design system determines that the target print file does not meet the first safety criterion, the 3D printing design system may not send the target print file to the 3D printing system, or may process the target print file and then send the target print file to the 3D printing system, or another method may be used, which is specifically described in detail in subsequent embodiments, and no limitation is set thereto in this embodiment.

In this embodiment, after completing designing a target print file, a 3D printing design system determines whether the target print file meets a first safety criterion, and if the target print file meets the first safety criterion, sends the target print file to a 3D printing system, so that the 3D printing system performs printing according to the target print file. By determining whether the target print file meets the first safety criterion, determining by the 3D printing design system on safety of the target print file is implemented, which further implements regulation on a target product, resolves a problem of difficulty to regulate production of a high-danger article, and ensures social stability and personal safety of citizens.

In the embodiment shown in FIG. 1, a basic process of the 3D printing design method provided in the embodiments of the present invention is given, where after determining a target print file, a 3D printing design system determines whether the file meets a first safety criterion, and determines, according to a determining result, whether to send the target print file to a 3D printing system. In the following embodiment, how the 3D printing design system determines whether the file meets the first safety criterion is further explained based on the embodiment shown in FIG. 1. Referring to FIG. 2, a basic process of another embodiment of the 3D printing design method provided in the present invention includes:
201: A 3D printing design system determines a target print file.

Step 201 is basically the same as step 101, and details are not described herein again.

202: The 3D printing design system acquires an attribute of a target product corresponding to the target print file.

Each target print file designed by the 3D printing design system corresponds to a target product. For example, if the 3D printing design system designs a target print file about an automobile, a target product corresponding to the target print file is an automobile. In addition, the target product has an attribute, where the attribute may be: category information of a raw material of the target product, precision information of the raw material of the target product, manufacturing technological process information of the target product, spatial shape information of the target product, or purpose information of the target product, or may be an attribute in another aspect, which is not limited herein.

In this embodiment, the 3D printing design system acquires the attribute of the target product corresponding to the target print file.

203: The 3D printing design system acquires, according to the attribute of the target product, a class of the target product corresponding to the target print file.

After acquiring the attribute of the target product corresponding to the target print file, the 3D printing design system may acquire, according to the attribute of the target product, a class of the target product corresponding to the target print file, where the class of the target product is used to indicate a classification of the target print file.

There are many criterions for acquiring, according to the attribute of the target product, the class of the target product corresponding to the target print file. For example, the class of the target product is determined according to a category, in the attribute of the target product, of the raw material of the target product, and if the category of the raw material of the target product is iron, the class of the target product is metal product; or if the category of the raw material of the target product is polyethylene, the class of the target product is plastic product. Alternatively, the class of the target product is determined according to a purpose, in the attribute of the target product, of the target product, and if the purpose of the target product is walk replacement, the class of the target product is vehicle; or if the purpose of the target product is containing liquid, the class of the target product is container. The 3D printing design system may also acquire, according to another attribute of the target product, the class of the target product corresponding to the target print file, or may acquire, according to attributes of the target product in multiple aspects, the class of the target product corresponding to the target print file. No limitation is set thereto herein.

The class of the target product may also simply include safe product and non-safe product. For example, if the 3D printing design system learns from the attribute of the target product that the raw material of the target product includes a prohibited raw material, or a spatial shape of the target product is a shape of a prohibited article such as a weapon, or a manufacturing technological process of the target product relates to a technological process of a prohibited article, or the target product is used in a behavior activity that may harm life and property safety of citizens, the 3D printing design system determines that the class of the target product is non-safe product. The 3D printing design system may also determine, according to an attribute of the target product in another aspect, whether the class of the target product is non-safe product or safe product. No limitation is set thereto herein.

204: The 3D printing design system determines, according to a correspondence between the product class and a first safety criterion, whether the target print file meets the first safety criterion.

After acquiring the class of the target product corresponding to the target print file, the 3D printing design system may further determine whether the target print file meets a first safety criterion. There is a correspondence between the product class and the first safety criterion. For example, a metal product corresponds to meeting the first safety criterion, and a plastic product corresponds to not meeting the first safety criterion.

There are many methods for acquiring the correspondence between the product class and the first safety criterion, where the correspondence may be manually set, or may be actively acquired by the 3D printing design system from a server, or may be passively received by the 3D printing design system from a server, or another manner may be used. No limitation is set thereto herein. The 3D printing design system determines, according to the correspondence between the product class and the first safety criterion, whether the target print file corresponding to the class of the target product meets the first safety criterion.

Particularly, if in step 203, the product class includes only safe product and non-safe product, the determining, by the 3D printing design system according to a correspondence between the product class and a first safety criterion, whether the target print file meets the first safety criterion includes: if the class of the target product is safe product, determining, by the 3D printing design system, that the target print file meets the first safety criterion, or if the class of the target product is non-safe product, determining, by the 3D printing design system, that the target print file does not meet the first safety criterion.

If the 3D printing design system determines that the target print file meets the first safety criterion, step 205 is performed.

If the 3D printing design system determines that the target print file does not meet the first safety criterion, step 206 is performed.

205: The 3D printing design system sends the target print file to a 3D printing system.

If the 3D printing design system determines that the target print file meets the first safety criterion, the 3D printing design system sends the target print file to a 3D printing system, so that the 3D printing system performs printing according to the target print file.

206: The 3D printing design system performs another operation.

The executing, by the 3D printing design system, another operation if the 3D printing design system determines that the target print file does not meet the first safety criterion includes: skipping, by the 3D printing design system, sending the target print file to the 3D printing system, or processing, by the 3D printing design system, the target print file and then sending the target print file to the 3D printing system, or may be another operation, which is specifically described in detail in subsequent embodiments, and no limitation is set thereto in this embodiment.

To prevent information such as the target print file from being tampered and impact on determining on safety of the target print file, asymmetric cryptography may be performed for data transmission between the 3D printing design system and the 3D printing system.

In this embodiment, how a 3D printing design system determines whether a target print file meets a first safety criterion is detailed based on the embodiment shown in FIG. 1, where after determining the target print file, the 3D printing design system acquires an attribute of a target product corresponding to the target print file, further acquires a class of the target product corresponding to the target print file, then determines, according to a correspondence between the product class and the first safety criterion, whether the target print file meets the first safety criterion, and if yes, sends the target print file to a 3D printing system. According to this method, the 3D printing design system can determine whether the target print file meets the first safety criterion, which further implements regulation on a target product, resolves a problem of difficulty to regulate production of a high-danger article, and ensures social stability and personal safety of citizens.

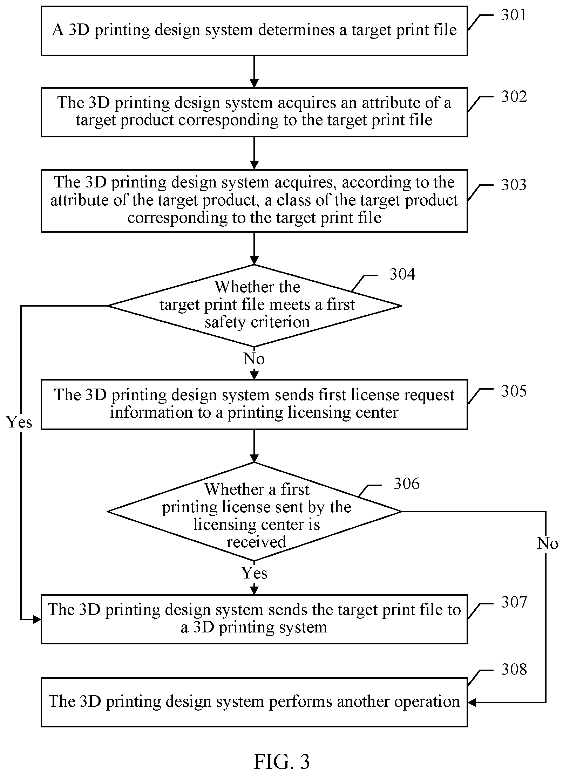

In the embodiment shown in FIG. 2, a method is provided, where how a 3D printing design system determines whether a target print file meets a first safety criterion is explained in detail. After determining the target print file, the 3D printing design system determines whether the target print file meets the first safety criterion, and if yes, sends the target print file to a 3D printing system, or if not, performs another operation. In the following embodiment, how the 3D printing design system specifically performs the another operation when the 3D printing design system determines that the target print file does not meet the first safety criterion is described in detail. Referring to FIG. 3, a basic process of another embodiment of the present invention includes:
301: A 3D printing design system determines a target print file.
302: The 3D printing design system acquires an attribute of a target product corresponding to the target print file.
303: The 3D printing design system acquires, according to the attribute of the target product, a class of the target product corresponding to the target print file.
304: The 3D printing design system determines, according to a correspondence between the product class and a first safety criterion, whether the target print file meets the first safety criterion.

Steps 301 to 304 are basically the same as steps 201 to 204, and details are not described herein again.

If in step 304, the 3D printing design system determines that the target print file meets the first safety criterion, step 307 is performed; or if the 3D printing design system determines that the target print file does not meet the first safety criterion, step 305 is performed.

305: The 3D printing design system sends first license request information to a printing licensing center.

If the 3D printing design system determines that the target print file does not meet the first safety criterion, the 3D printing design system sends first license request information to a printing licensing center.

The printing licensing center is configured to determine whether the request information received by the printing licensing center meets a particular safety criterion, and if yes, issue a printing license corresponding to the file, where the printing license indicates that a 3D printing system is allowed to perform printing according to the target print file.

A perfect 3D printing system may include more than one printing licensing center. The 3D printing design system may search for a corresponding printing licensing center according to the target print file.

The first license request information is used to request the printing licensing center for a printing license, where the first license request information may include: the target print file, or the attribute of the target product, or the class of the target product, or may be other information, which is not limited herein.

306: The 3D printing design system determines whether a first printing license sent by the licensing center is received.

After the 3D printing design system sends the first license request information to the printing licensing center, the printing licensing center determines whether the first license request information meets a second safety criterion, and if yes, sends a first printing license to the 3D printing design system. The 3D printing design system determines whether the first printing license sent by the licensing center is received. The second safety criterion is a criterion for the licensing center to determine whether a print file corresponding to the received request information is safe.

If the 3D printing design system determines that the first printing license sent by the licensing center is received, it indicates that the printing licensing center determines that the first license request information meets the second safety criterion, and step 307 is performed.

If the 3D printing design system determines that the first printing license sent by the licensing center is not received, it indicates that the printing licensing center determines that the first license request information does not meet the second safety criterion, and step 308 is performed.

307: The 3D printing design system sends the target print file to a 3D printing system.

If the 3D printing design system determines that the target print file meets the first safety criterion, or determines that the first printing license sent by the licensing center is received, the 3D printing design system sends the target print file to a 3D printing system, so that the 3D printing system performs printing according to the target print file.

308: The 3D printing design system performs another operation.

The executing, by the 3D printing design system, another operation if the 3D printing design system determines that the target print file does not meet the first safety criterion and the 3D printing design system determines that the first printing license sent by the licensing center is not received includes: skipping, by the 3D printing design system, the target print file to the 3D printing system, or processing, by the 3D printing design system, the target print file and then sending the target print file to the 3D printing system, or may be another operation, which is not limited in this embodiment.

To prevent information such as the target print file, the license request information, or the printing license from being tampered and impact on determining on safety of the target print file, asymmetric cryptography may be performed for data transmission between the 3D printing design system, the printing licensing center, and the 3D printing system.

In this embodiment, how a 3D printing design system specifically performs another operation when the 3D printing design system determines that a target print file does not meet a first safety criterion is explained in detail. If the 3D printing design system determines that the target print file does not meet the first safety criterion, the 3D printing design system sends first license request information to a printing licensing center, and then determines whether a first printing license sent by the licensing center is received. If the 3D printing design system determines that the first printing license sent by the licensing center is received, it indicates that the printing licensing center determines that the first license request information meets a second safety criterion, and the 3D printing design system sends the target print file to a 3D printing system, so that the 3D printing system performs printing according to the target print file. According to this method provided in this embodiment, quadratic determining by the 3D printing design system and the printing licensing center on safety of the target print file is implemented, which further implements regulation on a target product, resolves a problem of difficulty to regulate production of a high-danger article, and ensures social stability and personal safety of citizens.

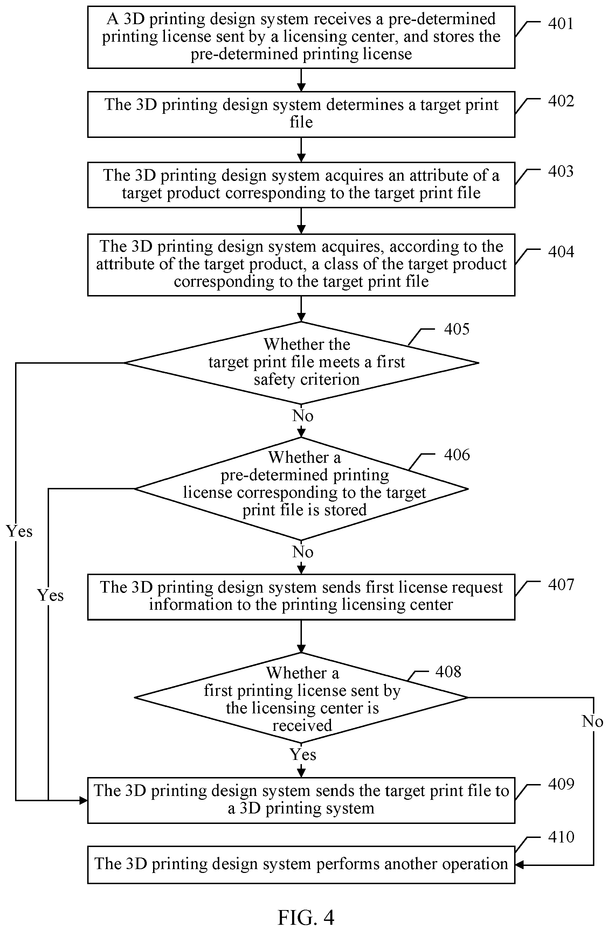

In the embodiment shown in FIG. 3, a 3D printing design method is provided, where a printing licensing center can determine safety of a received file. In the following embodiment, a new 3D printing design method is provided based on the embodiment shown in FIG. 3, which can reduce workload of determining on safety by the printing licensing center. Referring to FIG. 4, a basic process of another embodiment of the present invention includes:
401: A 3D printing design system receives a pre-determined printing license sent by a licensing center, and stores the pre-determined printing license.

A licensing center needs to receive license requests sent by one or more 3D printing design systems, and therefore the amount of data received by the licensing center is huge, and processing of relatively much data causes many problems such as low efficiency of the licensing center and excessively heavy load of a server. Therefore, the licensing center may send a pre-determined printing license to a 3D printing design system, where the pre-determined printing license corresponds to a target print file of a preset category, and may specifically correspond to a target print file having an attribute of a target product. For example, if the pre-determined printing license corresponds to a target print file a category of a raw material of a target product of which is plastic, all target print files categories of raw materials of target products of which are plastic correspond to the pre-determined printing license. Alternatively, the pre-determined printing license may correspond to a target print file whose class is a class of a target product, for example, correspond to a target print file a class of a target product of which is safe product. The pre-determined printing license may also correspond to a target print file of another preset category. No limitation is set thereto herein.

The 3D printing design system receives the pre-determined printing license sent by the licensing center, and stores the pre-determined printing license.

402: The 3D printing design system determines a target print file.

403: The 3D printing design system acquires an attribute of a target product corresponding to the target print file.

404: The 3D printing design system acquires, according to the attribute of the target product, a class of the target product corresponding to the target print file.

405: The 3D printing design system determines, according to a correspondence between the product class and a first safety criterion, whether the target print file meets the first safety criterion.

Steps 402 to 405 are basically the same as steps 301 to 304, and details are not described herein again.

If in step 405, the 3D printing design system determines that the target print file meets the first safety criterion, step 409 is performed; or if the 3D printing design system determines that the target print file does not meet the first safety criterion, step 406 is performed.

406: The 3D printing design system determines whether a pre-determined printing license corresponding to the target print file is stored.

If the 3D printing design system determines that the target print file does not meet the first safety criterion, the 3D printing design system determines whether a pre-determined printing license corresponding to the target print file is stored.

If the 3D printing design system determines that the pre-determined printing license corresponding to the target print file is stored, step 409 is performed.

If the 3D printing design system determines that the pre-determined printing license corresponding to the target print file is not stored, step 407 is performed.

407: The 3D printing design system sends first license request information to the printing licensing center.

If the 3D printing design system determines that the pre-determined printing license corresponding to the target print file is not stored, the 3D printing design system sends first license request information to the printing licensing center.

The printing licensing center is configured to determine whether the request information received by the printing licensing center meets a second safety criterion, and if yes, issue a printing license corresponding to the file, where the printing license indicates that a 3D printing system is allowed to perform printing according to the target print file.

The first license request information is used to request the printing licensing center for a printing license, where the first license request information may include: the target print file, or the attribute of the target product, or the class of the target product, or may be other information, which is not limited herein.

408: The 3D printing design system determines whether a first printing license sent by the licensing center is received.

After the 3D printing design system sends the first license request information to the printing licensing center, the printing licensing center determines whether the first license request information meets the second safety criterion, and sends a printing license according to a determining result. The 3D printing design system determines whether the first printing license sent by the licensing center is received.

If the 3D printing design system determines that the first printing license sent by the licensing center is received, it indicates that the printing licensing center determines that the first license request information meets the second safety criterion, and step 409 is performed.

If the 3D printing design system determines that the first printing license sent by the licensing center is not received, it indicates that the printing licensing center determines that the first license request information does not meet the second safety criterion, and step 410 is performed.

409: The 3D printing design system sends the target print file to a 3D printing system.

If the 3D printing design system determines that the target print file meets the first safety criterion, or determines that the pre-determined printing license corresponding to the target print file is stored, or determines that the first printing license sent by the licensing center is received, the 3D printing design system sends the target print file to a 3D printing system.

410: The 3D printing design system performs another operation.

The executing, by the 3D printing design system, another operation if the 3D printing design system determines that the target print file does not meet the first safety criterion, and determines that the pre-determined printing license corresponding to the target print file is not stored, and the 3D printing design system determines that the first printing license sent by the licensing center is not received includes: skipping, by the 3D printing design system, the target print file to the 3D printing system, or processing, by the D printing design system, the target print file and then sending the target print file to the 3D printing system, or may be another operation, which is not limited in this embodiment.

Step 401 may also be performed after any one of steps 402 to 405, which is not limited in this embodiment as long as step 401 is performed before step 406.

To prevent information such as the target print file, the license request information, or the printing license from being tampered and impact on determining on safety of the target print file, asymmetric cryptography may be performed for data transmission between the 3D printing design system, the printing licensing center, and the 3D printing system.

In the embodiment shown in FIG. 4, a 3D printing design method is provided, so that a 3D printing design system can determine safety of a target print file according to a pre-determined printing license. If the 3D printing design system determines that the target print file does not meet a first safety criterion, the 3D printing design system determines whether a pre-determined printing license corresponding to the target print file is stored, and if yes, the 3D printing design system sends the target print file to a 3D printing system. According to this method, determining by the 3D printing design system and a printing licensing center on safety of the target print file is implemented, which further implements regulation on a target product, resolves a problem of difficulty to regulate production of a high-danger article, and ensures social stability and personal safety of citizens. In addition, before sending first license request information to the printing licensing center, the 3D printing design system determines whether the pre-determined printing license corresponding to the target print file is stored, and if yes, directly sends the target print file to the 3D printing system, so that some safety determining operations can be completed in the 3D printing design system, which reduces a quantity of license requests received by the printing licensing center and a quantity of safety determining operations by the printing licensing center, lightens load of the printing licensing center, and improves efficiency of determining on safety of the target print file.

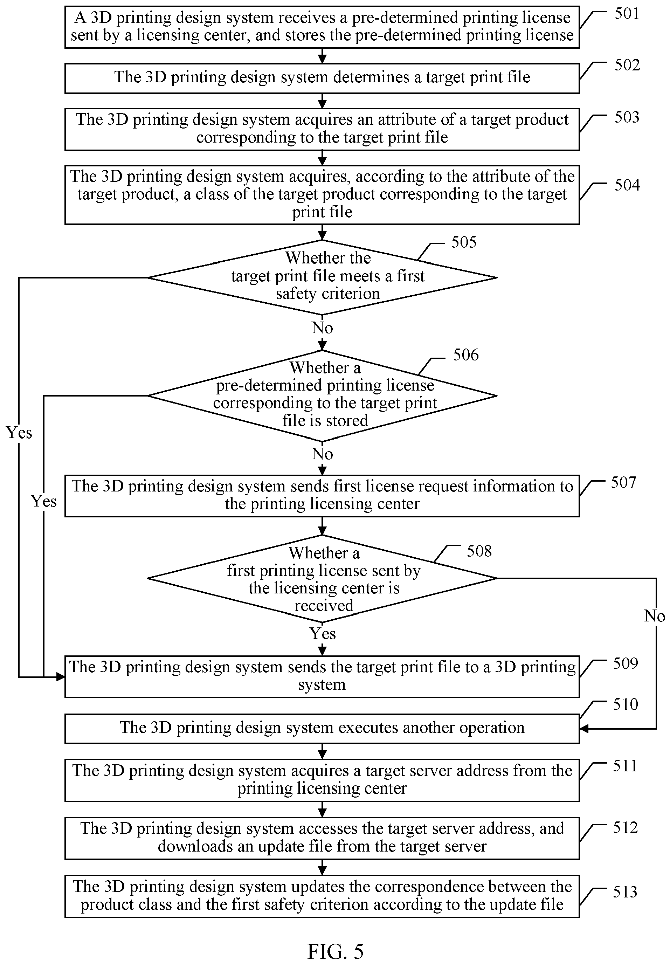

In the embodiment shown in FIG. 4, a method is provided, where the method can improve efficiency of determining on safety of a target print file. In the following embodiment, another 3D printing design method is provided, so as to improve accuracy of determining on safety of a target print file. Referring to FIG. 5, a basic process of another embodiment provided in the present invention includes:
501: A 3D printing design system receives a pre-determined printing license sent by a licensing center, and stores the pre-determined printing license.
502: The 3D printing design system determines a target print file.
503: The 3D printing design system acquires an attribute of a target product corresponding to the target print file.
504: The 3D printing design system acquires, according to the attribute of the target product, a class of the target product corresponding to the target print file.
505: The 3D printing design system determines, according to a correspondence between the product class and a first safety criterion, whether the target print file meets the first safety criterion.

Steps 501 to 505 are basically the same as steps 401 to 405, and details are not described herein again.

If in step 505, the 3D printing design system determines that the target print file meets the first safety criterion, step 509 is performed; or if the 3D printing design system determines that the target print file does not meet the first safety criterion, step 506 is performed.

506: The 3D printing design system determines whether a pre-determined printing license corresponding to the target print file is stored.

If the 3D printing design system determines that the target print file does not meet the first safety criterion, the 3D printing design system determines whether a pre-determined printing license corresponding to the target print file is stored.

If the 3D printing design system determines that the pre-determined printing license corresponding to the target print file is stored, step 509 is performed.

If the 3D printing design system determines that the pre-determined printing license corresponding to the target print file is not stored, step 507 is performed.

507: The 3D printing design system sends first license request information to the printing licensing center.

508: The 3D printing design system determines whether a first printing license sent by the licensing center is received.

Steps 507 and 508 are basically the same as steps 407 and 408, and details are not described herein again.

If the 3D printing design system determines that the first printing license sent by the licensing center is received, it indicates that the printing licensing center determines that the first license request information meets the second safety criterion, and step 509 is performed.

If the 3D printing design system determines that the first printing license sent by the licensing center is not received, it indicates that the printing licensing center determines that the first license request information does not meet the second safety criterion, and step 510 is performed.

509: The 3D printing design system sends the target print file to a 3D printing system.

510: The 3D printing design system performs another operation.

Steps 509 and 510 are basically the same as steps 409 and 410, and details are not described herein again.

511: The 3D printing design system acquires a target server address from the printing licensing center.

The 3D printing design system may acquire the correspondence between the product class and the first safety criterion, and determine, according to the correspondence, whether the target print file meets the first safety criterion. However, in actual application, the correspondence between the product class and the first safety criterion may change due to a reason such as a government policy or scientific and technological development. For example, according to an original correspondence between the product class and the first safety criterion, a particular type of knife meets the first safety criterion, but according to an updated correspondence between the product class and the first safety criterion, the type of knife meets the first safety criterion. If the correspondence between the product class and the first safety criterion changes, but the 3D printing design system does not update the correspondence, a result of determining by the 3D printing design system according to the correspondence that is not updated is not accurate. Therefore, the 3D printing design system needs to constantly update the correspondence between the product class and the first safety criterion.

In this embodiment, a latest correspondence between the product class and the first safety criterion is stored on a target server, and the 3D printing design system acquires a target server address from the printing licensing center, where the target server address is an address of the target server.

512: The 3D printing design system accesses the target server address, and downloads an update file from a target server.

After acquiring the target server address from the printing licensing center, the 3D printing design system accesses the target server address, and downloads an update file from the target server, where the update file is used to update the correspondence between the product class and the first safety criterion.

513: The 3D printing design system updates the correspondence between the product class and the first safety criterion according to the update file.

After downloading the update file from the target server, the 3D printing design system updates the correspondence between the product class and the first safety criterion according to the update file.

Steps 511 to 513 may also be performed before any one of steps 501 to 510, which is not limited in this embodiment.

Steps 511 to 513 may also be performed once every a preset time length, which is not limited in this embodiment.

To prevent information such as the target print file, the license request information, or the printing license from being tampered and impact on determining on safety of the target print file, asymmetric cryptography may be performed for data transmission between the 3D printing design system, the printing licensing center, and the 3D printing system.

In this embodiment, a 3D printing design method is provided, where a 3D printing design system determines safety of a target print file according to a correspondence between a product class and a first safety criterion, and constantly updates the correspondence between the product class and the first safety criterion. According to this method, determining by the 3D printing design system and a printing licensing center on safety of the target print file is implemented, which further implements regulation on a target product, resolves a problem of difficulty to regulate production of a high-danger article, and ensures social stability and personal safety of citizens. In addition, the 3D printing design system constantly updates the correspondence between the product class and the first safety criterion, so that the correspondence, acquired by the 3D printing design system, between the product class and the first safety criterion has better real-time performance, and determining on safety of the target print file according to the correspondence between the product class and the first safety criterion is more accurate and credible.

For ease of understanding of the foregoing embodiment, a description is provided below by using a specific application scenario of the foregoing embodiment as an example.

A 3D printing design system receives a pre-determined printing license from a licensing center, and stores the pre-determined printing license. Content of the pre-determined printing license is: A gun whose purpose is police use meets the pre-determined printing license, but a gun whose purpose is military use does not meet the pre-determined printing license.

A user designs a print file of a small gun by using the 3D printing design system. After determining that the design of the print file is completed, the 3D printing design system acquires an attribute of a target product of the print file, where the attribute includes: a designed product is a gun, a gun caliber is 5.8 millimeters, and the gun is used for a military purpose. It can be learned from the attribute that the product designed in the print file is a gun, and because the gun is harmful, the 3D printing design system determines that a class of the target product of the print file is non-safe product, and determines that the print file does not meet a first safety criterion. Accordingly, the 3D printing design system determines whether a pre-determined printing license corresponding to the print file is stored. Because the pre-determined printing license stored in the 3D printing design system allows only the purpose of police use, and does not allow the purpose of military use, the 3D printing design system determines that the pre-determined printing license corresponding to the print file is not stored. Therefore, the 3D printing design system sends first license request information to the printing licensing center, where content of the first license request information is the attribute of the target product of the print file.

After safety determining, the printing licensing center considers that the small gun can be produced, and therefore, the printing licensing center sends a first printing license to the 3D printing design system. After receiving the first printing license, the 3D printing design system sends the print file of the small gun to a 3D printing system.

Every a preset time length, the 3D printing design system acquires a target server address from the licensing center, accesses the target server address, downloads an update file from a target server, and updates a correspondence between the product class and the third safety criterion according to the update file.

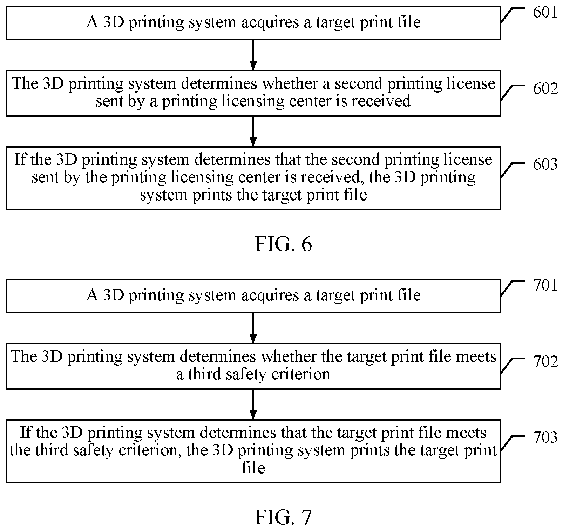

In the embodiments shown in FIG. 1 to FIG. 5, multiple 3D printing design methods are provided, where regulation on a target product is implemented from the perspective of a 3D printing design system. In the following embodiment, a 3D printing method is provided, where regulation on a target product is implemented from the perspective of a 3D printing system. Referring to FIG. 6, a basic process of the 3D printing method provided in this embodiment of the present invention includes:
601: A 3D printing system acquires a target print file.

In an entire 3D printing process, a 3D printing design system is mainly responsible for designing a target print file, and an operation of printing the target print file is mainly completed by a 3D printing system. To print the target print file, the 3D printing system first needs to acquire the target print file.

The 3D printing system may acquire the target print file from the 3D printing design system, or may acquire the target print file from a printing licensing center, or may acquire the target print file by another means, which is not limited herein.

602: The 3D printing system determines whether a second printing license sent by a printing licensing center is received.

In the embodiments shown in FIG. 3 to FIG. 5, the 3D printing design system sends first license request information to the printing licensing center. After receiving the first license request information and determining that the first license request information meets a second safety criterion, the licensing center may not send a first printing license to the 3D printing design system, but send a second printing license to the 3D printing system. In this embodiment, the 3D printing system determines whether the second printing license sent by the printing licensing center is received.

603: If the 3D printing system determines that the second printing license sent by the printing licensing center is received, the 3D printing system prints the target print file.

If the 3D printing system determines that the second printing license sent by the printing licensing center is received, it indicates that the printing licensing center determines that the first license request information meets the second safety criterion, that is, the target print file meets the second safety criterion, and therefore, the 3D printing system prints the target print file.

To prevent information such as the target print file, the license request information, or the printing license from being tampered and impact on determining on safety of the target print file, asymmetric cryptography may be performed for data transmission between the 3D printing design system, the printing licensing center, and the 3D printing system.

In this embodiment, a 3D printing method is provided, where a 3D printing system acquires a target print file, determines whether a second printing license sent by a printing licensing center is received, and if a determining result is yes, prints the target print file. In this embodiment, by determining whether the second printing license is received, determining by the 3D printing system on safety of the target print file is implemented, which further implements regulation on a target product, resolves a problem of difficulty to regulate production of a high-danger article, and ensures social stability and personal safety of citizens.

For ease of understanding of the foregoing embodiment, a description is provided below by using a specific application scenario of the foregoing embodiment as an example.

A 3D printing system obtains a print file of a small gun from a 3D printing design system, and receives a second printing license about the print file from a printing licensing center. Accordingly, the 3D printing system prints the print file, where a printed target product is a small gun.

In the embodiment shown in FIG. 6, a 3D printing method is provided, where a 3D printing system determines safety by acquiring a second printing license from a printing licensing center. In the following embodiment, another 3D printing method is provided, where in the method, safety is determined in another manner. Referring to FIG. 7, a basic process of another embodiment of the present invention includes:
701: A 3D printing system acquires a target print file.

In an entire 3D printing process, a 3D printing design system is mainly responsible for designing a target print file, and an operation of printing the target print file is mainly completed by a 3D printing system. To print the target print file, the 3D printing system first needs to acquire the target print file.

The 3D printing system may acquire the target print file from the 3D printing design system, or may acquire the target print file from a printing licensing center, or may acquire the target print file by another means, which is not limited herein.

702: The 3D printing system determines whether the target print file meets a third safety criterion.

After determining the target print file, the 3D printing system determines whether the target print file meets the third safety criterion. There are many methods for the 3D printing system to determine whether the target print file meets the third safety criterion, which are described in detail in subsequent embodiments, and no limitation is set thereto in this embodiment.

703: If the 3D printing system determines that the target print file meets the third safety criterion, the 3D printing system prints the target print file.

If the 3D printing system determines that the target print file meets the third safety criterion, the 3D printing system prints the target print file. If the 3D printing system determines that the target print file does not meet the third safety criterion, the 3D printing design system may not print the target print file, or may process the target print file and then print the target print file, or another method may be used, which is specifically described in detail in subsequent embodiments, and no limitation is set thereto in this embodiment.

To prevent information such as the target print file, the license request information, or the printing license from being tampered and impact on determining on safety of the target print file, asymmetric cryptography may be performed for data transmission between the 3D printing design system, the printing licensing center, and the 3D printing system.

In this embodiment, after acquiring a target print file, a 3D printing and manufacturing system determines whether the target print file meets a third safety criterion, and if the target print file meets the third safety criterion, prints the target print file. In this embodiment, by determining by the 3D printing system whether the target print file meets the third safety criterion, determining by the 3D printing system on safety of the target print file is implemented, which further implements regulation on a target product, resolves a problem of difficulty to regulate production of a high-danger article, and ensures social stability and personal safety of citizens.

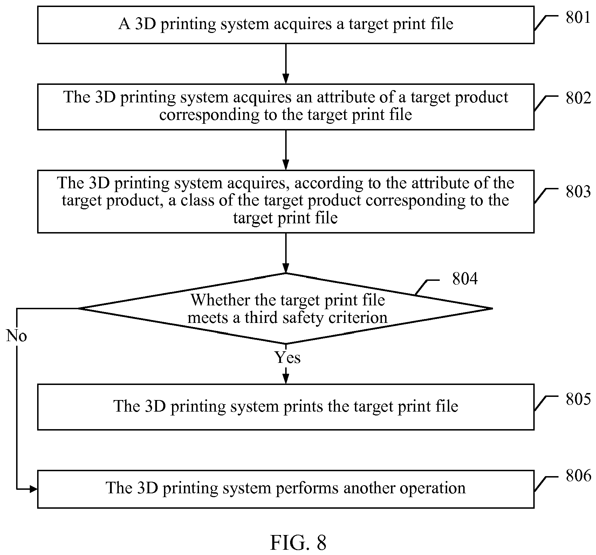

In the embodiment shown in FIG. 7, a basic process of the 3D printing method provided in the embodiments of the present invention is given, where after determining a target print file, a 3D printing system determines whether the file meets a third safety criterion, and determines, according to a determining result, whether to print the target print file. In the following embodiment, how the 3D printing system determines whether the file meets the third safety criterion is further explained based on the embodiment shown in FIG. 7. Referring to FIG. 8, a basic process of another embodiment of the 3D printing method provided in the present invention includes:
801: A 3D printing system acquires a target print file.

Step 801 is basically the same as step 701, and details are not described herein again.

802: The 3D printing system acquires an attribute of a target product corresponding to the target print file.

Each target print file corresponds to a target product, and the target product has an attribute, where the attribute may be: category information of a raw material of the target product, precision information of the raw material of the target product, manufacturing technological process information of the target product, spatial shape information of the target product, or purpose information of the target product, or may be an attribute in another aspect, which is not limited herein.

In this embodiment, the 3D printing system acquires the attribute of the target product corresponding to the target print file.

803: The 3D printing system acquires, according to the attribute of the target product, a class of the target product corresponding to the target print file.

After acquiring the attribute of the target product corresponding to the target print file, the 3D printing system may acquire, according to the attribute of the target product, a class of the target product corresponding to the target print file, where the class of the target product is used to indicate a classification of the target print file.

There are many criterions for acquiring, according to the attribute of the target product, the class of the target product corresponding to the target print file, including: determining the class of the target product according to a category, in the attribute of the target product, of the raw material of the target product. For example, if the category of the raw material of the target product is iron, the class of the target product is metal product; or if the category of the raw material of the target product is polyethylene, the class of the target product is plastic product. Alternatively, the class of the target product is determined according to a purpose, in the attribute of the target product, of the target product, and if the purpose of the target product is walk replacement, the class of the target product is vehicle; or if the purpose of the target product is containing liquid, the class of the target product is container. The 3D printing system may also acquire, according to another attribute of the target product, the class of the target product corresponding to the target print file, or may acquire, according to attributes of the target product in multiple aspects, the class of the target product corresponding to the target print file. No limitation is set thereto herein.

The class of the target product may also simply include safe product and non-safe product. For example, if the 3D printing system learns from the attribute of the target product that the raw material of the target product includes a prohibited raw material, or a spatial shape of the target product is a shape of a prohibited article such as a weapon, or a manufacturing technological process of the target product relates to a technological process of a prohibited article, or the target product is used in a behavior activity that may harm life and property safety of citizens, the 3D printing system determines that the class of the target product is non-safe product. The 3D printing system may also determine, according to an attribute of the target product in another aspect, whether the class of the target product is non-safe product or safe product. No limitation is set thereto herein.

804: The 3D printing system determines, according to a correspondence between the product class and a third safety criterion, whether the target print file meets the third safety criterion.

After acquiring the class of the target product corresponding to the target print file, the 3D printing system may further determine whether the target print file meets a third safety criterion. There is a correspondence between the product class and the third safety criterion. For example, a metal product corresponds to meeting the third safety criterion, and a plastic product corresponds to not meeting the third safety criterion.

There are many methods for acquiring the correspondence between the product class and the third safety criterion, where the correspondence may be manually set, or may be actively acquired by the 3D printing system from a server, or may be passively received by the 3D printing system from a server, or another manner may be used. No limitation is set thereto herein. The 3D printing system determines, according to the correspondence between the product class and the third safety criterion, whether the target print file corresponding to the class of the target product meets the first safety criterion.

Particularly, if in step 803, the product class includes only safe product and non-safe product, the determining, by the 3D printing system according to a correspondence between the product class and a third safety criterion, whether the target print file meets the third safety criterion includes: if the class of the target product is safe product, determining, by the 3D printing system, that the target print file meets the third safety criterion, or if the class of the target product is non-safe product, determining, by the 3D printing system, that the target print file does not meet the third safety criterion.

If the 3D printing system determines that the target print file meets the third safety criterion, step 805 is performed.

If the 3D printing system determines that the target print file does not meet the first safety criterion, step 806 is performed.

805: The 3D printing system prints the target print file.

If the 3D printing system determines that the target print file meets the third safety criterion, the 3D printing system prints the target print file.

806: The 3D printing system performs another operation.

The executing, by the 3D printing system, another operation if the 3D printing system determines that the target print file does not meet the third safety criterion includes: skipping, by the 3D printing system, printing the target print file, or processing, by the 3D printing design system, the target print file and then printing the target print file, or may be another operation, which is specifically described in detail in subsequent embodiments, and no limitation is set thereto in this embodiment.

To prevent information such as the target print file, the license request information, or the printing license from being tampered and impact on determining on safety of the target print file, asymmetric cryptography may be performed for data transmission between the 3D printing design system, the printing licensing center, and the 3D printing system.

In this embodiment, how a 3D printing system determines whether a target print file meets a third safety criterion is detailed based on the embodiment shown in FIG. 7, where after determining the target print file, the 3D printing system acquires an attribute of a target product corresponding to the target print file, further acquires a class of the target product corresponding to the target print file, then determines, according to a correspondence between the product class and the first safety criterion, whether the target print file meets the third safety criterion, and if yes, prints the target print file. According to this method, the 3D printing system can determine whether the target print file meets the third safety criterion, which further implements regulation on a target product, resolves a problem of difficulty to regulate production of a high-danger article, and ensures social stability and personal safety of citizens.

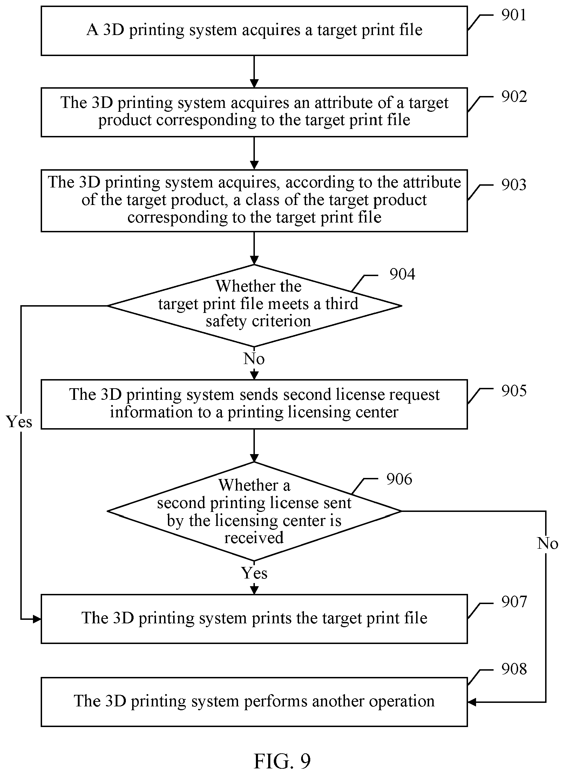

In the embodiment shown in FIG. 8, a method is provided, where how a 3D printing system determines whether a target print file meets a third safety criterion is explained in detail. After determining the target print file, the 3D printing system determines whether the target print file meets the third safety criterion, and if yes, prints the target print file, or if not, performs another operation. In the following embodiment, how the 3D printing system specifically performs the another operation when the 3D printing system determines that the target print file does not meet the third safety criterion is described in detail. Referring to FIG. 9, a basic process of another embodiment of the present invention includes:
901: A 3D printing system acquires a target print file.
902: The 3D printing system acquires an attribute of a target product corresponding to the target print file.
903: The 3D printing system acquires, according to the attribute of the target product, a class of the target product corresponding to the target print file.
904: The 3D printing system determines, according to a correspondence between the product class and a third safety criterion, whether the target print file meets the third safety criterion.

Steps 901 to 904 are basically the same as steps 801 to 804, and details are not described herein again.

If in step 904, the 3D printing system determines that the target print file meets the third safety criterion, step 907 is performed.

If the 3D printing system determines that the target print file does not meet the third safety criterion, step 905 is performed.

905: The 3D printing system sends second license request information to a printing licensing center.

If the 3D printing system determines that the target print file does not meet the third safety criterion, the 3D printing system sends second license request information to a printing licensing center.

The printing licensing center is configured to determine whether the request information received by the printing licensing center meets a particular safety criterion, and if yes, issue a printing license corresponding to the file, where the printing license indicating that the 3D printing system is allowed to perform printing according to the target print file.

A perfect 3D printing system may include more than one printing licensing center. The 3D printing system may search for a corresponding printing licensing center according to the target print file.

The second license request information is used to request the printing licensing center for a printing license, where the second license request information may include: the target print file, or the attribute of the target product, or the class of the target product, or may be other information, which is not limited herein.

906: The 3D printing system determines whether a second printing license sent by the licensing center is received.

After the 3D printing system sends the second license request information to the printing licensing center, the printing licensing center determines whether the second license request information meets a second safety criterion, and if yes, sends a second printing license to the 3D printing system. The 3D printing system determines whether the second printing license sent by the licensing center is received.

If the 3D printing system determines that the second printing license sent by the licensing center is received, it indicates that the printing licensing center determines that the second license request information meets the second safety criterion, and step 907 is performed.

If the 3D printing system determines that the second printing license sent by the licensing center is not received, it indicates that the printing licensing center determines that the second license request information does not meet the second safety criterion, and step 908 is performed.

907: The 3D printing system prints the target print file.

If the 3D printing system determines that the target print file meets the third safety criterion, or determines that the second printing license sent by the licensing center is received, the 3D printing system prints the target print file.

908: The 3D printing system performs another operation.

The executing, by the 3D printing system, another operation if the 3D printing system determines that the target print file does not meet the third safety criterion or the 3D printing system determines that the second printing license sent by the licensing center is not received includes: skipping, by the 3D printing system, the target print file to the 3D printing system, or processing, by the D printing and manufacturing system, the target print file and then sending the target print file to the 3D printing system, or may be another operation, which is not limited in this embodiment.

To prevent information such as the target print file, the license request information, or the printing license from being tampered and impact on determining on safety of the target print file, asymmetric cryptography may be performed for data transmission between a 3D printing design system, the printing licensing center, and the 3D printing system.

In this embodiment, how a 3D printing system specifically performs another operation when the 3D printing system determines that a target print file does not meet a third safety criterion is explained in detail. If the 3D printing system determines that the target print file does not meet the third safety criterion, the 3D printing system sends second license request information to a printing licensing center, and then determines whether a second printing license sent by the licensing center is received. If the 3D printing system determines that the second printing license sent by the licensing center is received, it indicates that the printing licensing center determines that the second license request information meets a second safety criterion, and the 3D printing system prints the target print file. According to this method provided in this embodiment, quadratic determining by the 3D printing system and the printing licensing center on safety of the target print file is implemented. Compared with separate safety determining by the 3D printing system or separate safety determining by the licensing center, the quadratic determining in this embodiment improves accuracy of determining on safety of the target print file in an entire 3D printing process, which further implements regulation on a target product, resolves a problem of difficulty to regulate production of a high-danger article, and ensures social stability and personal safety of citizens.

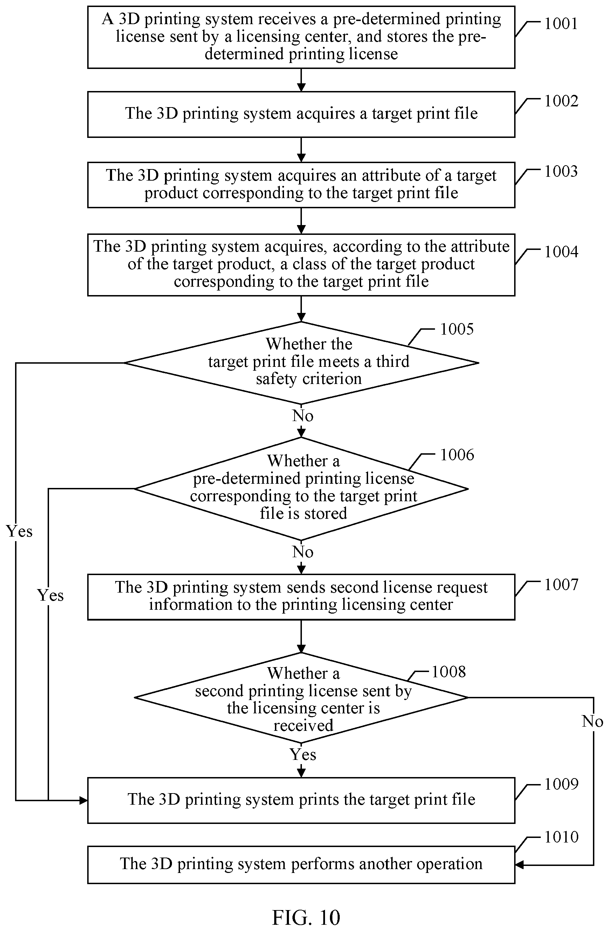

In the embodiment shown in FIG. 9, a 3D printing method is provided, where a printing licensing center can determine safety of a received file. In the following embodiment, a new 3D printing method is provided based on the embodiment shown in FIG. 9, which can reduce workload of determining on safety by the printing licensing center. Referring to FIG. 10, a basic process of another embodiment of the present invention includes:
1001: A 3D printing system receives a pre-determined printing license sent by a licensing center, and stores the pre-determined printing license.

A licensing center needs to receive license requests sent by one or more 3D printing systems, and therefore the amount of data received by the licensing center is huge, and processing of relatively much data causes many problems such as low efficiency of the licensing center and excessively heavy load of a server. Therefore, the licensing center may send a pre-determined printing license to a 3D printing system, where the pre-determined printing license corresponds to a target print file of a preset category, and may specifically correspond to a target print file having an attribute of a target product. For example, if the pre-determined printing license corresponds to a target print file a category of a raw material of a target product of which is plastic, all target print files categories of raw materials of target products of which are plastic correspond to the pre-determined printing license. Alternatively, the pre-determined printing license may correspond to a target print file whose class is a class of a target product, for example, correspond to a target print file a class of a target product of which is safe product. The pre-determined printing license may also correspond to a target print file of another preset category. No limitation is set thereto herein.

The 3D printing system receives the pre-determined printing license sent by the licensing center, and stores the pre-determined printing license.

1002: The 3D printing system acquires a target print file.

1003: The 3D printing system acquires an attribute of a target product corresponding to the target print file.

1004: The 3D printing system acquires, according to the attribute of the target product, a class of the target product corresponding to the target print file.

1005: The 3D printing system determines, according to a correspondence between the product class and a third safety criterion, whether the target print file meets the third safety criterion.

Steps 1002 to 1005 are basically the same as steps 901 to 904, and details are not described herein again.

If in step 1005, the 3D printing system determines that the target print file meets the third safety criterion, step 1009 is performed.

If the 3D printing system determines that the target print file does not meet the third safety criterion, step 1006 is performed.

1006: The 3D printing system determines whether a pre-determined printing license corresponding to the target print file is stored.

If the 3D printing system determines that the target print file does not meet the third safety criterion, the 3D printing system determines whether a pre-determined printing license corresponding to the target print file is stored.

If the 3D printing system determines that the pre-determined printing license corresponding to the target print file is stored, step 1009 is performed.

If the 3D printing system determines that the pre-determined printing license corresponding to the target print file is not stored, step 1007 is performed.

1007: The 3D printing system sends second license request information to the printing licensing center.

If the 3D printing system determines that the target print file does not meet the third safety criterion, the 3D printing system sends second license request information to the printing licensing center.

The printing licensing center is configured to determine whether the request information received by the printing licensing center meets a particular safety criterion, and if yes, issue a printing license corresponding to the file, where the printing license indicating that the 3D printing system is allowed to perform printing according to the target print file.

The second license request information is used to request the printing licensing center for a printing license, where the second license request information may include: the target print file, or the attribute of the target product, or the class of the target product, or may be other information, which is not limited herein.

1008: The 3D printing system determines whether a second printing license sent by the licensing center is received.

After the 3D printing system sends the second license request information to the printing licensing center, the printing licensing center determines whether the second license request information meets a second safety criterion, and if yes, sends a second printing license to the 3D printing system. The 3D printing system determines whether the second printing license sent by the licensing center is received.

If the 3D printing system determines that the second printing license sent by the licensing center is received, it indicates that the printing licensing center determines that the second license request information meets the second safety criterion, and step 1009 is performed.

If the 3D printing system determines that the second printing license sent by the licensing center is not received, it indicates that the printing licensing center determines that the second license request information does not meet the second safety criterion, and step 1010 is performed.

1009: The 3D printing system prints the target print file.

If the 3D printing system determines that the target print file meets the third safety criterion, or determines that the pre-determined printing license corresponding to the target print file is stored, or determines that the second printing license sent by the licensing center is received, the 3D printing system prints the target print file.

1010: The 3D printing system performs another operation.

The executing, by the 3D printing system, another operation if the 3D printing system determines that the target print file does not meet the third safety criterion, determines that the pre-determined printing license corresponding to the target print file is not stored, and determines that the second printing license sent by the licensing center is not received includes: skipping, by the 3D printing design system, the target print file to the 3D printing system, or processing, by the D printing design system, the target print file and then sending the target print file to the 3D printing system, or may be another operation, which is not limited in this embodiment.

Step 1001 may also be performed after any one of steps 1002 to 1005, which is not limited in this embodiment as long as step 1001 is performed before step 1006.

To prevent information such as the target print file, the license request information, or the printing license from being tampered and impact on determining on safety of the target print file, asymmetric cryptography may be performed for data transmission between a 3D printing design system, the printing licensing center, and the 3D printing system.

In the embodiment shown in FIG. 10, a 3D printing method is provided, so that a 3D printing system can determine safety of a target print file according to a pre-determined printing license. If the 3D printing system determines that the target print file does not meet a third safety criterion, the 3D printing system determines whether a pre-determined printing license corresponding to the target print file is stored, and if yes, the 3D printing system prints the target print file. According to this method, determining by the 3D printing system and a printing licensing center on safety of the target print file is implemented, which further implements regulation on a target product, resolves a problem of difficulty to regulate production of a high-danger article, and ensures social stability and personal safety of citizens. In addition, before sending a second license request to the printing licensing center, the 3D printing system determines whether the pre-determined printing license corresponding to the target print file is stored, and if yes, directly prints the target print file, so that some safety determining operations can be completed in the 3D printing system, which reduces a quantity of license requests received by the printing licensing center and a quantity of safety determining operations by the printing licensing center, lightens load of the printing licensing center, and improves efficiency of determining on safety of the target print file.

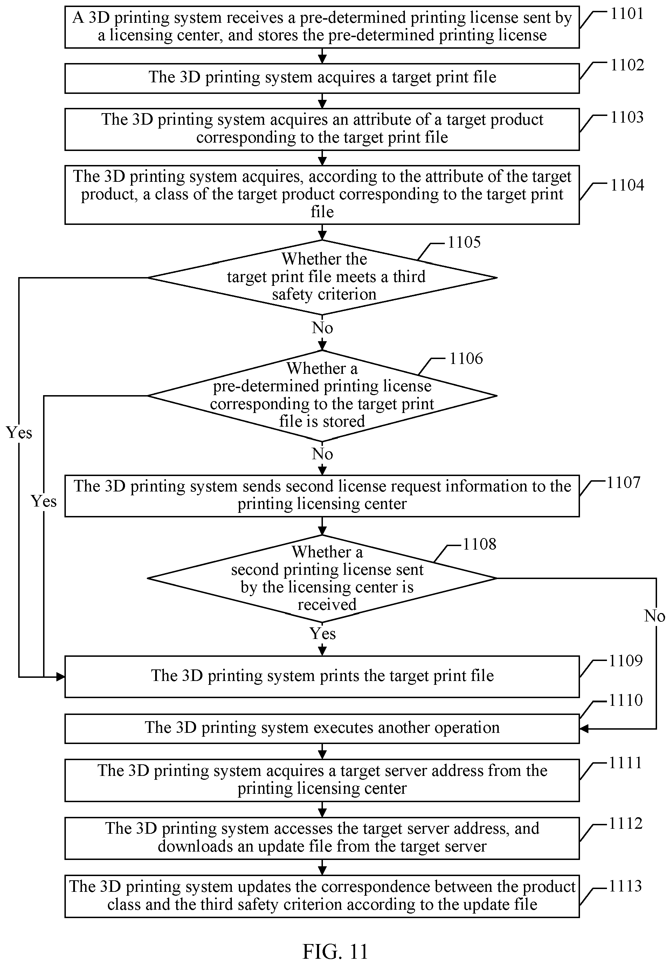

In the embodiment shown in FIG. 10, a method is provided, where the method can improve efficiency of determining on safety of a target print file. In the following embodiment, another 3D printing method is provided, so as to improve accuracy of determining on safety of a target print file. Referring to FIG. 11, a basic process of another embodiment provided in the present invention includes:
1101: A 3D printing system receives a pre-determined printing license sent by a licensing center, and stores the pre-determined printing license.
1102: The 3D printing system acquires a target print file.
1103: The 3D printing system acquires an attribute of a target product corresponding to the target print file.
1104: The 3D printing system acquires, according to the attribute of the target product, a class of the target product corresponding to the target print file.
1105: The 3D printing system determines, according to a correspondence between the product class and a third safety criterion, whether the target print file meets the third safety criterion.

Steps 1101 to 1105 are basically the same as steps 1001 to 1005, and details are not described herein again.

If in step 1105, the 3D printing system determines that the target print file meets the third safety criterion, step 1109 is performed.

If the 3D printing system determines that the target print file does not meet the third safety criterion, step 1106 is performed.

1106: The 3D printing system determines whether a pre-determined printing license corresponding to the target print file is stored.

If the 3D printing system determines that the target print file does not meet the third safety criterion, the 3D printing system determines whether a pre-determined printing license corresponding to the target print file is stored.

If the 3D printing system determines that the pre-determined printing license corresponding to the target print file is stored, step 1109 is performed.

If the 3D printing system determines that the pre-determined printing license corresponding to the target print file is not stored, step 1107 is performed.

1107: The 3D printing system sends second license request information to the printing licensing center.

1108: The 3D printing system determines whether a second printing license sent by the licensing center is received.

Steps 1107 and 1108 are basically the same as steps 1007 and 1008, and details are not described herein again.

If the 3D printing system determines that the second printing license sent by the licensing center is received, it indicates that the printing licensing center determines that the second license request information meets the second safety criterion, and step 1109 is performed.

If the 3D printing system determines that the second printing license sent by the licensing center is not received, it indicates that the printing licensing center determines that the second license request information does not meet a second safety criterion, and step 1110 is performed.

1109: The 3D printing system prints the target print file.

1110: The 3D printing system performs another operation.

Steps 1109 and 1110 are basically the same as steps 1009 and 1010, and details are not described herein again.

1111: The 3D printing system acquires a target server address from the printing licensing center.

The 3D printing system may acquire the correspondence between the product class and the third safety criterion, and determine, according to the correspondence, whether the target print file meets the third safety criterion. However, in actual application, the correspondence between the product class and the third safety criterion may change due to a reason such as a government policy or scientific and technological development. For example, according to an original correspondence between the product class and the third safety criterion, a particular type of knife meets the third safety criterion, but according to an updated correspondence between the product class and the third safety criterion, the type of knife meets the third safety criterion. If the correspondence between the product class and the third safety criterion changes, but the 3D printing system does not update the correspondence, a result of determining by the 3D printing system according to the correspondence that is not updated is not accurate. Therefore, the 3D printing system needs to constantly update the correspondence between the product class and the third safety criterion.

In this embodiment, a latest correspondence between the product class and the third safety criterion is stored on a target server, and the 3D printing system acquires a target server address from the printing licensing center, where the target server address is an address of the target server.

1112: The 3D printing system accesses the target server address, and downloads an update file from the target server.

After acquiring the target server address from the printing licensing center, the 3D printing system accesses the target server address, and downloads an update file from the target server, where the update file is used to update the correspondence between the product class and the third safety criterion.

1113: The 3D printing system updates the correspondence between the product class and the third safety criterion according to the update file.

After downloading the update file from the target server, the 3D printing system updates the correspondence between the product class and the third safety criterion according to the update file.

Step 1101 may also be performed after any one of steps 1102 to 1105, which is not limited in this embodiment as long as step 1101 is performed before step 1006.

Steps 1111 to 1113 may also be performed before any one of steps 1101 to 1110, which is not limited in this embodiment.

Steps 1111 to 1113 may also be performed once every a preset time length, which is not limited in this embodiment.

To prevent information such as the target print file, the license request information, or the printing license from being tampered and impact on determining on safety of the target print file, asymmetric cryptography may be performed for data transmission between a 3D printing design system, the printing licensing center, and the 3D printing system.

In this embodiment, a 3D printing method is provided, where a 3D printing system determines safety of a target print file according to a correspondence between a product class and a first safety criterion, and constantly updates the correspondence between the product class and the third safety criterion. According to this method, quadratic determining by the 3D printing system and a printing licensing center on safety of the target print file is implemented, which further implements regulation on a target product, resolves a problem of difficulty to regulate production of a high-danger article, and ensures social stability and personal safety of citizens. In addition, the 3D printing system constantly updates the correspondence between the product class and the third safety criterion, so that the correspondence, acquired by the 3D printing system, between the product class and the third safety criterion has better real-time performance, and determining on safety of the target print file according to the correspondence between the product class and the third safety criterion is more accurate and credible.

For ease of understanding of the foregoing embodiment, a description is provided below by using a specific application scenario of the foregoing embodiment as an example.

A 3D printing system receives a pre-determined printing license from a licensing center, and stores the pre-determined printing license. Content of the pre-determined printing license is: A gun whose purpose is police use meets the pre-determined printing license, but a gun whose purpose is military use does not meet the pre-determined printing license.

A user designs a print file of a small gun by using a 3D printing design system. The 3D printing system acquires the print file from the 3D printing design system, and then acquires an attribute of a target product of the print file, where the attribute includes: a designed product is a gun, a gun caliber is 5.8 millimeters, and the gun is used for a military purpose. It can be learned from the attribute that the product designed in the print file is a gun, and because the gun is harmful, the 3D printing system determines that a class of the target product of the print file is non-safe product, and determines that the print file does not meet a third safety criterion. Accordingly, the 3D printing system determines whether a pre-determined printing license corresponding to the print file is stored. Because the pre-determined printing license stored in the 3D printing system allows only the purpose of police use, and does not allow the purpose of military use, the 3D printing system determines that the pre-determined printing license corresponding to the print file is not stored. Therefore, the 3D printing system sends second license request information to the printing licensing center, where content of the second license request information is the attribute of the target product of the print file.

After safety determining, the printing licensing center considers that the small gun can be produced, and therefore, the printing licensing center sends a second printing license to the 3D printing design system. After receiving the second printing license, the 3D printing system prints the print file, where an obtained target product is a small gun.

Every a preset time length, the 3D printing system acquires a target server address from the licensing center, accesses the target server address, downloads an update file from a target server, and updates a correspondence between the product class and the third safety criterion according to the update file.

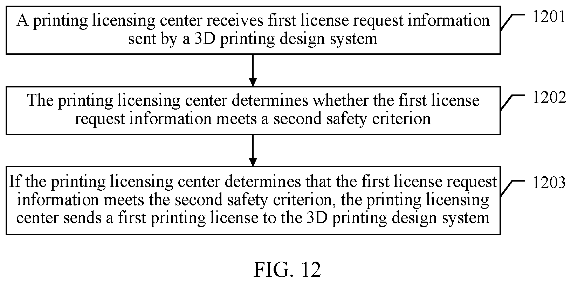

In the embodiments shown in FIG. 7 to FIG. 11, multiple 3D printing methods are provided, where regulation on a target product is implemented from the perspective of a 3D printing system. In the following embodiment, a 3D printing licensing method is provided, where regulation on a target product is implemented from the perspective of a printing licensing center. Referring to FIG. 12, a basic process of the 3D printing licensing method provided in this embodiment of the present invention includes:
1201: A printing licensing center receives first license request information sent by a 3D printing design system.

In the embodiment shown in any figure of FIG. 3 to FIG. 5, when a 3D printing design system determines that a target print file does not meet a first safety criterion, the 3D printing design system sends first license request information to a printing licensing center. The first license request information is used to request the printing licensing center for a printing license, where the first license request information may include: the target print file, or an attribute of a target product, or a class of the target product, or may be other information.

Therefore, in this embodiment, the printing licensing center receives the first license request information sent by the 3D printing design system.

1202: The printing licensing center determines whether the first license request information meets a second safety criterion.

After receiving the first license request information sent by the 3D printing design system, the printing licensing center determines whether the first license request information meets a second safety criterion.

1203: If the printing licensing center determines that the first license request information meets the second safety criterion, the printing licensing center sends a first printing license to the 3D printing design system.

If the printing licensing center determines that the first license request information meets the second safety criterion, the printing licensing center considers that the target print file designed by the 3D printing design system is relatively safe, and printing of the target print file can be authorized. Therefore, the printing licensing center sends a first printing license to the 3D printing design system. The first printing license is used to allow the 3D printing design system to send the target print file corresponding to the first license request information to a 3D printing system.

If the printing licensing center determines that the first license request information does not meet the second safety criterion, the printing licensing center may not send the first printing license to the 3D printing design system, or may perform another operation, which is not limited in this embodiment.

The printing licensing center may determine, according to the attribute of the target product corresponding to the first license request information, the class of the target product, or a safety level of the 3D printing design system that sends the first license request information, whether the first license request information meets the second safety criterion, or may determine, in another manner, whether the first license request information meets the second safety criterion, which is not limited in this embodiment. The safety level is used to indicate safety of the 3D printing design system. Request information sent by a 3D printing design system having a higher safety level is more easily considered by the printing licensing center as meeting the second safety criterion.

To prevent information such as the target print file, the license request information, or the printing license from being tampered and impact on determining on safety of the target print file, asymmetric cryptography may be performed for data transmission between the 3D printing design system and the printing licensing center.

In this embodiment, a 3D printing licensing method is provided, where regulation on a target product is implemented from the perspective of a printing licensing center. The printing licensing center receives first license request information sent by a 3D printing design system, determines whether the first license request information meets a second safety criterion, and if yes, sends a first printing license to the 3D printing design system. According to this method, determining by the printing licensing center on safety of the target print file is implemented, which further implements regulation on a target product, resolves a problem of difficulty to regulate production of a high-danger article, and ensures social stability and personal safety of citizens.

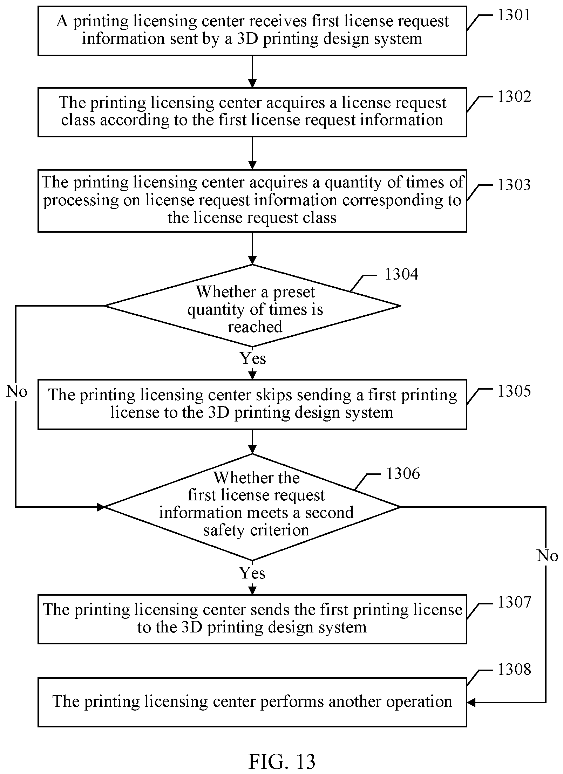

In the embodiment shown in FIG. 12, a basic process of a 3D printing licensing method is given, where in the method, by determining whether first license request information meets a second safety criterion, determining by a printing licensing center on safety of a print file is implemented. In the following embodiment, a new 3D printing licensing method is provided, which can further enhance regulation on safety of the print file. Referring to FIG. 13, a basic process of another embodiment of the present invention includes:
1301: A printing licensing center receives first license request information sent by a 3D printing design system.

Step 1301 is basically the same as step 1201, and details are not described herein again.

1302: The printing licensing center acquires a license request class according to the first license request information.

After receiving the first license request information sent by the 3D printing design system, the printing licensing center acquires a license request class according to the first license request information. The license request class is used to indicate a classification of the license request information. There may be many license request information classification manners. For example, classification is performed according to a purpose, to obtain a class of commercial use, a class of civil use, or a class of military use; or classification is performed according to a raw material of a target product, to obtain a metal class or a non-metal class; or classification is performed in another manner. Particularly, the license request class may also be the same as or different from a class of the target product in classification, which is not limited herein.

1303: The printing licensing center acquires a quantity of times of processing on license request information corresponding to the license request class.

One printing licensing center needs to process various license request information sent by one or more 3D printing design systems or 3D printing systems. The printing licensing center receives the license request information, and determines whether the request information meets a second safety criterion. However, a concept of the second safety criterion is very flexible. For example, for a particular class of target product that is less harmful, such as a regulated knife, the government allows a relatively small quantity of target products of the class to be circulated on the market, but does not allow a relatively large quantity of target products of the class to be circulated on the market. Therefore, after acquiring the license request class, the printing licensing center acquires a quantity of times of processing on license request information corresponding to the license request class.

There are many methods for the printing licensing center to acquire the quantity of times of processing on the license request information corresponding to the license request class, includes: counting, by the printing licensing center, processed license request information of different classes; each time license request information is processed, add 1 to a count value of a license request class corresponding to the license request information, and storing a counting result in a memory; and when necessary, acquiring, from the memory, a quantity of times of processing on the license request information corresponding to the license request class. The printing licensing center may also acquire, by using another method, the quantity of times of processing on the license request information corresponding to the license request class. No limitation is set in this embodiment.

1304: The printing licensing center determines whether the quantity of times of processing on the license request information corresponding to the license request class reaches a preset quantity of times.

To limit a particular class of target product circulated on the market to only a relatively small quantity, in this embodiment, a preset quantity of times is set in the printing licensing center. After acquiring the quantity of times of processing on the license request information corresponding to the license request class, the printing licensing center determines whether the acquired quantity of times reaches the preset quantity of times.

There are multiple classes of license request information processed by the printing licensing center, and correspondingly, the preset quantity of times is not necessarily constant. For license request information of a relatively dangerous class, such as license request information whose corresponding target product is a gun or ammunition, a preset quantity of times corresponding to the license request information needs to be relatively small; for license request information of a relatively safe class, such as license request information corresponding to an article of daily use, a preset quantity of times corresponding to the license request information needs to be relatively large. Specifically, it may be implemented as follows: all classes of license request information correspond to a same preset quantity of times, or a plurality of classes of license request information corresponds to a same preset quantity of times, or all classes of license request information each correspond to different preset quantities of times. A relationship between different classes of license request information and a preset quantity of times may also be implemented in another form, and details are not described herein.

If the printing licensing center determines that the quantity of times of processing on the license request information corresponding to the license request class reaches the preset quantity of times, step 1305 is performed.

If the printing licensing center determines that the quantity of times of processing on the license request information corresponding to the license request class does not reach the preset quantity of times, step 1306 is performed.

1305: The printing licensing center skips sending a first printing license to the 3D printing design system.

If the printing licensing center determines that the quantity of times of processing on the license request information corresponding to the license request class reaches the preset quantity of times, it indicates that the printing licensing center has issued a relatively large quantity of licenses and authorizations for license requests of the class. To prevent more target products corresponding to the license request class from being produced, the printing licensing center does not send a first printing license to the 3D printing design system.

1306: The printing licensing center determines whether the first license request information meets a second safety criterion.

If the printing licensing center determines that the quantity of times of processing on the license request information corresponding to the license request class does not reach the preset quantity of times, the printing licensing center determines whether the first license request information meets a second safety criterion.

If the printing licensing center determines that the first license request information meets the second safety criterion, step 1307 is performed.

If the printing licensing center determines that the first license request information does not meet the second safety criterion, step 1308 is performed.

1307: The printing licensing center sends the first printing license to the 3D printing design system.

If the printing licensing center determines that the first license request information meets the second safety criterion, the printing licensing center considers that the target print file designed by the 3D printing design system is relatively safe, and printing of the target print file can be authorized. Therefore, the printing licensing center sends a first printing license to the 3D printing design system. The first printing license is used to allow the 3D printing design system to send the target print file corresponding to the first license request information to a 3D printing system.

1308: The printing licensing center performs another operation.

The executing, by the printing licensing center, another operation if the printing licensing center determines that the first license request information does not meet the second safety criterion includes: skipping, by the printing licensing center, sending the first printing license to the 3D printing design system, or may be another operation, which is not limited in this embodiment.

To prevent information such as the target print file, the license request information, or the printing license from being tampered and impact on determining on safety of the target print file, asymmetric cryptography may be performed for data transmission between the 3D printing design system, the printing licensing center, and the 3D printing system.

The printing licensing center may determine, according to an attribute of the target product corresponding to the first license request information, the class of the target product, or a safety level of the 3D printing design system that sends the first license request information, whether the first license request information meets the second safety criterion, or may determine, in another manner, whether the first license request information meets the second safety criterion, which is not limited in this embodiment. The safety level is used to indicate safety of the 3D printing design system. Request information sent by a 3D printing design system having a higher safety level is more easily considered by the printing licensing center as meeting the second safety criterion.

In this embodiment, a 3D printing licensing method is provided, where regulation on a target product is implemented from the perspective of a printing licensing center. The printing licensing center receives first license request information sent by a 3D printing design system, determines whether the first license request information meets a second safety criterion, and if yes, sends a first printing license to the 3D printing design system. According to this method, determining by the printing licensing center on safety of the target print file is implemented, which further implements regulation on a target product, resolves a problem of difficulty to regulate production of a high-danger article, and ensures social stability and personal safety of citizens. In addition, the printing licensing center determines whether a quantity of times of processing on license request information corresponding to a license request class reaches a preset quantity of times, and if yes, skips sending a first printing license to the 3D printing design system, so that the printing licensing center licenses and authorizes only license request information within the preset quantity of times, which implements control of a production quantity of the target product, and further enhances regulation on safety of the print file.

For ease of understanding of the foregoing embodiment, a description is provided below by using a specific application scenario of the foregoing embodiment as an example.

A printing licensing center receives first license request information sent by a 3D printing design system, where the first license request information is an attribute of a target product of a print file, where the target product of the print file is a small gun, and the target attribute includes: a target product is a gun, a gun caliber is 5.8 millimeters, and the gun is used for a military purpose.

After receiving the first license request information, the printing licensing center acquires a license request class according to the first license request information, and obtains that the license request class is a gun class. The printing licensing center has processed license request information of the gun class 345 times in total, which does not reach a preset quantity of times 500 times, and accordingly, the printing licensing center determines whether the first license request information meets a second safety criterion. A determining criterion of the printing licensing center is: If the gun caliber included in the first license request information is less than 6 millimeters, it is considered that the first license request information meets the second safety criterion. Therefore, the printing licensing center considers that the first license request information meets the second safety criterion, and the print file can be printed. Accordingly, the printing licensing center sends a first printing license to the 3D printing design system.

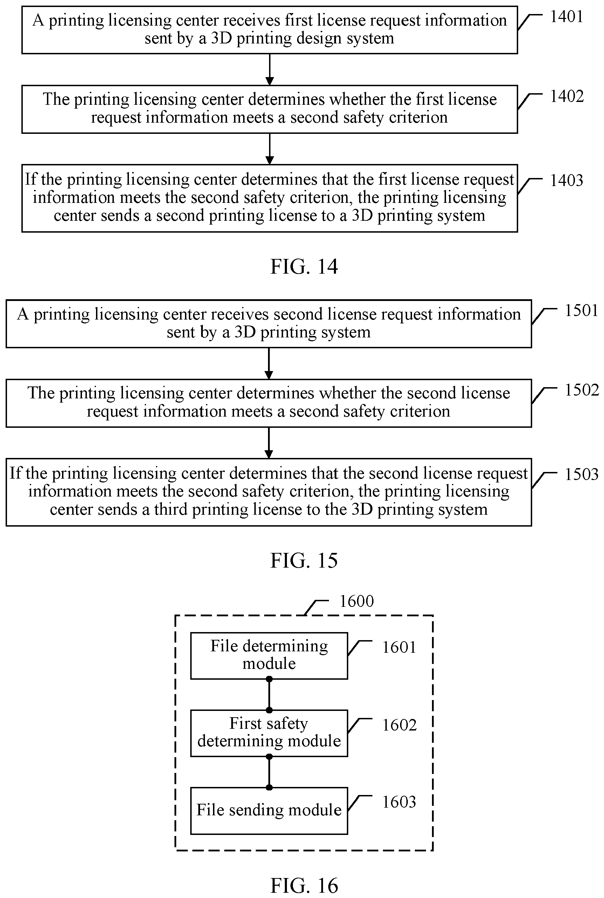

In the embodiments shown in FIG. 12 and FIG. 13, different 3D printing licensing methods are provided, where if a printing licensing center determines that first license request information meets a second safety criterion, the printing licensing center sends a first printing license to a 3D printing design system. In the following embodiment, another 3D printing licensing method is provided, where if the printing licensing center determines that the first license request information meets the second safety criterion, the printing licensing center sends a second printing license to a 3D printing system. Referring to FIG. 14, a basic process of another embodiment of the present invention includes:
1401: A printing licensing center receives first license request information sent by a 3D printing design system.

In the embodiment shown in any figure of FIG. 3 to FIG. 5, when a 3D printing design system determines that a target print file does not meet a first safety criterion, the 3D printing design system sends first license request information to a printing licensing center. The first license request information is used to request the printing licensing center for a printing license, where the first license request information may include: the target print file, or an attribute of a target product, or a class of the target product, or may be other information.

Therefore, in this embodiment, the printing licensing center receives the first license request information sent by the 3D printing design system.

1402: The printing licensing center determines whether the first license request information meets a second safety criterion.

After receiving the first license request information sent by the 3D printing design system, the printing licensing center determines whether the first license request information meets a second safety criterion.

1403: If the printing licensing center determines that the first license request information meets the second safety criterion, the printing licensing center sends a second printing license to a 3D printing system.

If the printing licensing center determines that the first license request information meets the second safety criterion, the printing licensing center considers that the target print file designed by the 3D printing design system is relatively safe, and printing of the target print file can be authorized. Therefore, the printing licensing center sends a second printing license to a 3D printing system. The second printing license is used to allow the 3D printing system to print the target print file corresponding to the first license request information.

If the printing licensing center determines that the first license request information does not meet the second safety criterion, the printing licensing center may not send the second printing license to the 3D printing design system, or may perform another operation, which is not limited in this embodiment.

To prevent information such as the target print file, the license request information, or the printing license from being tampered and impact on determining on safety of the target print file, asymmetric cryptography may be performed for data transmission between the 3D printing design system, the printing licensing center, and the 3D printing system.

The printing licensing center may determine, according to the attribute of the target product corresponding to the first license request information, the class of the target product, or a safety level of the 3D printing design system that sends the first license request information, whether the first license request information meets the second safety criterion, or may determine, in another manner, whether the first license request information meets the second safety criterion, which is not limited in this embodiment. The safety level is used to indicate safety of the 3D printing design system. Request information sent by a 3D printing design system having a higher safety level is more easily considered by the printing licensing center as meeting the second safety criterion.

In this embodiment, a 3D printing licensing method is provided, where regulation on a target product is implemented from the perspective of a printing licensing center. The printing licensing center receives first license request information sent by a 3D printing design system, determines whether the first license request information meets a second safety criterion, and if yes, sends a first printing license to a 3D printing system. According to this method, determining by the printing licensing center on safety of the target print file is implemented, which further implements regulation on a target product, resolves a problem of difficulty to regulate production of a high-danger article, and ensures social stability and personal safety of citizens.

For ease of understanding of the foregoing embodiment, a description is provided below by using a specific application scenario of the foregoing embodiment as an example.

A printing licensing center receives first license request information sent by a 3D printing design system, where the first license request information is an attribute of a target product of a print file, where the target product of the print file is a small gun, and the target attribute includes: a target product is a gun, a gun caliber is 5.8 millimeters, and the gun is used for a military purpose.

After receiving the first license request information, the printing licensing center determines whether the first license request information meets a second safety criterion. A determining criterion of the printing licensing center is: If the gun caliber included in the first license request information is less than 6 millimeters, it is considered that the first license request information meets the second safety criterion. Therefore, the printing licensing center considers that the first license request information meets the second safety criterion, and the print file can be printed. Accordingly, the printing licensing center sends a second printing license to a 3D printing system.

In all of the embodiments shown in FIG. 12 to FIG. 14, a licensing center receives first license request information from a 3D printing design system. Actually, the licensing center may also receive second license request information from a 3D printing system. Referring to FIG. 15, a basic process of another embodiment of the present invention includes:
1501: A printing licensing center receives second license request information sent by a 3D printing system.

In the embodiment shown in any figure of FIG. 9 to FIG. 11, when a 3D printing system determines that a target print file does not meet a third safety criterion, the 3D printing system sends second license request information to a printing licensing center. The second license request information is used to request the printing licensing center for a printing license, where the second license request information may include: the target print file, or an attribute of a target product, or a class of the target product, or may be other information.

Therefore, in this embodiment, the printing licensing center receives the second license request information sent by the 3D printing system.

1502: The printing licensing center determines whether the second license request information meets a second safety criterion.

After receiving the second license request information sent by the 3D printing system, the printing licensing center determines whether the second license request information meets a second safety criterion.

1503: If the printing licensing center determines that the second license request information meets the second safety criterion, the printing licensing center sends a third printing license to the 3D printing system.

If the printing licensing center determines that the second license request information meets the second safety criterion, the printing licensing center considers that the target print file to be printed by the 3D printing system is relatively safe, and printing of the target print file can be authorized. Therefore, the printing licensing center sends a third printing license to the 3D printing system. The third printing license is used to allow the 3D printing system to print the target print file corresponding to the second license request information.

If the printing licensing center determines that the second license request information does not meet the second safety criterion, the printing licensing center may not send the second printing license to the 3D printing system, or may perform another operation, which is not limited in this embodiment.

To prevent information such as the target print file, the license request information, or the printing license from being tampered and impact on determining on safety of the target print file, asymmetric cryptography may be performed for data transmission between the 3D printing design system, the printing licensing center, and the 3D printing system.

The printing licensing center may determine, according to the attribute of the target product corresponding to the second license request information, the class of the target product, or a safety level of the 3D printing design system that sends the second license request information, whether the second license request information meets the second safety criterion, or may determine, in another manner, whether the second license request information meets the second safety criterion, which is not limited in this embodiment. The safety level is used to indicate safety of the 3D printing system. Request information sent by a 3D printing system having a higher safety level is more easily considered by the printing licensing center as meeting the second safety criterion.

In this embodiment, a 3D printing licensing method is provided, where regulation on a target product is implemented from the perspective of a printing licensing center. The printing licensing center receives second license request information sent by a 3D printing design system, determines whether the second license request information meets a second safety criterion, and if yes, sends a third printing license to the 3D printing design system. According to this method, determining by the printing licensing center on safety of the target print file is implemented, which further implements regulation on a target product, resolves a problem of difficulty to regulate production of a high-danger article, and ensures social stability and personal safety of citizens.

For ease of understanding of the foregoing embodiment, a description is provided below by using a specific application scenario of the foregoing embodiment as an example.

A printing licensing center receives second license request information sent by a 3D printing system, where the second license request information is an attribute of a target product of a print file, where the target product of the print file is a small gun, and the target attribute includes: a target product is a gun, a gun caliber is 5.8 millimeters, and the gun is used for a military purpose.

After receiving the second license request information, the printing licensing center determines whether the second license request information meets a second safety criterion. A determining criterion of the printing licensing center is: If the gun caliber included in the second license request information is less than 6 millimeters, it is considered that the second license request information meets the second safety criterion. Therefore, the printing licensing center considers that the second license request information meets the second safety criterion, and the print file can be printed. Accordingly, the printing licensing center sends a third printing license to the 3D printing system.

In the foregoing embodiments, multiple 3D printing design methods, 3D printing methods, and 3D printing licensing methods are given. In the following embodiments, apparatuses configured to implement the foregoing methods are described in detail, and for content that is not described in detail herein, reference may be made to descriptions in the foregoing methods.

Referring to FIG. 16, a basic structure of a 3D printing design apparatus 1600 provided in the present invention mainly includes:
a file determining module 1601, configured to determine a target print file;
a first safety determining module 1602, configured to determine whether the target print file meets a first safety criterion; and
a file sending module 1603, configured to: when the first safety determining module 1602 determines that the target print file meets the first safety criterion, send the target print file to a 3D printing apparatus, so that the 3D printing apparatus performs printing according to the target print file.

In this embodiment, after the file determining module 1601 determines a target print file, the first safety determining module 1602 determines whether the target print file meets a first safety criterion, and if the target print file meets the first safety criterion, the file sending module 1603 sends the target print file to a 3D printing apparatus, so that the 3D printing apparatus performs printing according to the target print file. By determining whether the target print file meets the first safety criterion, determining by the 3D printing design apparatus on safety of the target print file is implemented, which further implements regulation on a target product, resolves a problem of difficulty to regulate production of a high-danger article, and ensures social stability and personal safety of citizens.

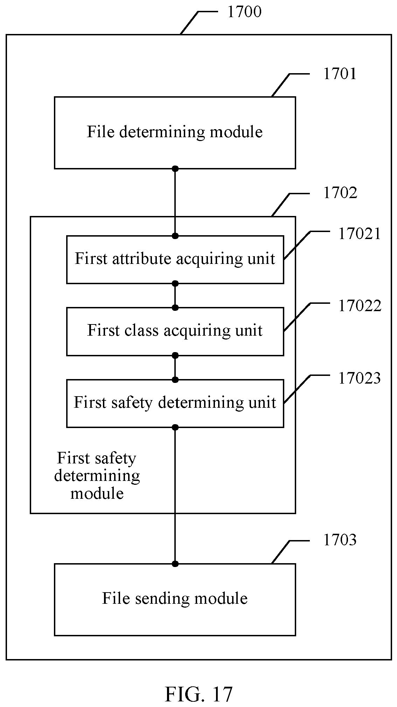

In the embodiment shown in FIG. 16, a basic structure of the 3D printing design apparatus provided in the embodiments of the present invention is given, where after the file determining module 1601 determines a target print file, the first safety determining module 1602 determines whether the file meets a first safety criterion, and determines, according to a determining result, whether to send the target print file to a 3D printing apparatus. In the following embodiment, the first safety determining module is further detailed based on the embodiment shown in FIG. 16. Referring to FIG. 17, a basic structure of another embodiment 1700 of the 3D printing design apparatus provided in the present invention includes:
a file determining module 1701, configured to determine a target print file;
a first safety determining module 1702, configured to determine whether the target print file meets a first safety criterion, where the first safety determining module 1702 includes:
   a first attribute acquiring unit 17021, configured to acquire an attribute of a target product corresponding to the target print file;
   a first class acquiring unit 17022, configured to acquire, according to the attribute of the target product, a class of the target product corresponding to the target print file, where the attribute of the target product includes: category information of a raw material of the target product, precision information of the raw material of the target product, manufacturing technological process information of the target product, spatial shape information of the target product, or purpose information of the target product, and the class of the target product is used to indicate a classification of the target print file; and
   a first safety determining unit 17023, configured to determine, according to a correspondence between the product class and the first safety criterion, whether the target print file meets the first safety criterion; and
   a file sending module 1703, configured to: when the first safety determining module 1702 determines that the target print file meets the first safety criterion, send the target print file to a 3D printing apparatus, so that the 3D printing apparatus performs printing according to the target print file.

In this embodiment, the first safety determining module is detailed based on the embodiment shown in FIG. 16, where after the file determining module 1701 determines a target print file, the first attribute acquiring unit 17021 acquires an attribute of a target product corresponding to the target print file, the first class acquiring unit 17022 further acquires a class of the target product corresponding to the target print file, then the first safety determining unit 17023 determines, according to a correspondence between the product class and a first safety criterion, whether the target print file meets the first safety criterion, and if yes, the file sending module 1703 sends the target print file to a 3D printing apparatus. According to this method, the 3D printing design apparatus can determine whether the target print file meets the first safety criterion, which further implements regulation on a target product, resolves a problem of difficulty to regulate production of a high-danger article, and ensures social stability and personal safety of citizens.

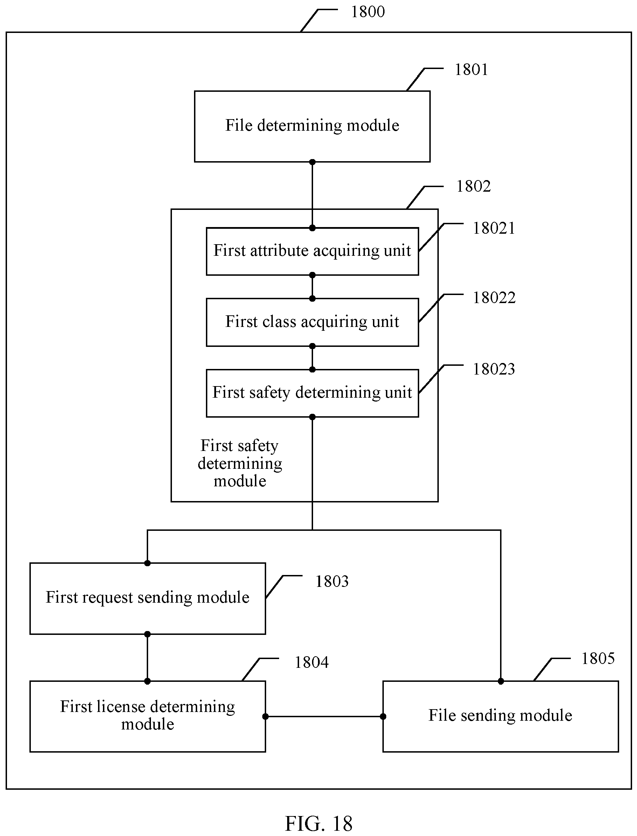

In the embodiment shown in FIG. 17, an apparatus is provided, where a first safety determining module is explained in detail. After the file determining module 1701 determines a target print file, the first safety determining unit 17023 determines whether the target print file meets a first safety criterion, and if yes, the file sending module 1703 sends the target print file to a 3D printing apparatus. In the following embodiment, another apparatus is provided, so as to describe in detail how a corresponding operation is performed when the target print file does not meet the first safety criterion. Referring to FIG. 18, a basic structure of another embodiment 1800 of the present invention includes:
a file determining module 1801, configured to determine a target print file;
a first safety determining module 1802, configured to determine whether the target print file meets a first safety criterion, where the first safety determining module 1802 includes:
   a first attribute acquiring unit 18021, configured to acquire an attribute of a target product corresponding to the target print file;
   a first class acquiring unit 18022, configured to acquire, according to the attribute of the target product, a class of the target product corresponding to the target print file, where the attribute of the target product includes: category information of a raw material of the target product, precision information of the raw material of the target product, manufacturing technological process information of the target product, spatial shape information of the target product, or purpose information of the target product, and the class of the target product is used to indicate a classification of the target print file; and
   a first safety determining unit 18023, configured to determine, according to a correspondence between the product class and the first safety criterion, whether the target print file meets the first safety criterion;
   a first request sending module 1803, configured to: when the first safety determining unit 18023 determines that the target print file does not meet the first safety criterion, send first license request information to a 3D printing licensing apparatus;
   a first license determining module 1804, configured to determine whether a first printing license sent by the 3D printing licensing apparatus is received, where the first printing license is sent by the 3D printing licensing apparatus when the 3D printing licensing apparatus determines that the first license request information meets a second safety criterion; and
   a file sending module 1805, configured to: when the first license determining module 1802 determines that the target print file meets the first safety criterion or when the first license determining module 1804 determines that the first printing license sent by the 3D printing licensing apparatus is received, send the target print file to a 3D printing apparatus, so that the 3D printing apparatus performs printing according to the target print file.

In this embodiment, how another operation is specifically performed when the 3D printing design apparatus determines that a target print file does not meet a first safety criterion is explained in detail. If the first safety determining module 1802 determines that the target print file does not meet the first safety criterion, the first request sending module 1803 sends first license request information to a 3D printing licensing apparatus, and the first license determining module 1804 determines whether a first printing license sent by the 3D printing licensing apparatus is received. If the first license determining module 1804 determines that the first printing license sent by the 3D printing licensing apparatus is received, it indicates that the 3D printing licensing apparatus determines that the first license request information meets a second safety criterion, and the file sending module 1805 sends the target print file to a 3D printing apparatus, so that the 3D printing apparatus performs printing according to the target print file. According to this method provided in this embodiment, quadratic determining by the 3D printing design apparatus and the 3D printing licensing apparatus on safety of the target print file is implemented, which further implements regulation on a target product, resolves a problem of difficulty to regulate production of a high-danger article, and ensures social stability and personal safety of citizens.

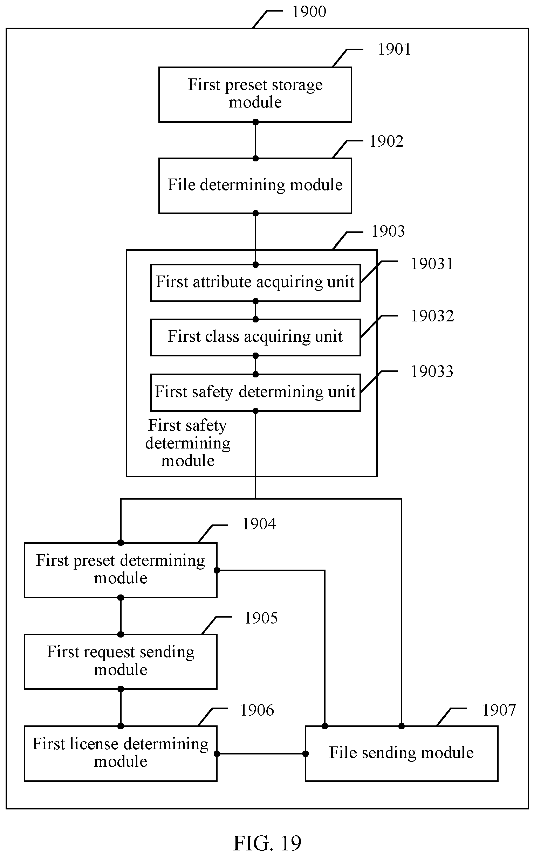

In the embodiment shown in FIG. 18, a 3D printing design apparatus is provided, where a 3D printing licensing apparatus can determine safety of a received file. In the following embodiment, a new 3D printing design apparatus 1900 is provided based on the embodiment shown in FIG. 18, where the apparatus can reduce workload of determining on safety by the 3D printing licensing apparatus. Referring to FIG. 19, a basic structure of another embodiment 1900 of the present invention includes:
a first preset storage module 1901, configured to receive a pre-determined printing license sent by a 3D printing licensing apparatus, and store the pre-determined printing license;
a file determining module 1902, configured to determine a target print file;
a first safety determining module 1903, configured to determine whether the target print file meets a first safety criterion, where the first safety determining module 1903 includes:
   a first attribute acquiring unit 19031, configured to acquire an attribute of a target product corresponding to the target print file;
   a first class acquiring unit 19032, configured to acquire, according to the attribute of the target product, a class of the target product corresponding to the target print file, where the attribute of the target product includes: category information of a raw material of the target product, precision information of the raw material of the target product, manufacturing technological process information of the target product, spatial shape information of the target product, or purpose information of the target product, and the class of the target product is used to indicate a classification of the target print file; and
   a first safety determining unit 19033, configured to determine, according to a correspondence between the product class and the first safety criterion, whether the target print file meets the first safety criterion;
   a first preset determining module 1904, configured to: when the first safety determining unit determines that the target print file does not meet the first safety criterion, determine whether the first preset storage module stores a pre-determined printing license corresponding to the target print file;
   a first request sending module 1905, configured to: when the first safety determining unit 18023 determines that the target print file does not meet the first safety criterion or the first preset determining module determines that the first preset storage module does not store the pre-determined printing license corresponding to the target print file, send first license request information to the 3D printing licensing apparatus;
   a first license determining module 1906, configured to determine whether a first printing license sent by the 3D printing licensing apparatus is received, where the first printing license is sent by the 3D printing licensing apparatus when the 3D printing licensing apparatus determines that the first license request information meets a second safety criterion; and
   a file sending module 1907, configured to: when the first safety determining module 1903 determines that the target print file meets the first safety criterion, or when the first license determining module determines that the first printing license sent by the 3D printing licensing apparatus is received, or when the first preset determining module determines that the first preset storage module stores the pre-determined printing license corresponding to the target print file, send the target print file to a 3D printing apparatus, so that the 3D printing apparatus performs printing according to the target print file.

In the embodiment shown in FIG. 19, a 3D printing design apparatus is provided, which can determine safety of a target print file according to a pre-determined printing license. If the first safety determining unit 19033 determines that the target print file does not meet a first safety criterion, the first preset determining module 1904 determines whether a pre-determined printing license corresponding to the target print file is stored, and if yes, the file sending module 1907 sends the target print file to a 3D printing apparatus. According to this method, determining by the 3D printing design apparatus and a 3D printing licensing apparatus on safety of the target print file is implemented, which further implements regulation on a target product, resolves a problem of difficulty to regulate production of a high-danger article, and ensures social stability and personal safety of citizens. In addition, before the first request sending module 1905 sends first license request information to the 3D printing licensing apparatus, the first preset determining module 1904 determines whether the pre-determined printing license corresponding to the target print file is stored, and if yes, the file sending module 1907 directly sends the target print file to the 3D printing apparatus, so that some safety determining operations can be completed in the 3D printing design apparatus, which reduces a quantity of license requests received by the 3D printing licensing apparatus and a quantity of safety determining operations by the 3D printing licensing apparatus, lightens load of the 3D printing licensing apparatus, and improves efficiency of determining on safety of the target print file.

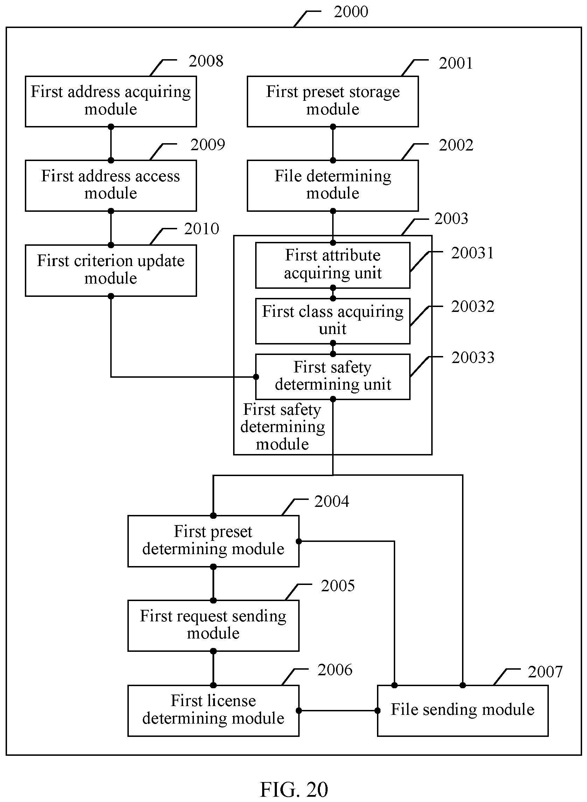

In the embodiment shown in FIG. 19, an apparatus is provided, which can improve efficiency of determining on safety of a target print file. In the following embodiment, another 3D printing design apparatus 2000 is provided, so as to improve accuracy of determining on safety of a target print file. Referring to FIG. 20, a basic structure of another embodiment provided in the present invention includes:
a first preset storage module 2001, configured to receive a pre-determined printing license sent by a 3D printing licensing apparatus, and store the pre-determined printing license;
a file determining module 2002, configured to determine a target print file;
a first safety determining module 2003, configured to determine whether the target print file meets a first safety criterion, where the first safety determining module 2003 includes:
   a first attribute acquiring unit 20031, configured to acquire an attribute of a target product corresponding to the target print file;
   a first class acquiring unit 20032, configured to acquire, according to the attribute of the target product, a class of the target product corresponding to the target print file, where the attribute of the target product includes: category information of a raw material of the target product, precision information of the raw material of the target product, manufacturing technological process information of the target product, spatial shape information of the target product, or purpose information of the target product, and the class of the target product is used to indicate a classification of the target print file; and
   a first safety determining unit 20033, configured to determine, according to a correspondence between the product class and the first safety criterion, whether the target print file meets the first safety criterion;
   a first preset determining module 2004, configured to: when the first safety determining unit determines that the target print file does not meet the first safety criterion, determine whether the first preset storage module stores a pre-determined printing license corresponding to the target print file;
   a first request sending module 2005, configured to: when the first safety determining unit 18023 determines that the target print file does not meet the first safety criterion or the first preset determining module determines that the first preset storage module does not store the pre-determined printing license corresponding to the target print file, send first license request information to the 3D printing licensing apparatus;
   a first license determining module 2006, configured to determine whether a first printing license sent by the 3D printing licensing apparatus is received, where the first printing license is sent by the 3D printing licensing apparatus when the 3D printing licensing apparatus determines that the first license request information meets a second safety criterion;
   a file sending module 2007, configured to: when the first safety determining module 2003 determines that the target print file meets the first safety criterion, or when the first license determining module determines that the first printing license sent by the 3D printing licensing apparatus is received, or when the first preset determining module determines that the first preset storage module stores the pre-determined printing license corresponding to the target print file, send the target print file to a 3D printing apparatus, so that the 3D printing apparatus performs printing according to the target print file;
   a first address acquiring module 2008, configured to acquire a target server address from the 3D printing licensing apparatus, where the target server address is an address of a target server;
   a first address access module 2009, configured to access the target server address, and download an update file from the target server; and
   a first criterion update module 2010, configured to update the correspondence between the product class and the first safety criterion according to the update file.

In this embodiment, a 3D printing design apparatus is provided, where the first safety determining module 2003 determines safety of a target print file according to a correspondence between a product class and a first safety criterion, and the first criterion update module 2010 constantly updates the correspondence between the product class and the first safety criterion. According to this method, determining by the 3D printing design apparatus and a 3D printing licensing apparatus on safety of the target print file is implemented, which further implements regulation on a target product, resolves a problem of difficulty to regulate production of a high-danger article, and ensures social stability and personal safety of citizens. In addition, the first criterion update module 2010 constantly updates the correspondence between the product class and the first safety criterion, so that the correspondence, used by the first safety determining module 2003, between the product class and the first safety criterion has better real-time performance, and determining on safety of the target print file according to the correspondence between the product class and the first safety criterion is more accurate and credible.

For ease of understanding of the foregoing embodiment, a description is provided below by using a specific application scenario of the foregoing embodiment as an example.

The first preset storage module 2001 receives a pre-determined printing license from a 3D printing licensing apparatus, and stores the pre-determined printing license. Content of the pre-determined printing license is: A gun whose purpose is police use meets the pre-determined printing license, but a gun whose purpose is military use does not meet the pre-determined printing license.

A user designs a print file of a small gun by using the 3D printing design apparatus. After the file determining module 2002 determines that the design of the print file is completed, the first attribute acquiring unit 20031 acquires an attribute of a target product of the print file, where the attribute includes: a designed product is a gun, a gun caliber is 5.8 millimeters, and the gun is used for a military purpose. It can be learned from the attribute that the product designed in the print file is a gun, and because the gun is harmful, the first class acquiring unit 20032 determines that a class of the target product of the print file is non-safe product, and the first safety determining unit 20033 determines that the print file does not meet a first safety criterion. Accordingly, the first preset determining module 2004 determines whether a pre-determined printing license corresponding to the print file is stored. Because the pre-determined printing license stored in the first preset storage module 2001 allows only the purpose of police use, and does not allow the purpose of military use, the first safety determining unit 20033 determines that the pre-determined printing license corresponding to the print file is not stored. Therefore, the first request sending module 2005 sends first license request information to the 3D printing licensing apparatus, where content of the first license request information is the attribute of the target product of the print file.

After safety determining, the 3D printing licensing apparatus considers that the small gun can be produced, and therefore, the 3D printing licensing apparatus sends a first printing license to the 3D printing design apparatus. After the first license determining module 2006 receives the first printing license, the file sending module 2007 sends the print file of the small gun to a 3D printing apparatus.

Every a preset time length, the second address acquiring module 2008 acquires a target server address from the 3D printing licensing apparatus, and the second address access module 2009 accesses the target server address, and downloads an update file from a target server. The first criterion update module 2010 updates a correspondence between the product class and the third safety criterion according to the update file.

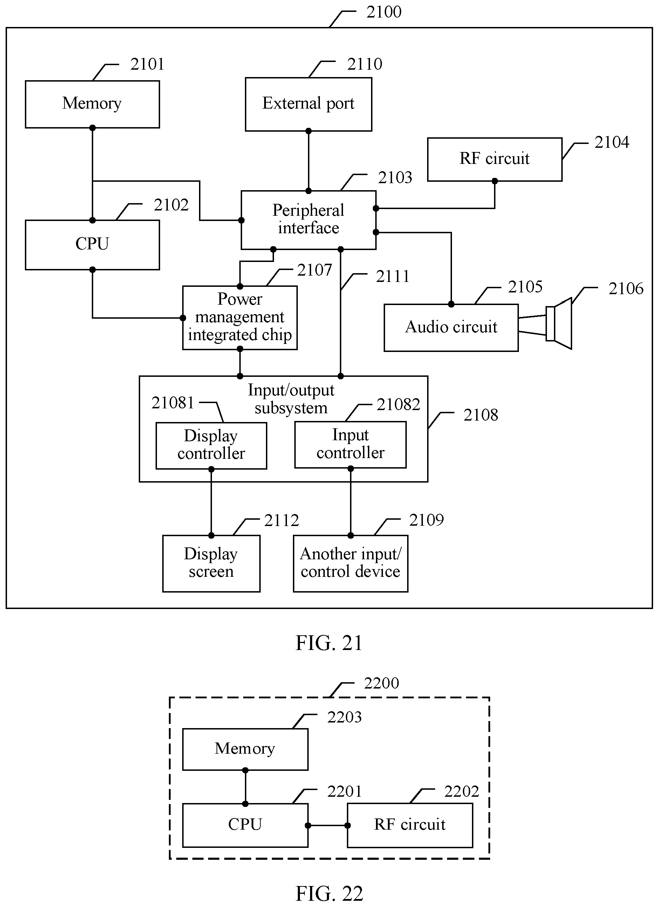

Referring to FIG. 21, an embodiment of the present invention further provides a 3D printing design apparatus 2100.

It should be understood that, the 3D printing design apparatus 2100 shown in the figure is merely an example of the 3D printing design apparatus provided in any embodiment shown in FIG. 16 to FIG. 20, and the 3D printing design apparatus 2100 may have more or fewer components than those shown in the figure, or two or more components may be combined, or a different component configuration may be used. The components shown in the figure may be implemented in hardware, software, or a combination of hardware and software that includes one or more signal processing and/or application-specific integrated circuits.

A specific description is provided now by using a 3D printing design apparatus as an example. As shown in FIG. 21, the 3D printing design apparatus includes: a memory 2101, a central processing unit (Central Processing Unit, CPU for short below) 2102, a peripheral interface 2103, an RF circuit 2104, an audio circuit 2105, a speaker 2106, a power management integrated chip 2107, an input/output (I/O) subsystem 2108, another input/control device 2109, and an external port 2110, where these components communicate with each other by using one or more communications buses or signal lines 2111.

It should be noted that, the non-3D printing design apparatus provided in this embodiment is merely an example of the 3D printing design apparatus provided in the embodiments of the present invention. The 3D printing design apparatus involved in the embodiments of the present invention may include more or fewer components than those shown in FIG. 21, or two or more components may be combined, or a different component configuration or setting may be used; and the components may be implemented in hardware, software, or a combination of hardware and software that includes one or more signal processing and/or application-specific integrated circuits.

The 3D printing design apparatus provided in this embodiment is described below in detail.

Memory 2101: The memory 2101 is configured to store program code and data, and may be accessed by the CPU 2102, the peripheral interface 2103, and the like, and the memory 2101 may include a high-speed random access memory, and may further include a nonvolatile memory, for example, one or more magnetic disk storage devices, flash memory devices, or other nonvolatile solid-state memory devices.

CPU 2102: The CPU 2102 may acquire the program code from the memory 2101, and control actual operations of circuits such as the RF circuit 2104 and the I/O subsystem 2108 according to an acquired program.

Peripheral interface 2103: The peripheral interface may connect input and output peripherals of the device to the CPU 2102 and the memory 2101.

I/O subsystem 2108: The I/O subsystem 2108 may connect the input and output peripherals on the device, for example, a display screen 2112 and the another input/control device 2109, to the peripheral interface 2103. The I/O subsystem 2108 may include a display controller 21081 and one or more input controllers 21082 configured to control the another input/control device 2109. The one or more input controllers 21082 receive an electrical signal from the another input/control device 2109 or send an electrical signal to the another input/control device 2109, where the another input/control device 2109 may include a physical button (a press button, a rocker button, or the like), a dial, a slide switch, a joystick, and a click scroll wheel. It should be noted that, the input controller 21082 may be connected to any one of the following components: a keyboard, an infrared port, a USB interface, and a pointing device such as a mouse.

Display screen 2112: The display screen 2112 serves as an output interface between the 3D printing design apparatus and the user, and displays a visible output to the user, where the visible output may include a picture, a text, an icon, a video, and the like.

The display controller 21081 in the I/O subsystem 2108 receives an electrical signal from the display screen 2112 or sends an electrical signal to the display screen 2112. The display screen 2112 detects a touch on the touchscreen; the display controller 21081 converts the detected touch into an interaction with a user interface object displayed on the display screen 2112, that is, a man-machine interaction, where the user interface object displayed on the display screen 2112 may be a game running icon, an icon linked to a corresponding network, or the like. It should be noted that, the device may further include an optical mouse, where the optical mouse is a touch-sensitive surface that does not display a visible output, or an extension of a touch-sensitive surface formed by a touchscreen.

The RF circuit 2104 is mainly configured to establish communication between the 3D printing design apparatus and a wireless network (that is, a network side), to implement data receiving and sending between the 3D printing design apparatus and the wireless network, for example, sending and receiving of a short message service message and an E-mail. Specifically, the RF circuit 2104 receives and sends an RF signal, where the RF signal is also referred to as an electromagnetic signal; the RF circuit 2104 converts an electrical signal into an electromagnetic signal or converts an electromagnetic signal into an electrical signal, and communicates with a communications network and another device by using the electromagnetic signal. The RF circuit 2104 may include a known circuit configured to perform these functions, which includes, but is not limited to, an antenna system, an RF transceiver, one or more amplifiers, a tuner, one or more oscillators, a digital signal processor, a CODEC chip set, a subscriber identity module (Subscriber Identity Module, SIM), and the like.

The audio circuit 2105 is mainly configured to receive audio data from the peripheral interface 2103, convert the audio data into an electrical signal, and send the electrical signal to the speaker 2106.

The speaker 2106 is configured to restore, to sound, a speech signal that is received by the 3D printing design apparatus from the wireless network by using the RF circuit 2104, and play the sound to the user.

The power management integrated chip 2107 is configured to supply power for hardware connected to the CPU 2102, the I/O subsystem, and the peripheral interface, and perform power management.

FIG. 22 is a structural diagram of an internal part of the 3D printing design apparatus. In this embodiment, a CPU 2201 is specifically configured to:
determine a target print file;
acquire an attribute of a target product corresponding to the target print file;
acquire, according to the attribute of the target product, a class of the target product corresponding to the target print file;
determine, according to a correspondence between the product class and a first safety criterion, whether the target print file meets the first safety criterion;
determine whether a pre-determined printing license corresponding to the target print file is stored;
determine whether a first printing license sent by a 3D printing licensing apparatus is received; and
update the correspondence between the product class and the first safety criterion according to an update file.

In this embodiment, an RF circuit 2202 is specifically configured to:
send first license request information to the 3D printing licensing apparatus;
send the target print file to a 3D printing apparatus;
acquire a target server address from the 3D printing licensing apparatus; and
access the target server address, and download the update file from the target server.

In this embodiment, a memory 2203 is specifically configured to: receive the pre-determined printing license sent by the 3D printing licensing apparatus, and store the pre-determined printing license.

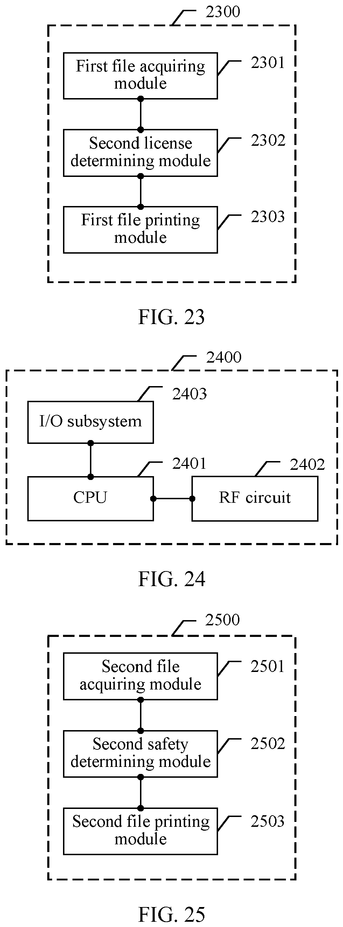

In the embodiments shown in FIG. 16 to FIG. 20, multiple 3D printing design apparatuses are provided, where regulation on a target product is implemented from the perspective of 3D printing design. In the following embodiment, a 3D printing apparatus 2300 is provided, where regulation on a target product is implemented from the perspective of 3D printing. Referring to FIG. 23, a basic structure of the 3D printing apparatus provided in this embodiment of the present invention includes:
a first file acquiring module 2301, configured to acquire a target print file;
a second license determining module 2302, configured to determine whether a second printing license sent by a 3D printing licensing apparatus is received; and
a first file printing module 2303, configured to: when the second license determining module 2302 determines that the second printing license sent by the 3D printing licensing apparatus is received, print the target print file.

In this embodiment, a 3D printing apparatus is provided, where the first file acquiring module 2301 acquires a target print file, the second license determining module 2302 determines whether a second printing license sent by a printing licensing center is received, and if a determining result is yes, the first file printing module 2303 prints the target print file. In this embodiment, by determining whether the second printing license is received, determining by a 3D printing system on safety of the target print file is implemented, which further implements regulation on a target product, resolves a problem of difficulty to regulate production of a high-danger article, and ensures social stability and personal safety of citizens.

For ease of understanding of the foregoing embodiment, a description is provided below by using a specific application scenario of the foregoing embodiment as an example.

The first file acquiring module 2301 obtains a print file of a small gun from a 3D printing design apparatus, and the second license determining module 2302 determines that a second printing license about the print file is received from a 3D printing licensing apparatus. Accordingly, the first file printing module 2303 prints the print file, where a printed target product is a small gun.

Still referring to FIG. 21, an embodiment of the present invention further provides a 3D printing apparatus.

It should be understood that, the 3D printing apparatus 2100 shown in the figure is merely an example of the 3D printing apparatus provided in the embodiment shown in FIG. 23, and the 3D printing apparatus 2100 may have more or fewer components than those shown in the figure, or two or more components may be combined, or a different component configuration may be used. The components shown in the figure may be implemented in hardware, software, or a combination of hardware and software that includes one or more signal processing and/or application-specific integrated circuits.

A specific description is provided now by using a 3D printing apparatus as an example. As shown in FIG. 21, the 3D printing apparatus includes: a memory 2101, a central processing unit (Central Processing Unit, CPU for short below) 2102, a peripheral interface 2103, an RF circuit 2104, an audio circuit 2105, a speaker 2106, a power management integrated chip 2107, an input/output (I/O) subsystem 2108, another input/control device 2109, and an external port 2110, where these components communicate with each other by using one or more communications buses or signal lines 2111.

It should be noted that, the non-3D printing apparatus provided in this embodiment is merely an example of the 3D printing apparatus provided in the embodiments of the present invention. The 3D printing apparatus involved in the embodiments of the present invention may include more or fewer components than those shown in FIG. 21, or two or more components may be combined, or a different component configuration or setting may be used; and the components may be implemented in hardware, software, or a combination of hardware and software that includes one or more signal processing and/or application-specific integrated circuits.

The 3D printing apparatus provided in this embodiment is described below in detail.

Memory 2101: The memory 2101 is configured to store program code and data, and may be accessed by the CPU 2102, the peripheral interface 2103, and the like, and the memory 2101 may include a high-speed random access memory, and may further include a nonvolatile memory, for example, one or more magnetic disk storage devices, flash memory devices, or other nonvolatile solid-state memory devices.

CPU 2102: The CPU 2102 may acquire the program code from the memory 2101, and control actual operations of circuits such as the RF circuit 2104 and the I/O subsystem 2108 according to an acquired program.

Peripheral interface 2103: The peripheral interface may connect input and output peripherals of the device to the CPU 2102 and the memory 2101.

I/O subsystem 2108: The I/O subsystem 2108 may connect the input and output peripherals on the device, for example, a display screen 2112 and the another input/control device 2109, to the peripheral interface 2103. The I/O subsystem 2108 may include a display controller 21081 and one or more input controllers 21082 configured to control the another input/control device 2109. The one or more input controllers 21082 receive an electrical signal from the another input/control device 2109 or send an electrical signal to the another input/control device 2109, where the another input/control device 2109 may include a physical button (a press button, a rocker button, or the like), a dial, a slide switch, a joystick, and a click scroll wheel. It should be noted that, the input controller 21082 may be connected to any one of the following components: a keyboard, an infrared port, a USB interface, and a pointing device such as a mouse.

Display screen 2112: The display screen 2112 serves as an output interface between the 3D printing apparatus and the user, and displays a visible output to the user, where the visible output may include a picture, a text, an icon, a video, and the like.

The display controller 21081 in the I/O subsystem 2108 receives an electrical signal from the display screen 2112 or sends an electrical signal to the display screen 2112. The display screen 2112 detects a touch on the touchscreen; the display controller 21081 converts the detected touch into an interaction with a user interface object displayed on the display screen 2112, that is, a man-machine interaction, where the user interface object displayed on the display screen 2112 may be a game running icon, an icon linked to a corresponding network, or the like. It should be noted that, the device may further include an optical mouse, where the optical mouse is a touch-sensitive surface that does not display a visible output, or an extension of a touch-sensitive surface formed by a touchscreen.

The RF circuit 2104 is mainly configured to establish communication between the 3D printing apparatus and a wireless network (that is, a network side), to implement data receiving and sending between the 3D printing apparatus and the wireless network, for example, sending and receiving of a short message service message and an E-mail. Specifically, the RF circuit 2104 receives and sends an RF signal, where the RF signal is also referred to as an electromagnetic signal; the RF circuit 2104 converts an electrical signal into an electromagnetic signal or converts an electromagnetic signal into an electrical signal, and communicates with a communications network and another device by using the electromagnetic signal. The RF circuit 2104 may include a known circuit configured to perform these functions, which includes, but is not limited to, an antenna system, an RF transceiver, one or more amplifiers, a tuner, one or more oscillators, a digital signal processor, a CODEC chip set, a subscriber identity module (Subscriber Identity Module, SIM), and the like.

The audio circuit 2105 is mainly configured to receive audio data from the peripheral interface 2103, convert the audio data into an electrical signal, and send the electrical signal to the speaker 2106.

The speaker 2106 is configured to restore, to sound, a speech signal that is received by the 3D printing apparatus from the wireless network by using the RF circuit 2104, and play the sound to the user.

The power management integrated chip 2107 is configured to supply power for hardware connected to the CPU 2102, the I/O subsystem, and the peripheral interface, and perform power management.

FIG. 24 is a structural diagram of an internal part of the 3D printing apparatus. In this embodiment, a CPU 2401 is specifically configured to:
determine whether a second printing license sent by a 3D printing licensing apparatus is received.

In this embodiment, an RF circuit 2402 is specifically configured to:
acquire a target print file.

In this embodiment, an I/O subsystem 2403 is specifically configured to:
print the target print file.

In the embodiment shown in FIG. 23 and FIG. 24, a 3D printing apparatus is provided, which can determine safety by acquiring a second printing license from a 3D printing licensing apparatus. In the following embodiment, another 3D printing apparatus 2500 is provided, where the apparatus determines safety in another manner. Referring to FIG. 25, a basic structure of another embodiment of the present invention includes:
a second file acquiring module 2501, configured to acquire a target print file;
a second safety determining module 2502, configured to determine whether the target print file meets a third safety criterion; and
a second file printing module 2503, configured to: when the second safety determining module 2502 determines that the target print file meets the third safety criterion, print the target print file.

In this embodiment, after the second file acquiring module 2501 acquires a target print file, the second safety determining module 2502 determines whether the target print file meets a third safety criterion, and if the target print file meets the third safety criterion, the second file printing module 2503 prints the target print file. In this embodiment, by determining whether the target print file meets the third safety criterion, determining by a 3D printing system on safety of the target print file is implemented, which further implements regulation on a target product, resolves a problem of difficulty to regulate production of a high-danger article, and ensures social stability and personal safety of citizens.

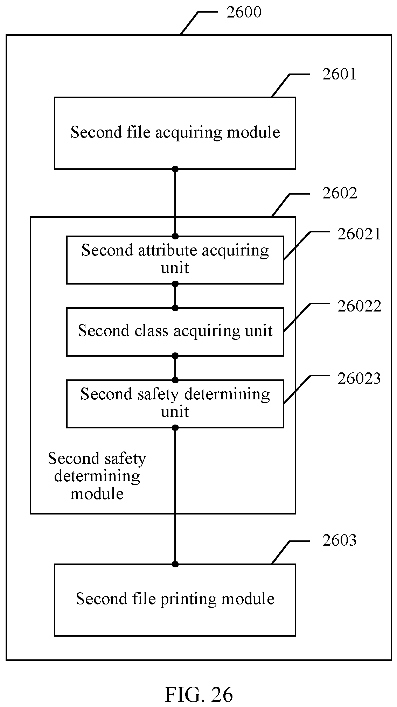

In the embodiment shown in FIG. 25, a basic structure of the 3D printing apparatus provided in the embodiments of the present invention is given, where after the second file acquiring module 2501 acquires a target print file, the second safety determining module 2502 determines whether the file meets a third safety criterion, and the second file printing module 2503 determines, according to a determining result, whether to print the target print file. In the following embodiment, how the second safety determining module 2502 determines whether the file meets the third safety criterion is further explained based on the embodiment shown in FIG. 25. Referring to FIG. 26, a basic process of another embodiment 2600 of the 3D printing apparatus provided in the present invention includes:
a second file acquiring module 2601, configured to acquire a target print file;
a second safety determining module 2602, configured to determine whether the target print file meets a third safety criterion, where in this embodiment, the second safety determining module 2602 specifically includes:
   a second attribute acquiring unit 26021, configured to acquire an attribute of a target product corresponding to the target print file;
   a second class acquiring unit 26022, configured to acquire, according to the attribute of the target product, a class of the target product corresponding to the target print file, where the attribute of the target product includes: category information of a raw material of the target product, precision information of the raw material of the target product, manufacturing technological process information of the target product, spatial shape information of the target product, or purpose information of the target product, and the class of the target product is used to indicate a classification of the target print file; and
   a second safety determining unit 26023, configured to determine, according to a correspondence between the product class and the third safety criterion, whether the target print file meets the third safety criterion; and
   a second file printing module 2603, configured to: when the second safety determining module 2602 determines that the target print file meets the third safety criterion, print the target print file.

In this embodiment, how the 3D printing apparatus determines whether a target print file meets a third safety criterion is detailed, where after the second file acquiring module 2601 acquires the target print file, the second attribute acquiring unit 26021 acquires an attribute of a target product corresponding to the target print file, the second class acquiring unit 26022 further acquires a class of the target product corresponding to the target print file, then the second safety determining unit 26023 determines, according to a correspondence between the product class and the third safety criterion, whether the target print file meets the third safety criterion, and if yes, the second file printing module 2603 prints the target print file. According to this method, the 3D printing apparatus can determine whether the target print file meets the third safety criterion, which further implements regulation on a target product, resolves a problem of difficulty to regulate production of a high-danger article, and ensures social stability and personal safety of citizens.

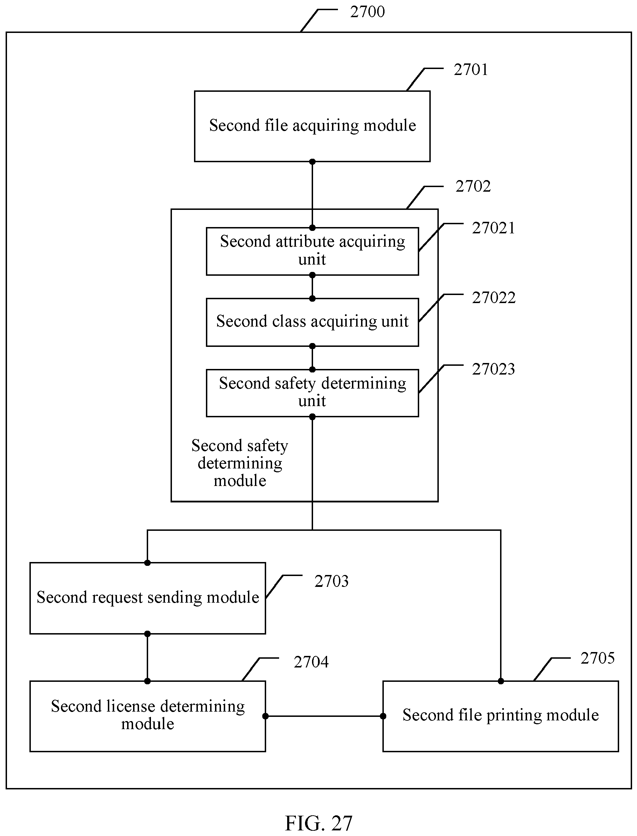

In the embodiment shown in FIG. 26, a relatively detailed 3D printing apparatus is provided. In the apparatus, the second safety determining unit 26023 determines whether a target print file meets a third safety criterion, and if yes, the second file printing module 2603 prints the target print file. In the following embodiment, another 3D printing apparatus 2700 is provided, so as to describe in detail how a corresponding operation is performed when the second safety determining unit determines that the target print file does not meet the third safety criterion. Referring to FIG. 27, a basic structure of another embodiment of the present invention includes:
a second file acquiring module 2701, configured to acquire a target print file;
a second safety determining module 2702, configured to determine whether the target print file meets a third safety criterion, where in this embodiment, the second safety determining module 2702 specifically includes:
   a second attribute acquiring unit 27021, configured to acquire an attribute of a target product corresponding to the target print file;
   a second class acquiring unit 27022, configured to acquire, according to the attribute of the target product, a class of the target product corresponding to the target print file, where the attribute of the target product includes: category information of a raw material of the target product, precision information of the raw material of the target product, manufacturing technological process information of the target product, spatial shape information of the target product, or purpose information of the target product, and the class of the target product is used to indicate a classification of the target print file; and
   a second safety determining unit 27023, configured to determine, according to a correspondence between the product class and the third safety criterion, whether the target print file meets the third safety criterion;
   a second request sending module 2703, configured to: when the second safety determining unit determines that the target print file does not meet the third safety criterion, send second license request information to a 3D printing licensing apparatus;
   a second license determining module 2704, configured to determine whether a third printing license sent by the 3D printing licensing apparatus is received, where the third printing license is sent by the 3D printing licensing apparatus when the 3D printing licensing apparatus determines that the second license request information meets a second safety criterion; and
   a second file printing module 2705, specifically configured to: when the second safety determining module 2702 determines that the target print file meets the third safety criterion, or when the second license determining module determines that the third printing license sent by the 3D printing licensing apparatus is received, print the target print file.

In this embodiment, how another operation is specifically performed when the second safety determining unit determines that a target print file does not meet a third safety criterion is explained in detail. If the second safety determining unit determines that the target print file does not meet the first safety criterion, the second request sending module 2703 sends second license request information to a 3D printing licensing apparatus, and then the second license determining module 2704 determines whether a second printing license sent by the 3D printing licensing apparatus is received. If it is determined that the second printing license sent by the 3D printing licensing apparatus is received, it indicates that the 3D printing licensing apparatus determines that the second license request information meets a second safety criterion, and the second file printing module 2705 prints the target print file. According to this method provided in this embodiment, quadratic determining by the 3D printing apparatus and the 3D printing licensing apparatus on safety of the target print file is implemented. Compared with separate safety determining by the 3D printing apparatus or separate safety determining by the 3D printing licensing apparatus, the quadratic determining in this embodiment improves accuracy of determining on safety of the target print file in an entire 3D printing process, which further implements regulation on a target product, resolves a problem of difficulty to regulate production of a high-danger article, and ensures social stability and personal safety of citizens.

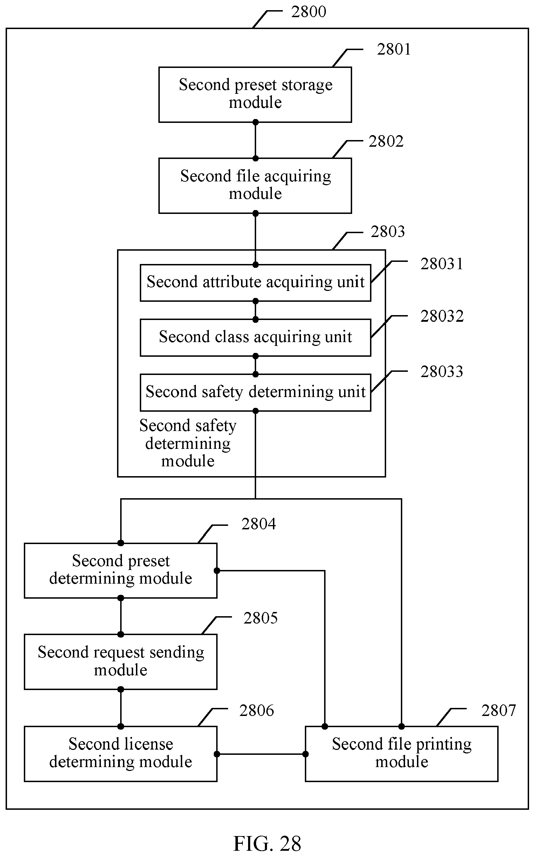

In the embodiment shown in FIG. 27, a 3D printing apparatus is provided, where a 3D printing licensing apparatus can determine safety of a received file. In the following embodiment, a new 3D printing apparatus 2800 is provided, which can reduce workload of determining on safety by the 3D printing licensing apparatus. Referring to FIG. 28, a basic structure of another embodiment of the present invention includes:
a second preset storage module 2801, configured to receive a pre-determined printing license sent by a 3D printing licensing apparatus, and store the pre-determined printing license;
a second file acquiring module 2802, configured to acquire a target print file;
a second safety determining module 2803, configured to determine whether the target print file meets a third safety criterion, where in this embodiment, the second safety determining module 2702 specifically includes:
   a second attribute acquiring unit 28031, configured to acquire an attribute of a target product corresponding to the target print file;
   a second class acquiring unit 28032, configured to acquire, according to the attribute of the target product, a class of the target product corresponding to the target print file, where the attribute of the target product includes: category information of a raw material of the target product, precision information of the raw material of the target product, manufacturing technological process information of the target product, spatial shape information of the target product, or purpose information of the target product, and the class of the target product is used to indicate a classification of the target print file; and
   a second safety determining unit 28033, configured to determine, according to a correspondence between the product class and the third safety criterion, whether the target print file meets the third safety criterion;
   a second preset determining module 2804, configured to: when the second safety determining unit 28033 determines that the target print file does not meet the third safety criterion, determine whether the second preset storage module stores a pre-determined printing license corresponding to the target print file;
   a second request sending module 2805, configured to: when the second safety determining unit 28033 determines that the target print file does not meet the third safety criterion or when the second preset determining module 2804 determines that the second preset storage module 2801 does not store the pre-determined printing license corresponding to the target print file, send second license request information to the 3D printing licensing apparatus;
   a second license determining module 2806, configured to determine whether a third printing license sent by the 3D printing licensing apparatus is received, where the third printing license is sent by the 3D printing licensing apparatus when the 3D printing licensing apparatus determines that the second license request information meets a second safety criterion; and
   a second file printing module 2807, specifically configured to: when the second safety determining module 2803 determines that the target print file meets the third safety criterion, or when the second preset determining module 2804 determines that the second preset storage module 2801 stores the pre-determined printing license corresponding to the target print file, or when the second license determining module 2806 determines that the third printing license sent by the 3D printing licensing apparatus is received, print the target print file.

In the embodiment shown in FIG. 28, a 3D printing apparatus is provided, which can determine safety of a target print file according to a pre-determined printing license. If the second safety determining unit 28033 determines that the target print file does not meet a third safety criterion, the second preset determining module 2804 determines whether a pre-determined printing license corresponding to the target print file is stored, and if yes, the second file printing module 2807 prints the target print file. According to this method, quadratic determining by the 3D printing apparatus and a 3D printing licensing apparatus on safety of the target print file is implemented, which further implements regulation on a target product, resolves a problem of difficulty to regulate production of a high-danger article, and ensures social stability and personal safety of citizens. In addition, the second preset determining module 2804 determines whether the pre-determined printing license corresponding to the target print file is stored, and if yes, the second file printing module 2807 directly prints the target print file, so that some safety determining operations can be completed by the second preset determining module 2804, which reduces a quantity of license requests received by the 3D printing licensing apparatus and a quantity of safety determining operations by the 3D printing licensing apparatus, lightens load of the 3D printing licensing apparatus, and improves efficiency of determining on safety of the target print file.

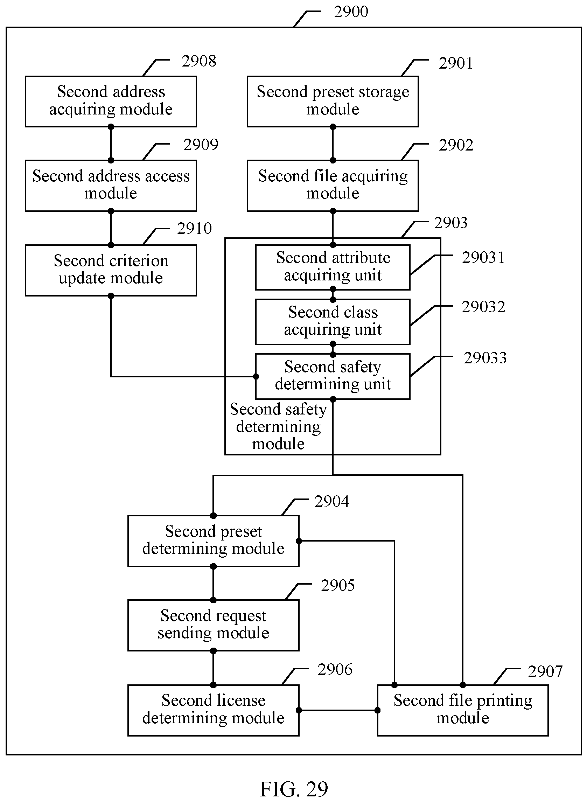

In the embodiment shown in FIG. 28, an apparatus is provided, which can improve efficiency of determining on safety of a target print file. In the following embodiment, another 3D printing apparatus 2900 is provided, so as to improve accuracy of determining on safety of a target print file. Referring to FIG. 29, a basic structure of another embodiment provided in the present invention includes:
a second preset storage module 2901, configured to receive a pre-determined printing license sent by a 3D printing licensing apparatus, and store the pre-determined printing license;
a second file acquiring module 2902, configured to acquire a target print file;
a second safety determining module 2903, configured to determine whether the target print file meets a third safety criterion, where in this embodiment, the second safety determining module 2702 specifically includes:
   a second attribute acquiring unit 29031, configured to acquire an attribute of a target product corresponding to the target print file;
   a second class acquiring unit 29032, configured to acquire, according to the attribute of the target product, a class of the target product corresponding to the target print file, where the attribute of the target product includes: category information of a raw material of the target product, precision information of the raw material of the target product, manufacturing technological process information of the target product, spatial shape information of the target product, or purpose information of the target product, and the class of the target product is used to indicate a classification of the target print file; and
   a second safety determining unit 29033, configured to determine, according to a correspondence between the product class and the third safety criterion, whether the target print file meets the third safety criterion;
   a second preset determining module 2904, configured to: when the second safety determining unit 29033 determines that the target print file does not meet the third safety criterion, determine whether the second preset storage module stores a pre-determined printing license corresponding to the target print file;
   a second request sending module 2905, configured to: when the second safety determining unit 29033 determines that the target print file does not meet the third safety criterion or when the second preset determining module 2904 determines that the second preset storage module 2901 does not store the pre-determined printing license corresponding to the target print file, send second license request information to the 3D printing licensing apparatus;
   a second license determining module 2906, configured to determine whether a third printing license sent by the 3D printing licensing apparatus is received, where the third printing license is sent by the 3D printing licensing apparatus when the 3D printing licensing apparatus determines that the second license request information meets a second safety criterion;
   a second file printing module 2907, specifically configured to: when the second safety determining module 2903 determines that the target print file meets the third safety criterion, or when the second preset determining module 2904 determines that the second preset storage module 2901 stores the pre-determined printing license corresponding to the target print file, or when the second license determining module 2906 determines that the third printing license sent by the 3D printing licensing apparatus is received, print the target print file;
   a second address acquiring module 2908, configured to acquire a target server address from the 3D printing licensing apparatus, where the target server address is an address of a target server;
   a second address access module 2909, configured to access the target server address, and download an update file from the target server; and
   a second criterion update module 2910, configured to update the correspondence between the product class and the third safety criterion according to the update file.

In this embodiment, a 3D printing apparatus is provided, where the second safety determining unit 29033 determines safety of a target print file according to a correspondence between a product class and a first safety criterion, and the second criterion update module 2910 constantly updates the correspondence between the product class and the third safety criterion. According to this method, quadratic determining by the 3D printing apparatus and a 3D printing licensing apparatus on safety of the target print file is implemented, which further implements regulation on a target product, resolves a problem of difficulty to regulate production of a high-danger article, and ensures social stability and personal safety of citizens. In addition, the second criterion update module 2910 constantly updates the correspondence between the product class and the third safety criterion, so that the correspondence, acquired by the second safety determining unit 29033, between the product class and the third safety criterion has better real-time performance, and determining on safety of the target print file according to the correspondence between the product class and the third safety criterion is more accurate and credible.

For ease of understanding of the foregoing embodiment, a description is provided below by using a specific application scenario of the foregoing embodiment as an example.

The second preset storage module 2901 receives a pre-determined printing license from a 3D printing licensing apparatus, and stores the pre-determined printing license. Content of the pre-determined printing license is: A gun whose purpose is police use meets the pre-determined printing license, but a gun whose purpose is military use does not meet the pre-determined printing license.

A user designs a print file of a small gun by using a 3D printing design apparatus. The second file acquiring module 2902 acquires the print file from a 3D printing design system, and then the second attribute acquiring unit 29031 acquires an attribute of a target product of the print file, where the attribute includes: a designed product is a gun, a gun caliber is 5.8 millimeters, and the gun is used for a military purpose. It can be learned from the attribute that the product designed in the print file is a gun, and because the gun is harmful, the second class acquiring unit 29032 determines that a class of the target product of the print file is non-safe product, and the second safety determining unit 29033 determines that the print file does not meet a third safety criterion. Accordingly, the second preset determining module 2904 determines whether a pre-determined printing license corresponding to the print file is stored. Because the pre-determined printing license stored in the second preset storage module 2901 allows only the purpose of police use, and does not allow the purpose of military use, the second preset determining unit 2904 determines that the pre-determined printing license corresponding to the print file is not stored. Therefore, the second request sending module 2905 sends second license request information to the 3D printing licensing apparatus, where content of the second license request information is the attribute of the target product of the print file.

After safety determining, the 3D printing licensing apparatus considers that the small gun can be produced, and therefore, the printing licensing center sends a second printing license to the 3D printing design system. After the second license determining module 2906 determines that the second printing license is received, the second file printing module 2907 prints the print file, where an obtained target product is a small gun.

In the 3D printing licensing apparatus, every a preset time length, the second address acquiring module 2908 acquires a target server address from the 3D printing licensing apparatus, and the second address access module 2909 accesses the target server address, and downloads an update file from a target server. The second criterion update module 2910 updates a correspondence between the product class and the third safety criterion according to the update file.

Still referring to FIG. 21, an embodiment of the present invention further provides a 3D printing apparatus.

It should be understood that, the 3D printing apparatus 2100 shown in the figure is merely an example of the 3D printing apparatus provided in any embodiment shown in FIG. 25 to FIG. 29, and the 3D printing apparatus 2100 may have more or fewer components than those shown in the figure, or two or more components may be combined, or a different component configuration may be used. The components shown in the figure may be implemented in hardware, software, or a combination of hardware and software that includes one or more signal processing and/or application-specific integrated circuits.

A description is provided now by using a 3D printing apparatus as an example. As shown in FIG. 21, the 3D printing apparatus includes: a memory 2101, a central processing unit (Central Processing Unit, CPU for short below) 2102, a peripheral interface 2103, an RF circuit 2104, an audio circuit 2105, a speaker 2106, a power management integrated chip 2107, an input/output (I/O) subsystem 2108, another input/control device 2109, and an external port 2110, where these components communicate with each other by using one or more communications buses or signal lines 2111.

It should be noted that, the non-3D printing apparatus provided in this embodiment is merely an example of the 3D printing apparatus provided in the embodiments of the present invention. The 3D printing apparatus involved in the embodiments of the present invention may include more or fewer components than those shown in FIG. 21, or two or more components may be combined, or a different component configuration or setting may be used; and the components may be implemented in hardware, software, or a combination of hardware and software that includes one or more signal processing and/or application-specific integrated circuits.

The 3D printing apparatus provided in this embodiment is described below in detail.

Memory 2101: The memory 2101 is configured to store program code and data, and may be accessed by the CPU 2102, the peripheral interface 2103, and the like, and the memory 2101 may include a high-speed random access memory, and may further include a nonvolatile memory, for example, one or more magnetic disk storage devices, flash memory devices, or other nonvolatile solid-state memory devices.

CPU 2102: The CPU 2102 may acquire the program code from the memory 2101, and control actual operations of circuits such as the RF circuit 2104 and the I/O subsystem 2108 according to an acquired program.

Peripheral interface 2103: The peripheral interface may connect input and output peripherals of the device to the CPU 2102 and the memory 2101.

I/O subsystem 2108: The I/O subsystem 2108 may connect the input and output peripherals on the device, for example, a display screen 2112 and the another input/control device 2109, to the peripheral interface 2103. The I/O subsystem 2108 may include a display controller 21081 and one or more input controllers 21082 configured to control the another input/control device 2109. The one or more input controllers 21082 receive an electrical signal from the another input/control device 2109 or send an electrical signal to the another input/control device 2109, where the another input/control device 2109 may include a physical button (a press button, a rocker button, or the like), a dial, a slide switch, a joystick, and a click scroll wheel. It should be noted that, the input controller 21082 may be connected to any one of the following components: a keyboard, an infrared port, a USB interface, and a pointing device such as a mouse.

Display screen 2112: The display screen 2112 serves as an output interface between the 3D printing apparatus and the user, and displays a visible output to the user, where the visible output may include a picture, a text, an icon, a video, and the like.

The display controller 21081 in the I/O subsystem 2108 receives an electrical signal from the display screen 2112 or sends an electrical signal to the display screen 2112. The display screen 2112 detects a touch on the touchscreen; the display controller 21081 converts the detected touch into an interaction with a user interface object displayed on the display screen 2112, that is, a man-machine interaction, where the user interface object displayed on the display screen 2112 may be a game running icon, an icon linked to a corresponding network, or the like. It should be noted that, the device may further include an optical mouse, where the optical mouse is a touch-sensitive surface that does not display a visible output, or an extension of a touch-sensitive surface formed by a touchscreen.

The RF circuit 2104 is mainly configured to establish communication between the 3D printing apparatus and a wireless network (that is, a network side), to implement data receiving and sending between the 3D printing apparatus and the wireless network, for example, sending and receiving of a short message service message and an E-mail. Specifically, the RF circuit 2104 receives and sends an RF signal, where the RF signal is also referred to as an electromagnetic signal; the RF circuit 2104 converts an electrical signal into an electromagnetic signal or converts an electromagnetic signal into an electrical signal, and communicates with a communications network and another device by using the electromagnetic signal. The RF circuit 2104 may include a known circuit configured to perform these functions, which includes, but is not limited to, an antenna system, an RF transceiver, one or more amplifiers, a tuner, one or more oscillators, a digital signal processor, a CODEC chip set, a subscriber identity module (Subscriber Identity Module, SIM), and the like.

The audio circuit 2105 is mainly configured to receive audio data from the peripheral interface 2103, convert the audio data into an electrical signal, and send the electrical signal to the speaker 2106.

The speaker 2106 is configured to restore, to sound, a speech signal that is received by the 3D printing apparatus from the wireless network by using the RF circuit 2104, and play the sound to the user.

The power management integrated chip 2107 is configured to supply power for hardware connected to the CPU 2102, the I/O subsystem, and the peripheral interface, and perform power management.

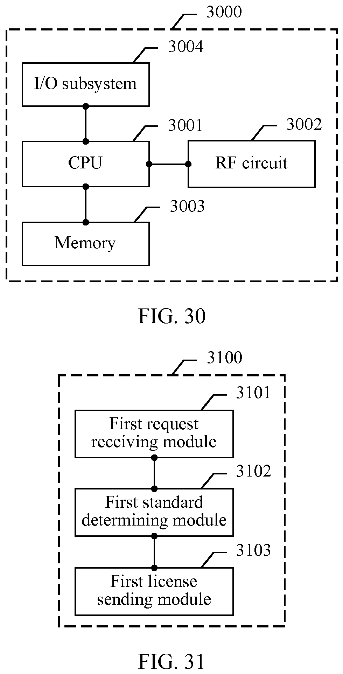

FIG. 30 is a structural diagram of an internal part of the 3D printing apparatus. In this embodiment, a CPU 3001 is specifically configured to:
acquire a target print file;
acquire an attribute of a target product corresponding to the target print file;
acquire, according to the attribute of the target product, a class of the target product corresponding to the target print file;
determine, according to a correspondence between the product class and a third safety criterion, whether the target print file meets the third safety criterion;
determine whether a pre-determined printing license corresponding to the target print file is stored;
determine whether a third printing license sent by a 3D printing licensing apparatus is received; and
update the correspondence between the product class and the third safety criterion according to an update file.

In this embodiment, an RF circuit 3002 is specifically configured to:
send second license request information to the 3D printing licensing apparatus;
acquire a target server address from the 3D printing licensing apparatus; and
access the target server address, and download the update file from a target server.

In this embodiment, a memory 3003 is specifically configured to:
receive a pre-determined printing license sent by the 3D printing licensing apparatus, and store the pre-determined printing license.

In this embodiment, an I/O subsystem 3004 is specifically configured to print the target print file.

In the embodiments shown in FIG. 25 to FIG. 30, multiple 3D printing apparatuses are provided, where regulation on a target product is implemented from the perspective of 3D printing. In the following embodiment, a 3D printing licensing apparatus is provided, where regulation on a target product is implemented from the perspective of printing licensing. Referring to FIG. 31, a basic structure of the 3D printing licensing apparatus 3100 provided in this embodiment of the present invention includes:
a first request receiving module 3101, configured to receive first license request information sent by a 3D printing design apparatus;
a first criterion determining module 3102, configured to determine whether the first license request information meets a second safety criterion; and
a first license sending module 3103, configured to: when the first criterion determining module 3102 determines that the first license request information meets the second safety criterion, send a first printing license to the 3D printing design apparatus, where the first printing license is used to allow the 3D printing design apparatus to send the target print file corresponding to the first license request information to a 3D printing apparatus.

In this embodiment, a 3D printing licensing apparatus is provided, where regulation on a target product is implemented from the perspective of printing licensing. The first request receiving module 3101 receives first license request information sent by a 3D printing design apparatus, the first criterion determining module 3102 determines whether the first license request information meets a second safety criterion, and if yes, the first license sending module 3103 sends a first printing license to the 3D printing design apparatus. According to this method, determining on safety of the target print file is implemented, which further implements regulation on a target product, resolves a problem of difficulty to regulate production of a high-danger article, and ensures social stability and personal safety of citizens.

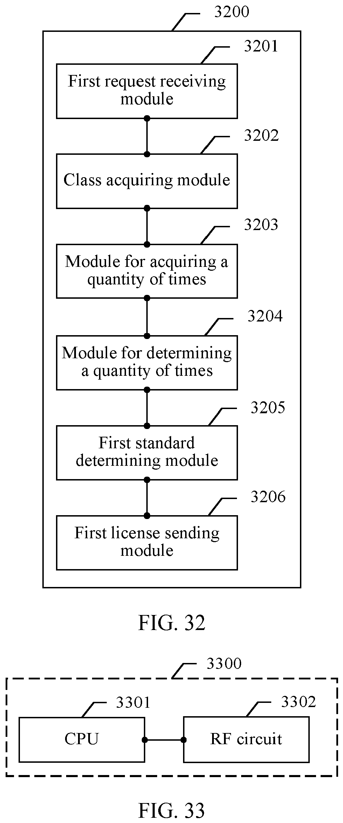

In the embodiment shown in FIG. 31, a 3D printing licensing apparatus is given, where the apparatus implements determining by a printing licensing center on safety of a print file. In the following embodiment, a new 3D printing licensing apparatus 3200 is provided, which can further enhance regulation on safety of the print file. Referring to FIG. 32, a basic structure of another embodiment of the present invention includes:
a first request receiving module 3201, configured to receive first license request information sent by a 3D printing design apparatus;
a class acquiring module 3202, configured to acquire a license request class according to the first license request information;
a module 3203 for acquiring a quantity of times, configured to acquire a quantity of times of processing on license request information corresponding to the license request class;
a module 3204 for determining a quantity of times, configured to determine whether the quantity of times of processing on the license request information corresponding to the license request class reaches a preset quantity of times;
a first criterion determining module 3205, configured to: when the module for determining a quantity of times determines that the quantity of times of processing on the license request information corresponding to the license request class does not reach the preset quantity of times, determine whether the first license request information meets a second safety criterion; and
a first license sending module 3206, configured to: when the first criterion determining module 3205 determines that the first license request information meets the second safety criterion, send a first printing license to the 3D printing design apparatus, where the first printing license is used to allow the 3D printing design apparatus to send the target print file corresponding to the first license request information to a 3D printing apparatus.

In this embodiment, a 3D printing licensing apparatus is provided, where regulation on a target product is implemented from the perspective of printing licensing. The first request receiving module 3201 receives first license request information, the first criterion determining module 3205 determines whether the first license request information meets a second safety criterion, and if yes, the first license sending module 3206 sends a first printing license to a 3D printing design system. According to this method, determining by a printing licensing center on safety of the target print file is implemented, which further implements regulation on a target product, resolves a problem of difficulty to regulate production of a high-danger article, and ensures social stability and personal safety of citizens. In addition, the module 3204 for determining a quantity of times determines whether a quantity of times of processing on license request information corresponding to the license request class reaches a preset quantity of times, and if yes, the first printing license is not sent to the 3D printing design apparatus, so that the 3D printing licensing apparatus licenses and authorizes only license request information within the preset quantity of times, which implements control of a production quantity of the target product, and further enhances regulation on safety of the print file.

For ease of understanding of the foregoing embodiment, a description is provided below by using a specific application scenario of the foregoing embodiment as an example.

In a 3D printing licensing apparatus, the first request receiving module 3201 receives first license request information sent by a 3D printing design apparatus, where the first license request information is an attribute of a target product of a print file, where the target product of the print file is a small gun, and the target attribute includes: a target product is a gun, a gun caliber is 5.8 millimeters, and the gun is used for a military purpose.

After the 3D printing licensing apparatus receives the first license request information, the class acquiring module 3202 acquires a license request class according to the first license request information, and obtains that the license request class is a gun class. The module 3203 for acquiring a quantity of times acquires that the 3D printing licensing apparatus has processed license request information of the gun class 345 times in total, and the module 3204 for determining a quantity of times determines that the 345 times does not reach a preset quantity of times 500 times, and accordingly, the first criterion determining module 3205 determines whether the first license request information meets a second safety criterion. A determining criterion of the first criterion determining module 3205 is: If the gun caliber included in the first license request information is less than 6 millimeters, it is considered that the first license request information meets the second safety criterion. Therefore, the first criterion determining module 3205 considers that the first license request information meets the second safety criterion, and the print file can be printed. Accordingly, the first license sending module 3206 sends a first printing license to the 3D printing design apparatus.

Still referring to FIG. 21, an embodiment of the present invention further provides a 3D printing licensing apparatus.

It should be understood that, the 3D printing licensing apparatus 2100 shown in the figure is merely an example of the 3D printing licensing apparatus provided in either embodiment shown in FIG. 31 and FIG. 32, and the 3D printing licensing apparatus 2100 may have more or fewer components than those shown in the figure, or two or more components may be combined, or a different component configuration may be used. The components shown in the figure may be implemented in hardware, software, or a combination of hardware and software that includes one or more signal processing and/or application-specific integrated circuits.

A specific description is provided now by using a 3D printing licensing apparatus as an example. As shown in FIG. 21, the 3D printing licensing apparatus includes: a memory 2101, a central processing unit (Central Processing Unit, CPU for short below) 2102, a peripheral interface 2103, an RF circuit 2104, an audio circuit 2105, a speaker 2106, a power management integrated chip 2107, an input/output (I/O) subsystem 2108, another input/control device 2109, and an external port 2110, where these components communicate with each other by using one or more communications buses or signal lines 2111.

It should be noted that, the non-3D printing licensing apparatus provided in this embodiment is merely an example of the 3D printing licensing apparatus provided in the embodiments of the present invention. The 3D printing licensing apparatus involved in the embodiments of the present invention may include more or fewer components than those shown in FIG. 21, or two or more components may be combined, or a different component configuration or setting may be used; and the components may be implemented in hardware, software, or a combination of hardware and software that includes one or more signal processing and/or application-specific integrated circuits.

The 3D printing licensing apparatus provided in this embodiment is described below in detail.

Memory 2101: The memory 2101 is configured to store program code and data, and may be accessed by the CPU 2102, the peripheral interface 2103, and the like, and the memory 2101 may include a high-speed random access memory, and may further include a nonvolatile memory, for example, one or more magnetic disk storage devices, flash memory devices, or other nonvolatile solid-state memory devices.

CPU 2102: The CPU 2102 may acquire the program code from the memory 2101, and control actual operations of circuits such as the RF circuit 2104 and the I/O subsystem 2108 according to an acquired program.

Peripheral interface 2103: The peripheral interface may connect input and output peripherals of the device to the CPU 2102 and the memory 2101.

I/O subsystem 2108: The I/O subsystem 2108 may connect the input and output peripherals on the device, for example, a display screen 2112 and the another input/control device 2109, to the peripheral interface 2103. The I/O subsystem 2108 may include a display controller 21081 and one or more input controllers 21082 configured to control the another input/control device 2109. The one or more input controllers 21082 receive an electrical signal from the another input/control device 2109 or send an electrical signal to the another input/control device 2109, where the another input/control device 2109 may include a physical button (a press button, a rocker button, or the like), a dial, a slide switch, a joystick, and a click scroll wheel. It should be noted that, the input controller 21082 may be connected to any one of the following components: a keyboard, an infrared port, a USB interface, and a pointing device such as a mouse.

Display screen 2112: The display screen 2112 serves as an output interface between the 3D printing licensing apparatus and the user, and displays a visible output to the user, where the visible output may include a picture, a text, an icon, a video, and the like.

The display controller 21081 in the I/O subsystem 2108 receives an electrical signal from the display screen 2112 or sends an electrical signal to the display screen 2112. The display screen 2112 detects a touch on the touchscreen; the display controller 21081 converts the detected touch into an interaction with a user interface object displayed on the display screen 2112, that is, a man-machine interaction, where the user interface object displayed on the display screen 2112 may be a game running icon, an icon linked to a corresponding network, or the like. It should be noted that, the device may further include an optical mouse, where the optical mouse is a touch-sensitive surface that does not display a visible output, or an extension of a touch-sensitive surface formed by a touchscreen.

The RF circuit 2104 is mainly configured to establish communication between the 3D printing licensing apparatus and a wireless network (that is, a network side), to implement data receiving and sending between the 3D printing licensing apparatus and the wireless network, for example, sending and receiving of a short message service message and an E-mail. Specifically, the RF circuit 2104 receives and sends an RF signal, where the RF signal is also referred to as an electromagnetic signal; the RF circuit 2104 converts an electrical signal into an electromagnetic signal or converts an electromagnetic signal into an electrical signal, and communicates with a communications network and another device by using the electromagnetic signal. The RF circuit 2104 may include a known circuit configured to perform these functions, which includes, but is not limited to, an antenna system, an RF transceiver, one or more amplifiers, a tuner, one or more oscillators, a digital signal processor, a CODEC chip set, a subscriber identity module (Subscriber Identity Module, SIM), and the like.

The audio circuit 2105 is mainly configured to receive audio data from the peripheral interface 2103, convert the audio data into an electrical signal, and send the electrical signal to the speaker 2106.

The speaker 2106 is configured to restore, to sound, a speech signal that is received by the 3D printing licensing apparatus from the wireless network by using the RF circuit 2104, and play the sound to the user.

The power management integrated chip 2107 is configured to supply power for hardware connected to the CPU 2102, the I/O subsystem, and the peripheral interface, and perform power management.

FIG. 33 is a structural diagram of an internal part of the 3D printing apparatus. In this embodiment, a CPU 3301 is specifically configured to:
acquire a license request class according to first license request information;
acquire a quantity of times of processing on license request information corresponding to the license request class;
determine whether the quantity of times of processing on the license request information corresponding to the license request class reaches a preset quantity of times; and
determine whether the first license request information meets a second safety criterion.

In this embodiment, an RF circuit 3302 is specifically configured to:
receive the first license request information sent by a 3D printing design apparatus; and
send a first printing license to the 3D printing design apparatus.

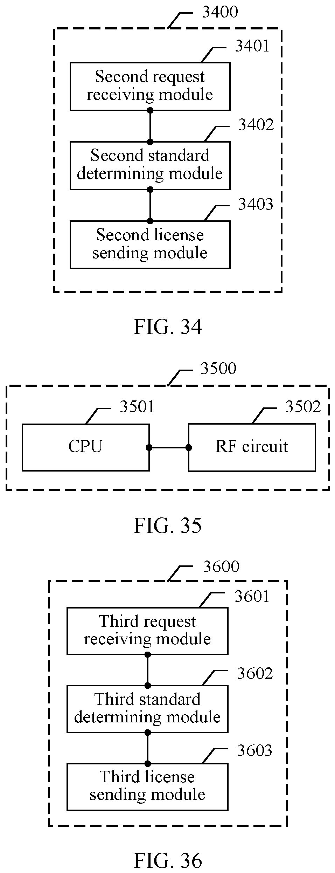

In the embodiments shown in FIG. 31 to FIG. 33, different 3D printing licensing apparatuses are provided, where the apparatuses send a first printing license to a 3D printing design apparatus. In the following embodiment, another 3D printing licensing apparatus 3400 is provided, where the apparatus sends a second printing license to a 3D printing system. Referring to FIG. 34, a basic structure of another embodiment of the present invention includes:
a second request receiving module 3401, configured to receive first license request information sent by a 3D printing design apparatus;
a second criterion determining module 3402, configured to determine whether the first license request information meets a second safety criterion; and
a second license sending module 3403, configured to: when the second criterion determining module 3402 determines that the first license request information meets the second safety criterion, send a second printing license to a 3D printing apparatus, where the second printing license is used to allow the 3D printing apparatus to print the target print file corresponding to the first license request information.

In this embodiment, a 3D printing licensing apparatus is provided, where regulation on a target product is implemented from the perspective of printing licensing. The second request receiving module 3401 receives first license request information sent by a 3D printing design apparatus, the second criterion determining module 3402 determines whether the first license request information meets a second safety criterion, and if yes, the second license sending module 3403 sends a second printing license to a 3D printing apparatus. According to this method, determining on safety of the target print file is implemented, which further implements regulation on a target product, resolves a problem of difficulty to regulate production of a high-danger article, and ensures social stability and personal safety of citizens.

For ease of understanding of the foregoing embodiment, a description is provided below by using a specific application scenario of the foregoing embodiment as an example.

The second request receiving module 3401 receives first license request information sent by a 3D printing design apparatus, where the first license request information is an attribute of a target product of a print file, where the target product of the print file is a small gun, and the target attribute includes: a target product is a gun, a gun caliber is 5.8 millimeters, and the gun is used for a military purpose.

After the second request receiving module 3401 receives the first license request information, the second criterion determining module 3402 determines whether the first license request information meets a second safety criterion. A determining criterion of the second criterion determining module 3402 is: If the gun caliber included in the first license request information is less than 6 millimeters, it is considered that the first license request information meets the second safety criterion. Therefore, the second criterion determining module 3402 considers that the first license request information meets the second safety criterion, and the print file can be printed. Accordingly, the second license sending module 3403 sends a second printing license to a 3D printing apparatus.

Still referring to FIG. 21, an embodiment of the present invention further provides a 3D printing licensing apparatus.

It should be understood that, the 3D printing licensing apparatus 2100 shown in the figure is merely an example of the 3D printing licensing apparatus provided in either embodiment shown in FIG. 31 and FIG. 32, and the 3D printing licensing apparatus 2100 may have more or fewer components than those shown in the figure, or two or more components may be combined, or a different component configuration may be used. The components shown in the figure may be implemented in hardware, software, or a combination of hardware and software that includes one or more signal processing and/or application-specific integrated circuits.

A specific description is provided now by using a 3D printing licensing apparatus as an example. As shown in FIG. 21, the 3D printing licensing apparatus includes: a memory 2101, a central processing unit (Central Processing Unit, CPU for short below) 2102, a peripheral interface 2103, an RF circuit 2104, an audio circuit 2105, a speaker 2106, a power management integrated chip 2107, an input/output (I/O) subsystem 2108, another input/control device 2109, and an external port 2110, where these components communicate with each other by using one or more communications buses or signal lines 2111.

It should be noted that, the non-3D printing licensing apparatus provided in this embodiment is merely an example of the 3D printing licensing apparatus provided in the embodiments of the present invention. The 3D printing licensing apparatus involved in the embodiments of the present invention may include more or fewer components than those shown in FIG. 21, or two or more components may be combined, or a different component configuration or setting may be used; and the components may be implemented in hardware, software, or a combination of hardware and software that includes one or more signal processing and/or application-specific integrated circuits.

The 3D printing licensing apparatus provided in this embodiment is described below in detail.

Memory 2101: The memory 2101 is configured to store program code and data, and may be accessed by the CPU 2102, the peripheral interface 2103, and the like, and the memory 2101 may include a high-speed random access memory, and may further include a nonvolatile memory, for example, one or more magnetic disk storage devices, flash memory devices, or other nonvolatile solid-state memory devices.

CPU 2102: The CPU 2102 may acquire the program code from the memory 2101, and control actual operations of circuits such as the RF circuit 2104 and the I/O subsystem 2108 according to an acquired program.

Peripheral interface 2103: The peripheral interface may connect input and output peripherals of the device to the CPU 2102 and the memory 2101.

I/O subsystem 2108: The I/O subsystem 2108 may connect the input and output peripherals on the device, for example, a display screen 2112 and the another input/control device 2109, to the peripheral interface 2103. The I/O subsystem 2108 may include a display controller 21081 and one or more input controllers 21082 configured to control the another input/control device 2109. The one or more input controllers 21082 receive an electrical signal from the another input/control device 2109 or send an electrical signal to the another input/control device 2109, where the another input/control device 2109 may include a physical button (a press button, a rocker button, or the like), a dial, a slide switch, a joystick, and a click scroll wheel. It should be noted that, the input controller 21082 may be connected to any one of the following components: a keyboard, an infrared port, a USB interface, and a pointing device such as a mouse.

Display screen 2112: The display screen 2112 serves as an output interface between the 3D printing licensing apparatus and the user, and displays a visible output to the user, where the visible output may include a picture, a text, an icon, a video, and the like.

The display controller 21081 in the I/O subsystem 2108 receives an electrical signal from the display screen 2112 or sends an electrical signal to the display screen 2112. The display screen 2112 detects a touch on the touchscreen; the display controller 21081 converts the detected touch into an interaction with a user interface object displayed on the display screen 2112, that is, a man-machine interaction, where the user interface object displayed on the display screen 2112 may be a game running icon, an icon linked to a corresponding network, or the like. It should be noted that, the device may further include an optical mouse, where the optical mouse is a touch-sensitive surface that does not display a visible output, or an extension of a touch-sensitive surface formed by a touchscreen.

The RF circuit 2104 is mainly configured to establish communication between the 3D printing licensing apparatus and a wireless network (that is, a network side), to implement data receiving and sending between the 3D printing licensing apparatus and the wireless network, for example, sending and receiving of a short message service message and an E-mail. Specifically, the RF circuit 2104 receives and sends an RF signal, where the RF signal is also referred to as an electromagnetic signal; the RF circuit 2104 converts an electrical signal into an electromagnetic signal or converts an electromagnetic signal into an electrical signal, and communicates with a communications network and another device by using the electromagnetic signal. The RF circuit 2104 may include a known circuit configured to perform these functions, which includes, but is not limited to, an antenna system, an RF transceiver, one or more amplifiers, a tuner, one or more oscillators, a digital signal processor, a CODEC chip set, a subscriber identity module (Subscriber Identity Module, SIM), and the like.

The audio circuit 2105 is mainly configured to receive audio data from the peripheral interface 2103, convert the audio data into an electrical signal, and send the electrical signal to the speaker 2106.

The speaker 2106 is configured to restore, to sound, a speech signal that is received by the 3D printing licensing apparatus from the wireless network by using the RF circuit 2104, and play the sound to the user.

The power management integrated chip 2107 is configured to supply power for hardware connected to the CPU 2102, the I/O subsystem, and the peripheral interface, and perform power management.

FIG. 35 is a structural diagram of an internal part of the 3D printing apparatus. In this embodiment, a CPU 3501 is specifically configured to:
determine whether first license request information meets a second safety criterion.

In this embodiment, an RF circuit 3502 is specifically configured to:
receive the first license request information sent by a 3D printing design apparatus; and
send a second printing license to a 3D printing apparatus.

In both of the embodiments shown in FIG. 34 and FIG. 35, the 3D printing licensing apparatus receives first license request information from a 3D printing design apparatus. Actually, the 3D printing licensing apparatus may also receive second license request information from a 3D printing apparatus. Referring to FIG. 36, a basic structure of another embodiment 3600 of the present invention includes:
a third request receiving module 3601, configured to receive second license request information sent by a 3D printing apparatus;
a third criterion determining module 3602, configured to determine whether the second license request information meets a second safety criterion; and
a third license sending module 3603, configured to: when the third criterion determining module determines that the second license request information meets the second safety criterion, send a third printing license to the 3D printing apparatus, where the second printing license is used to allow the 3D printing apparatus to print the target print file corresponding to the second license request information.

In this embodiment, a 3D printing licensing apparatus is provided, where regulation on a target product is implemented from the perspective of printing licensing. The third request receiving module 3601 receives second license request information sent by a 3D printing design apparatus, the third criterion determining module 3602 determines whether the second license request information meets a second safety criterion, and if yes, the third license sending module 3603 sends a third printing license to a 3D printing apparatus. According to this method, determining on safety of the target print file is implemented, which further implements regulation on a target product, resolves a problem of difficulty to regulate production of a high-danger article, and ensures social stability and personal safety of citizens.

For ease of understanding of the foregoing embodiment, a description is provided below by using a specific application scenario of the foregoing embodiment as an example.

The third request receiving module 3601 receives second license request information sent by a 3D printing system, where the second license request information is an attribute of a target product of a print file, where the target product of the print file is a small gun, and the target attribute includes: a target product is a gun, a gun caliber is 5.8 millimeters, and the gun is used for a military purpose.

After the third request receiving module 3601 receives the second license request information, the third criterion determining module 3602 determines whether the second license request information meets a second safety criterion. A determining criterion of the third criterion determining module 3602 is: If the gun caliber included in the second license request information is less than 6 millimeters, it is considered that the second license request information meets the second safety criterion. Therefore, the third criterion determining module 3602 considers that the second license request information meets the second safety criterion, and the print file can be printed. Accordingly, the third license sending module 3603 sends a third printing license to a 3D printing apparatus.

Still referring to FIG. 21, an embodiment of the present invention further provides a 3D printing licensing apparatus.

It should be understood that, the 3D printing licensing apparatus 2100 shown in the figure is merely an example of the 3D printing licensing apparatus provided in either embodiment shown in FIG. 31 and FIG. 32, and the 3D printing licensing apparatus 2100 may have more or fewer components than those shown in the figure, or two or more components may be combined, or a different component configuration may be used. The components shown in the figure may be implemented in hardware, software, or a combination of hardware and software that includes one or more signal processing and/or application-specific integrated circuits.

A specific description is provided now by using a 3D printing licensing apparatus as an example. As shown in FIG. 21, the 3D printing licensing apparatus includes: a memory 2101, a central processing unit (Central Processing Unit, CPU for short below) 2102, a peripheral interface 2103, an RF circuit 2104, an audio circuit 2105, a speaker 2106, a power management integrated chip 2107, an input/output (I/O) subsystem 2108, another input/control device 2109, and an external port 2110, where these components communicate with each other by using one or more communications buses or signal lines 2111.

It should be noted that, the non-3D printing licensing apparatus provided in this embodiment is merely an example of the 3D printing licensing apparatus provided in the embodiments of the present invention. The 3D printing licensing apparatus involved in the embodiments of the present invention may include more or fewer components than those shown in FIG. 21, or two or more components may be combined, or a different component configuration or setting may be used; and the components may be implemented in hardware, software, or a combination of hardware and software that includes one or more signal processing and/or application-specific integrated circuits.

The 3D printing licensing apparatus provided in this embodiment is described below in detail.

Memory 2101: The memory 2101 is configured to store program code and data, and may be accessed by the CPU 2102, the peripheral interface 2103, and the like, and the memory 2101 may include a high-speed random access memory, and may further include a nonvolatile memory, for example, one or more magnetic disk storage devices, flash memory devices, or other nonvolatile solid-state memory devices.

CPU 2102: The CPU 2102 may acquire the program code from the memory 2101, and control actual operations of circuits such as the RF circuit 2104 and the I/O subsystem 2108 according to an acquired program.

Peripheral interface 2103: The peripheral interface may connect input and output peripherals of the device to the CPU 2102 and the memory 2101.

I/O subsystem 2108: The I/O subsystem 2108 may connect the input and output peripherals on the device, for example, a display screen 2112 and the another input/control device 2109, to the peripheral interface 2103. The I/O subsystem 2108 may include a display controller 21081 and one or more input controllers 21082 configured to control the another input/control device 2109. The one or more input controllers 21082 receive an electrical signal from the another input/control device 2109 or send an electrical signal to the another input/control device 2109, where the another input/control device 2109 may include a physical button (a press button, a rocker button, or the like), a dial, a slide switch, a joystick, and a click scroll wheel. It should be noted that, the input controller 21082 may be connected to any one of the following components: a keyboard, an infrared port, a USB interface, and a pointing device such as a mouse.

Display screen 2112: The display screen 2112 serves as an output interface between the 3D printing licensing apparatus and the user, and displays a visible output to the user, where the visible output may include a picture, a text, an icon, a video, and the like.

The display controller 21081 in the I/O subsystem 2108 receives an electrical signal from the display screen 2112 or sends an electrical signal to the display screen 2112. The display screen 2112 detects a touch on the touchscreen; the display controller 21081 converts the detected touch into an interaction with a user interface object displayed on the display screen 2112, that is, a man-machine interaction, where the user interface object displayed on the display screen 2112 may be a game running icon, an icon linked to a corresponding network, or the like. It should be noted that, the device may further include an optical mouse, where the optical mouse is a touch-sensitive surface that does not display a visible output, or an extension of a touch-sensitive surface formed by a touchscreen.

The RF circuit 2104 is mainly configured to establish communication between the 3D printing licensing apparatus and a wireless network (that is, a network side), to implement data receiving and sending between the 3D printing licensing apparatus and the wireless network, for example, sending and receiving of a short message service message and an E-mail. Specifically, the RF circuit 2104 receives and sends an RF signal, where the RF signal is also referred to as an electromagnetic signal; the RF circuit 2104 converts an electrical signal into an electromagnetic signal or converts an electromagnetic signal into an electrical signal, and communicates with a communications network and another device by using the electromagnetic signal. The RF circuit 2104 may include a known circuit configured to perform these functions, which includes, but is not limited to, an antenna system, an RF transceiver, one or more amplifiers, a tuner, one or more oscillators, a digital signal processor, a CODEC chip set, a subscriber identity module (Subscriber Identity Module, SIM), and the like.

The audio circuit 2105 is mainly configured to receive audio data from the peripheral interface 2103, convert the audio data into an electrical signal, and send the electrical signal to the speaker 2106.

The speaker 2106 is configured to restore, to sound, a speech signal that is received by the 3D printing licensing apparatus from the wireless network by using the RF circuit 2104, and play the sound to the user.

The power management integrated chip 2107 is configured to supply power for hardware connected to the CPU 2102, the I/O subsystem, and the peripheral interface, and perform power management.

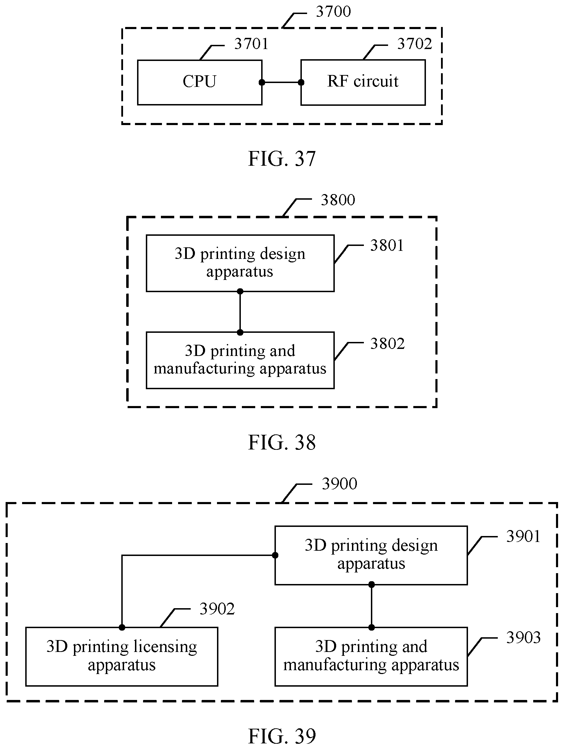

FIG. 37 is a structural diagram of an internal part of the 3D printing apparatus. In this embodiment, a CPU 3701 is specifically configured to:
determine whether second license request information meets a second safety criterion.

In this embodiment, an RF circuit 3702 is specifically configured to:
receive the second license request information sent by a 3D printing apparatus; and
send a third printing license to the 3D printing apparatus.

Referring to FIG. 38, an embodiment of the present invention further provides a 3D printing system. Amain structure of the system 3800 includes: a 3D printing design apparatus 3801 provided in either embodiment shown in FIG. 16 and FIG. 17 and a 3D printing apparatus 3802.

Referring to FIG. 39, an embodiment of the present invention further provides a 3D printing system. A main structure of the system 3900 includes: a 3D printing design apparatus 3901 provided in any embodiment shown in FIG. 18 to FIG. 22, a 3D printing licensing apparatus 3902 provided in any embodiment shown in FIG. 31 to FIG. 33, and a 3D printing apparatus 3903.

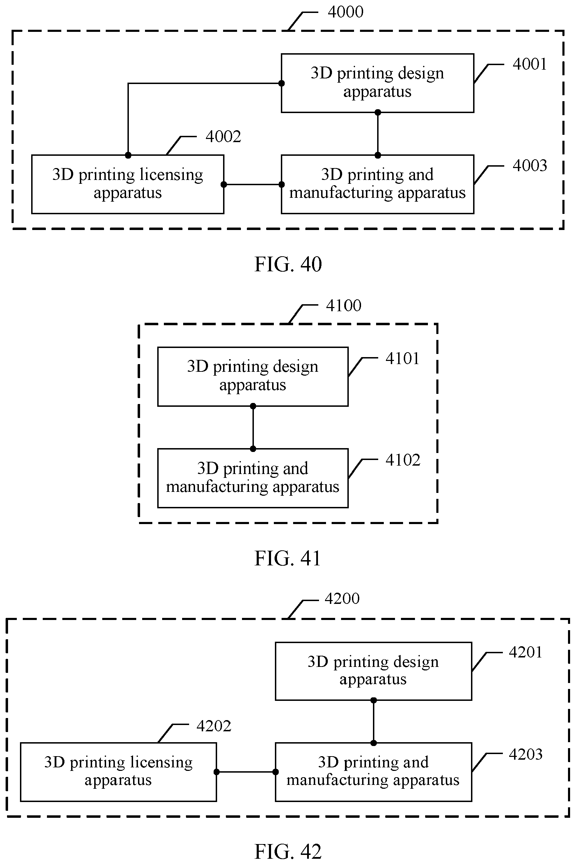

Referring to FIG. 40, an embodiment of the present invention further provides a 3D printing system. A main structure of the system 4000 includes: a 3D printing design apparatus 4001 provided in any embodiment shown in FIG. 18 to FIG. 22, a 3D printing licensing apparatus 4002 provided in either embodiment shown in FIG. 34 and FIG. 35, and a 3D printing apparatus 4003 provided in either embodiment shown in FIG. 23 and FIG. 24.

Referring to FIG. 41, an embodiment of the present invention further provides a 3D printing system. A main structure of the system 4100 includes: a 3D printing design apparatus 4101 and a 3D printing apparatus 4102 provided in either embodiment shown in FIG. 25 and FIG. 26.

Referring to FIG. 42, an embodiment of the present invention further provides a 3D printing system. Amain structure of the system 4200 includes: a 3D printing design apparatus 4201, a 3D printing licensing apparatus 4202 provided in either embodiment shown in FIG. 36 and FIG. 37, and a 3D printing apparatus 4203 provided in any embodiment shown in FIG. 27 to FIG. 30.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. A 3D printing design method, comprising:
determining, by a 3D printing design system, a target print file;
determining, by the 3D printing design system, whether the target print file meets a first safety criterion; and
if the target print file meets the first safety criterion, sending, by the 3D printing design system, the target print file to a 3D printing system, so that the 3D printing system performs printing according to the target print file.

2. The 3D printing design method according to claim 1, wherein the determining, by the 3D printing design system, whether the target print file meets a first safety criterion comprises:
acquiring, by the 3D printing design system, an attribute of a target product corresponding to the target print file;
acquiring, by the 3D printing design system according to the attribute of the target product, a class of the target product corresponding to the target print file, wherein the attribute of the target product comprises: category information of a raw material of the target product, precision information of the raw material of the target product, manufacturing technological process information of the target product, spatial shape information of the target product, or purpose information of the target product, and the class of the target product is used to indicate a classification of the target print file, the class of the target product is used to indicate the classification of the target print file; and
determining, by the 3D printing design system according to a correspondence between the product class and the first safety criterion, whether the target print file meets the first safety criterion.

3. The 3D printing design method according to claim 2, wherein the product class comprises: safe product and non-safe product; and
the determining, by the 3D printing design system according to a correspondence between the product class and the first safety criterion, whether the target print file meets the first safety criterion comprises: if the class of the target product is safe product, determining, by the 3D printing design system, that the target print file meets the first safety criterion, or if the class of the target product is non-safe product, determining, by the 3D printing design system, that the target print file does not meet the first safety criterion.

4. The 3D printing design method according to claim 2 or 3, wherein the method further comprises:
if the 3D printing design system determines that the target print file does not meet the first safety criterion, sending, by the 3D printing design system, first license request information to a printing licensing center;
determining, by the 3D printing design system, whether a first printing license sent by the licensing center is received, wherein the first printing license is sent by the licensing center when the licensing center determines that the first license request information meets a second safety criterion, and the second safety criterion is a criterion for the licensing center to determine whether a print file corresponding to the received request information is safe; and
if the printing design system receives the first printing license sent by the licensing center, sending, by the 3D printing design system, the target print file to the 3D printing system, so that the 3D printing system performs printing according to the target print file.

5. The 3D printing design method according to claim 2 or 3, wherein the method further comprises:
receiving, by the 3D printing design system, a pre-determined printing license sent by the licensing center; and
if the 3D printing design system determines that the target print file does not meet the first safety criterion, determining, by the 3D printing design system, whether a pre-determined printing license corresponding to the target print file is stored, and if yes, sending, by the 3D printing design system, the target print file to the 3D printing system, or if not, sending, by the 3D printing design system, first license request information to the printing licensing center.

6. The 3D printing design method according to claim 2 or 3, wherein the method further comprises:
acquiring, by the 3D printing design system, a target server address from the printing licensing center, wherein the target server address is an address of a target server;
accessing, by the 3D printing design system, the target server address, and downloading an update file from the target server; and
updating, by the 3D printing design system, the correspondence between the product class and the first safety criterion according to the update file.

7. A 3D printing method, comprising:
acquiring, by a 3D printing system, a target print file;
determining, by the 3D printing system, whether a second printing license sent by a printing licensing center is received; and
if the second printing license sent by the printing licensing center is received, printing, by the 3D printing system, the target print file.

8. A 3D printing method, comprising:
acquiring, by a 3D printing system, a target print file;
determining, by the 3D printing system, whether the target print file meets a third safety criterion; and
if the target print file meets the third safety criterion, printing, by the 3D printing system, the target print file.

9. The 3D printing method according to claim 8, wherein the determining, by the 3D printing design system, whether the target print file meets a third safety criterion comprises:
acquiring, by the 3D printing system, an attribute of a target product corresponding to the target print file;
acquiring, by the 3D printing system according to the attribute of the target product, a class of the target product corresponding to the target print file, wherein the attribute of the target product comprises: category information of a raw material of the target product, precision information of the raw material of the target product, manufacturing technological process information of the target product, spatial shape information of the target product, or purpose information of the target product, and the class of the target product is used to indicate a classification of the target print file; and
determining, by the 3D printing system according to a correspondence between the product class and the third safety criterion, whether the target print file meets the third safety criterion.

10. The 3D printing method according to claim 9, wherein the product class comprises: safe product and non-safe product; and
the determining, by the 3D printing system according to a correspondence between the product class and the third safety criterion, whether the target print file meets the third safety criterion comprises: if the class of the target product is safe product, determining, by the 3D printing system, that the target print file meets the third safety criterion, or if the class of the target product is non-safe product, determining, by the 3D printing system, that the target print file does not meet the third safety criterion.

11. The 3D printing method according to claim 9 or 10, wherein the method further comprises:
if the 3D printing system determines that the target print file does not meet the third safety criterion, sending, by the 3D printing system, second license request information to a printing licensing center;
determining, by the 3D printing system, whether a third printing license sent by the licensing center is received, wherein the third printing license is sent by the licensing center when the licensing center determines that the second license request information meets a second safety criterion; and
if the 3D printing system receives the third printing license sent by the licensing center, printing, by the 3D printing system, the target print file.

12. The 3D printing method according to claim 11, wherein the method further comprises:
receiving, by the 3D printing system, a pre-determined printing license sent by the licensing center; and
before the sending, by the 3D printing system, second license request information to a printing licensing center, the method further comprises: if the 3D printing system determines that the target print file does not meet the third safety criterion, determining, by the 3D printing system, whether a pre-determined printing license corresponding to the target print file is stored, and if yes, printing, by the 3D printing system, the target print file, or if not, triggering the operation of sending, by the 3D printing system, second license request information to a printing licensing center.

13. The 3D printing method according to claim 9, wherein the method further comprises:
acquiring, by the 3D printing system, a target server address from the printing licensing center, wherein the target server address is an address of a target server;
accessing, by the 3D printing system, the target server address, and downloading an update file from the target server; and
updating, by the 3D printing system, the correspondence between the product class and the third safety criterion according to the update file.

14. A 3D printing licensing method, comprising:
receiving, by a printing licensing center, first license request information sent by a 3D printing design system;
determining, by the printing licensing center, whether the first license request information meets a second safety criterion, wherein the second safety criterion is a criterion for the licensing center to determine whether a print file corresponding to the received request information is safe; and
if the first license request information meets the second safety criterion, sending, by the printing licensing center, a first printing license to the 3D printing design system, wherein the first printing license is used to allow the 3D printing design system to send a target print file corresponding to the first license request information to a 3D printing system.

15. The 3D printing licensing method according to claim 14, wherein the determining, by the printing licensing center, whether the first license request information meets a second safety criterion comprises:
determining, by the printing licensing center according to an attribute of a target product corresponding to the first license request information, a class of the target product, or a safety level of the 3D printing design system that sends the first license request information, whether the first license request information meets the second safety criterion, wherein the safety level is used to indicate safety of the 3D printing design system.

16. The 3D printing licensing method according to claim 14 or 15, wherein before the determining, by the printing licensing center, whether the first license request information meets a second safety criterion, the method further comprises:
acquiring, by the printing licensing center, a license request class according to the first license request information;
acquiring, by the printing licensing center, a quantity of times of processing by the printing licensing center on license request information corresponding to the license request class;
determining, by the printing licensing center, whether the quantity of times of processing on the license request information corresponding to the license request class reaches a preset quantity of times; and
if the printing licensing center determines that the quantity of times of processing on the license request information corresponding to the license request class reaches the preset quantity of times, skipping, by the printing licensing center, sending the first printing license to the 3D printing design system; or
if the printing licensing center determines that the quantity of times of processing on the license request information corresponding to the license request class does not reach the preset quantity of times, triggering, by the printing licensing center, the operation of determining, by the printing licensing center, whether the first license request information meets a second safety criterion.

17. A 3D printing licensing method, comprising:
receiving, by a printing licensing center, first license request information sent by a 3D printing design system;
determining, by the printing licensing center, whether the first license request information meets a second safety criterion, wherein the second safety criterion is a criterion for the licensing center to determine whether a print file corresponding to the received request information is safe; and
if the first license request information meets the second safety criterion, sending, by the printing licensing center, a second printing license to the 3D printing system, wherein the second printing license is used to allow the 3D printing system to print a target print file corresponding to the first license request information.

18. The 3D printing licensing method according to claim 17, wherein the determining, by the printing licensing center, whether the first license request information meets a second safety criterion comprises:
determining, by the printing licensing center according to an attribute of a target product corresponding to the first license request information, a class of the target product, or a safety level of the 3D printing design system that sends the first license request information, whether the first license request information meets the second safety criterion, wherein the safety level is used to indicate safety of the 3D printing design system.

19. A 3D printing licensing method, comprising:
receiving, by a printing licensing center, second license request information sent by a 3D printing system;
determining, by the printing licensing center, whether the second license request information meets a second safety criterion, wherein the second safety criterion is a criterion for the licensing center to determine whether a print file corresponding to the received request information is safe; and
if the second license request information meets the second safety criterion, sending, by the printing licensing center, a third printing license to the 3D printing system, wherein the second printing license is used to allow the 3D printing system to print a target print file corresponding to the second license request information.

20. The 3D printing licensing method according to claim 19, wherein the determining, by the printing licensing center, whether the second license request information meets a second safety criterion comprises:
determining, by the printing licensing center according to an attribute of a target product corresponding to the second license request information, a class of the target product, or a safety level of the 3D printing system that sends the second license request information, whether the first license request information meets the second safety criterion, wherein the safety level is used to indicate safety of the 3D printing system.

21. A 3D printing design apparatus, comprising:
a file determining module, configured to determine a target print file;
a first safety determining module, configured to determine whether the target print file meets a first safety criterion; and
a file sending module, configured to: when the first safety determining module determines that the target print file meets the first safety criterion, send the target print file to a 3D printing apparatus, so that the 3D printing apparatus performs printing according to the target print file.

22. The 3D printing design apparatus according to claim 21, wherein the first safety determining module comprises:
a first attribute acquiring unit, configured to acquire an attribute of a target product corresponding to the target print file;
a first class acquiring unit, configured to acquire, according to the attribute of the target product, a class of the target product corresponding to the target print file, wherein the attribute of the target product comprises: category information of a raw material of the target product, precision information of the raw material of the target product, manufacturing technological process information of the target product, spatial shape information of the target product, or purpose information of the target product, and the class of the target product is used to indicate a classification of the target print file; and
a first safety determining unit, configured to determine, according to a correspondence between the product class and the first safety criterion, whether the target print file meets the first safety criterion.

23. The 3D printing design apparatus according to claim 22, wherein the apparatus further comprises:
a first request sending module, configured to: when the first safety determining unit determines that the target print file does not meet the first safety criterion, send first license request information to a 3D printing licensing apparatus; and
a first license determining module, configured to determine whether a first printing license sent by the 3D printing licensing apparatus is received, wherein the first printing license is sent by the 3D printing licensing apparatus when the 3D printing licensing apparatus determines that the first license request information meets a second safety criterion, and the second safety criterion is a criterion for the 3D printing licensing apparatus to determine whether a print file corresponding to the received request information is safe; and
the file sending module is further configured to: when the first license determining module determines that the first printing license sent by the 3D printing licensing apparatus is received, send the target print file to the 3D printing apparatus, so that the 3D printing apparatus performs printing according to the target print file.

24. The 3D printing design apparatus according to claim 23, wherein the apparatus further comprises:
a first preset storage module, configured to receive a pre-determined printing license sent by the 3D printing licensing apparatus; and
a first preset determining module, configured to: when the first safety determining unit determines that the target print file does not meet the first safety criterion, determine whether the first preset storage module stores a pre-determined printing license corresponding to the target print file;
the file sending module is further configured to: when the first preset determining module determines that the first preset storage module stores the pre-determined printing license corresponding to the target print file, send the target print file to the 3D printing apparatus; and
the first request sending module is further configured to: when the first preset determining module determines that the first preset storage module does not store the pre-determined printing license corresponding to the target print file, send the first license request information to the 3D printing licensing apparatus.

25. The 3D printing design apparatus according to claim 23 or 24, wherein the apparatus further comprises:
a first address acquiring module, configured to acquire a target server address from the 3D printing licensing apparatus, wherein the target server address is an address of a target server;
a first address access module, configured to access the target server address, and download an update file from the target server; and
a first criterion update module, configured to update the correspondence between the product class and the first safety criterion according to the update file.

26. A 3D printing apparatus, comprising:
a first file acquiring module, configured to acquire a target print file;
a second license determining module, configured to determine whether a second printing license sent by a 3D printing licensing apparatus is received; and
a first file printing module, configured to: when the second license determining module determines that the second printing license sent by the 3D printing licensing apparatus is received, print the target print file.

27. A 3D printing apparatus, comprising:
a second file acquiring module, configured to acquire a target print file;
a second safety determining module, configured to determine whether the target print file meets a third safety criterion; and
a second file printing module, configured to: when the second safety determining module determines that the target print file meets the third safety criterion, print the target print file.

28. The 3D printing apparatus according to claim 27, wherein the second safety determining module comprises:
a second attribute acquiring unit, configured to acquire an attribute of a target product corresponding to the target print file;
a second class acquiring unit, configured to acquire, according to the attribute of the target product, a class of the target product corresponding to the target print file, wherein the attribute of the target product comprises: category information of a raw material of the target product, precision information of the raw material of the target product, manufacturing technological process information of the target product, spatial shape information of the target product, or purpose information of the target product, and the class of the target product is used to indicate a classification of the target print file; and
a second safety determining unit, configured to determine, according to a correspondence between the product class and the third safety criterion, whether the target print file meets the third safety criterion.

29. The 3D printing apparatus according to claim 28, wherein the apparatus further comprises:
a second request sending module, configured to: when the second safety determining unit determines that the target print file does not meet the third safety criterion, send second license request information to a 3D printing licensing apparatus; and
a second license determining module, configured to determine whether a third printing license sent by the 3D printing licensing apparatus is received, wherein the third printing license is sent by the 3D printing licensing apparatus when the 3D printing licensing apparatus determines that the second license request information meets a second safety criterion, and the second safety criterion is a criterion for the 3D printing licensing apparatus to determine whether a print file corresponding to the received request information is safe; and
the second file printing module is further configured to: when the second license determining module determines that the third printing license sent by the 3D printing licensing apparatus is received, print the target print file.

30. The 3D printing apparatus according to claim 29, wherein the apparatus further comprises:
a second preset storage module, configured to receive a pre-determined printing license sent by the 3D printing licensing apparatus; and
a second preset determining module, configured to: when the second safety determining unit determines that the target print file does not meet the third safety criterion, determine whether the second preset storage module stores a pre-determined printing license corresponding to the target print file;
the second file printing module is further configured to: when the second preset determining module determines that the second preset storage module stores the pre-determined printing license corresponding to the target print file, print the target print file; and
the second request sending module is further configured to: when the second preset determining module determines that the second preset storage module does not store the pre-determined printing license corresponding to the target print file, send the second license request information to the 3D printing licensing apparatus.

31. The 3D printing apparatus according to claim 28, wherein the apparatus further comprises:
a second address acquiring module, configured to acquire a target server address from the 3D printing licensing apparatus, wherein the target server address is an address of a target server;
a second address access module, configured to access the target server address, and download an update file from the target server; and
a second criterion update module, configured to update the correspondence between the product class and the third safety criterion according to the update file.

32. A 3D printing licensing apparatus, comprising:
a first request receiving module, configured to receive first license request information sent by a 3D printing design apparatus;
a first criterion determining module, configured to determine whether the first license request information meets a second safety criterion, wherein the second safety criterion is a criterion for the 3D printing licensing apparatus to determine whether a print file corresponding to the received request information is safe; and
a first license sending module, configured to: when the first criterion determining module determines that the first license request information meets the second safety criterion, send a first printing license to the 3D printing design apparatus, wherein the first printing license is used to allow the 3D printing design apparatus to send a target print file corresponding to the first license request information to a 3D printing apparatus.

33. The 3D printing licensing apparatus according to claim 32, wherein the first criterion determining module is specifically configured to determine, according to an attribute of a target product corresponding to the first license request information, a class of the target product, or a safety level of the 3D printing design apparatus that sends the first license request information, whether the first license request information meets the second safety criterion, wherein the safety level is used to indicate safety of the 3D printing design apparatus.

34. The 3D printing licensing apparatus according to claim 32 or 33, wherein the apparatus further comprises:
a class acquiring module, configured to acquire a license request class according to the first license request information;
a module for acquiring a quantity of times, configured to acquire a quantity of times of processing by the 3D printing licensing apparatus on license request information corresponding to the license request class; and
a module for determining a quantity of times, configured to determine whether the quantity of times of processing on the license request information corresponding to the license request class reaches a preset quantity of times; and
the first criterion determining module is specifically configured to: when the module for determining a quantity of times determines that the quantity of times of processing on the license request information corresponding to the license request class does not reach the preset quantity of times, determine whether the first license request information meets the second safety criterion.

35. A 3D printing licensing apparatus, comprising:
a second request receiving module, configured to receive first license request information sent by a 3D printing design apparatus;
a second criterion determining module, configured to determine whether the first license request information meets a second safety criterion, wherein the second safety criterion is a criterion for the 3D printing licensing apparatus to determine whether a print file corresponding to the received request information is safe; and
a second license sending module, configured to: when the second criterion determining module determines that the first license request information meets the second safety criterion, send a second printing license to the 3D printing apparatus, wherein the second printing license is used to allow the 3D printing apparatus to print a target print file corresponding to the first license request information.

36. The 3D printing licensing apparatus according to claim 35, wherein the second criterion determining module is specifically configured to determine, according to an attribute of a target product corresponding to the first license request information, a class of the target product, or a safety level of the 3D printing design apparatus that sends the first license request information, whether the first license request information meets the second safety criterion, wherein the safety level is used to indicate safety of the 3D printing design apparatus.

37. A 3D printing licensing apparatus, comprising:
a third request receiving module, configured to receive second license request information sent by a 3D printing apparatus;
a third criterion determining module, configured to determine whether the second license request information meets a second safety criterion, wherein the second safety criterion is a criterion for the 3D printing licensing apparatus to determine whether a print file corresponding to the received request information is safe; and
a third license sending module, configured to: when the third criterion determining module determines that the second license request information meets the second safety criterion, send a third printing license to the 3D printing apparatus, wherein the second printing license is used to allow the 3D printing apparatus to print a target print file corresponding to the second license request information.

38. The 3D printing licensing apparatus according to claim 37, wherein the third criterion determining module is specifically configured to determine, according to an attribute of a target product corresponding to the second license request information, a class of the target product, or a safety level of the 3D printing apparatus that sends the second license request information, whether the second license request information meets the second safety criterion, wherein the safety level is used to indicate safety of the 3D printing apparatus.

39. A 3D printing system, comprising:
a 3D printing apparatus and the 3D printing design apparatus according to either of claims 21 and 22.

40. A 3D printing system, comprising:
a 3D printing apparatus, the 3D printing design apparatus according to any one of claims 23 to 25, and the 3D printing licensing apparatus according to any one of claims 32 to 34.

41. A 3D printing system, comprising:
the 3D printing design apparatus according to any one of claims 23 to 25, the 3D printing licensing apparatus according to claim 35 or 36, and the 3D printing apparatus according to claim 26.

42. A 3D printing system, comprising:
a 3D printing design apparatus and the 3D printing apparatus according to either of claims 27 and 28.

43. A 3D printing system, comprising:
a 3D printing design apparatus, the 3D printing licensing apparatus according to claim 37 or 38, and the 3D printing apparatus according to any one of claims 29 to 31.
